# EUROPÄISCHE PATENTSCHRIFT

(11) **EP 3 600 995 B1**
(45) Veröffentlichungstag und Bekanntmachung des Hinweises auf die Patenterteilung: **23.12.2020**
(21) Anmeldenummer: 18714731.9
(22) Anmeldetag: 19.03.2018
(51) Int. Cl.: B60T 13/68, B60T 13/66, B60T 17/22

(54) **ELEKTRONISCH STEUERBARES BREMSSYSTEM SOWIE VERFAHREN ZUM STEUERN DES ELEKTRONISCH STEUERBAREN BREMSSYSTEMS**
ELECTRONICALLY CONTROLLABLE BRAKING SYSTEM AND METHOD FOR CONTROLLING THE ELECTRONICALLY CONTROLLABLE BRAKING SYSTEM
SYSTÈME DE FREINAGE COMMANDABLE ÉLECTRONIQUEMENT ET PROCÉDÉ POUR COMMANDER LE SYSTÈME DE FREINAGE COMMANDABLE ÉLECTRONIQUEMENT

(30) Priorität: 21.03.2017 DE 102017002718
(43) Veröffentlichungstag der Anmeldung: 05.02.2020
(73) Patentinhaber: WABCO GmbH, 30453 Hannover Niedersachsen (DE)
(72) Erfinder: VAN THIEL, Julian, 30938 Gross Burgwedel (DE)
(74) Vertreter: Schiller, Harald
(86) Internationale Anmeldenummer: PCT/EP2018/056786
(87) Internationale Veröffentlichungsnummer: WO 2018/172233

(56) Entgegenhaltungen:
- EP-A1- 1 571 061
- EP-A1- 2 942 249
- EP-A2- 0 394 065
- WO-A1-2017/001546
- WO-A2-2004/098967
- WO-A2-2009/152982
- DE-A1-102014 006 613
- DE-A1-102015 011 296
- DE-B3-102008 009 043

## Beschreibung

Die Erfindung betrifft ein elektronisch steuerbares Bremssystem sowie ein Verfahren zum Steuern des elektronisch steuerbaren Bremssystems.

Ein Bremssystem in einem Fahrzeug, vorzugsweise Nutzfahrzeug, kann mit zwei oder mehreren Betriebsbremskreisen, in denen ein an Betriebsbremsen ausgesteuerter Betriebsbrems-Bremsdruck eingestellt wird, sowie mit einem Parkbremskreis, in dem ein an Federspeicherbremsen ausgesteuerter Parkbrems-Bremsdruck eingestellt wird, vorgesehen sein. Die Aussteuerung des Betriebsbrems-Bremsdruckes an die Betriebsbremsen erfolgt beispielsweise über einen Druckmodulator, der gemäß einer Betriebsbrems-Bremsvorgabe in Form eines pneumatischen Betriebsbrems-Steuerdruckes oder eines elektrischen Betriebsbrems-Steuersignals einen Betriebsbrems-Bremsdruck an die jeweiligen Betriebsbremsen ausgibt.

Im normalen Betrieb erfolgt die Vorgabe an den Druckmodulator elektrisch über das Betriebsbrems-Steuersignal, wobei das Betriebsbrems-Steuersignal von einem Betriebsbrems-Steuermodul in Abhängigkeit einer manuell vorgegebenen Betriebsbrems-Bremsvorgabe und/oder in Abhängigkeit einer von einem Assistenzsystem automatisiert angeforderten Assistenz-Bremsvorgabe ermittelt und ausgegeben wird. Im Redundanzfall, z. B. bei einem elektrischen Ausfall des Betriebsbrems-Steuermoduls, erfolgt die Vorgabe an den Druckmodulator über den Betriebsbrems-Steuerdruck, der dem Druckmodulator über einen pneumatischen Redundanzanschluss vorgegeben wird und der beispielsweise von einer als elektropneumatisches Betriebsbremsventil ausgeführten Betriebsbrems-Betätigungsvorrichtung mit einem Bremspedal in Abhängigkeit der Betriebsbrems-Bremsvorgabe ausgegeben wird.

Der Parkbremskreis dient vorrangig dazu, das Fahrzeug in einer Parksituation abzustellen oder eine Hilfsbremsung oder Notbremsung während der Fahrt durchzuführen, indem gesteuert von einem Parkbrems-Steuermodul ein Parkbrems-Bremsdruck ausgesteuert wird, in Abhängigkeit dessen die Federspeicherbremsen zugespannt werden, wobei zum Zuspannen der Parkbrems-Bremsdruck reduziert wird. Beispielhaft ist ein derartiges Parkbrems-Steuermodul bzw. Feststellbremsmodul in DE 10 2015 008 377 A1 beschrieben. Herkömmlicherweise arbeiten der Parkbremskreis und die Betriebsbremskreise getrennt voneinander.

In bestimmten Anwendungen ist es möglich, den oben geschilderten Redundanzmechanismus der Betriebsbremse durch die alternative Ansteuerung des Feststellbremskreises zu ersetzen! Dazu muss die elektrische Spannungsversorgung der Parkbremse üblicherweise unabhängig von der Spannungsversorgung der Betriebsbremse erfolgen.

Bei einem Ausfall der elektrischen Ansteuerung der Betriebsbremskreise über das Betriebsbrems-Steuermodul kann wie beschrieben eine pneumatische durch den Fahrer gesteuerte erste Rückfallebene ausgebildet werden. Steht der Fahrer allerdings nicht als Rückfallebene zur Verfügung, da er z.B. unaufmerksam oder im Falle von höher automatisierten Fahrmanövern nicht am Platz ist, kann eine zweite Rückfallebene ausgebildet werden, die automatisiert und elektronisch gesteuert eingreifen kann, wobei dazu der vorhandene Parkbremskreis verwendet wird. Die automatisierte Bremsanforderung wird nach Erkennen des elektrischen Ausfalls in einem der Betriebsbremskreise dem Parkbrems-Steuermodul zugeführt, das durch eine Vorgabe des Parkbrems-Bremsdruckes entsprechend die Federspeicherbremsen betätigen kann, um den elektrischen Ausfall der Betriebsbremsen zu kompensieren. Alternativ kann die automatisierte Bremsanforderung dem Parkbrems-Steuermodul permanent zugeführt werden und bei Erkennen eines Ausfalls in mindestens einem der Betriebsbremskreise durch das Parkbrems-Steuermodul, dieses durch eine Vorgabe des Parkbrems-Bremsdruckes entsprechend die Federspeicherbremsen betätigen. In dem Fall ist jedoch unter Umständen lediglich eine Fahrzeugachse, an der die Federspeicherbremsen im Parkbremskreis angeordnet sind, abgebremst. Dies kann zu einer eingeschränkten Verzögerungsleistung und ggf. zusätzlichen Instabilitäten während der Fahrt führen.

Um dies zu vermeiden, ist in EP 2 090 481 B1 ein elektronisch steuerbares Bremssystem beschrieben, in dem ein Hinterachs-Betriebsbremskreis von einem Hinterachs-Betriebsbrems-Steuermodul gesteuert wird und ein Vorderachs-Betriebsbremskreis von einem Vorderachs-Betriebsbrems-Steuermodul. Im Vorderachs-Betriebsbrems-Steuermodul ist das Parkbrems-Steuermodul für den Parkbremskreis integriert, wobei der Parkbremskreis Federspeicherbremsen an der Hinterachse steuert. Das Hinterachs-Betriebsbrems-Steuermodul sowie die Komponenten des Hinterachs-Betriebsbremskreises werden von einer ersten Energiequelle und das Vorderachs-Betriebsbrems-Steuermodul sowie das Parkbrems-Steuermodul mit den entsprechend zugeordneten Komponenten werden von einer zweiten Energiequelle mit Energie versorgt.

Bei einem Ausfall der ersten Energiequelle, d.h. dem Hinterachs-Betriebsbremskreis mit den Betriebsbremsen an der Hinterachse, kann die Vorderachse weiter über den Vorderachs-Betriebsbremskreis und die Hinterachse über den Parkbremskreis gebremst werden, so dass weiterhin beide Fahrzeugachsen abgebremst werden können. Der Parkbremskreis kompensiert somit den Ausfall des Hinterachs-Betriebsbremskreises, indem an der Hinterachse statt mit den Betriebsbremsen mit den Federspeicherbremsen gebremst wird. Bei einem Ausfall der zweiten Energiequelle, d.h. sowohl des Parkbremskreises an der Hinterachse als auch des Vorderachs-Betriebsbremskreises, wird von dem Hinterachs-Betriebsbrems-Steuermodul ein Betriebsbrems-Steuersignal ausgegeben, das - wie im normalen Betrieb - an den Hinterachs-Druckmodulator aber zusätzlich auch an ein Anhängersteuerventil des Fahrzeuges übertragen wird. Von dem Anhängersteuerventil wird ein entsprechender Steuerdruck erzeugt, der - falls vorhanden - auf den Anhänger übertragen wird, um dort eine Bremsung zu bewirken, und gleichzeitig auch über eine Redundanz-Druckleitung zum pneumatischen Redundanzanschluss am Vorderachs-Druckmodulator. Die Hinterachse und die Vorderachse werden somit - wie im normalen Betrieb - über die Betriebsbremsen abgebremst, wobei die Vorderachse ebenfalls durch das Hinterachs-Betriebsbrems-Steuermodul gesteuert wird.

Das Parkbrems-Steuermodul kann weiterhin einen Parkbrems-Steuerdruck an das Anhängersteuerventil ausgeben, das diesen invertiert und an die Betriebsbremsen des Anhängers weiterleitet, um auch im Anhänger eine Parkbremsfunktion umsetzen zu können.

Somit ist im Stand der Technik vorgeschlagen, jeden Betriebsbremskreis über separate Steuermodule anzusteuern und einen Ausfall einer Energiequelle und somit zumindest eines Betriebsbremskreises dadurch zu kompensieren, dass der oder die jeweils noch funktionierenden Bremskreise eine Bremsung an der ausgefallenen Fahrzeugachse übernehmen, so dass auch im Redundanzfall noch beide Fahrzeugachsen für eine Bremsung herangezogen werden können.

Nachteilig hierbei ist, dass in elektronisch gesteuerten Bremssystemen, die über lediglich ein zentrales Betriebsbrems-Steuermodul die Betriebsbremsen an der Hinterachse und der Vorderachse und ggf. weiteren Fahrzeugachsen über den Druckmodulator ansteuern, keine derartige Kompensation stattfinden kann, da bei einem Ausfall der Energiequelle oder einzelner elektrischer Komponenten des jeweiligen Betriebsbremskreises das zentrale Betriebsbrems-Steuermodul nicht mehr die elektrische Ansteuerung der Betriebsbremsen bzw. der vorgeschalteten Druckmodulatoren an einzelnen Fahrzeugachsen übernehmen kann. Somit kann - falls in dem entsprechenden Bremssystem vorhanden - lediglich auf die pneumatische, vom Fahrer gesteuerte erste Rückfallebene ausgewichen werden. Eine rein elektronische Bremsvorgabe wie sie in EP 2 090 481 B1 beschrieben ist bzw. eine mögliche automatisiert vorgegeben Assistenz-Bremsvorgabe kann jedoch nicht mehr umgesetzt werden.

Ist im Bremssystem zudem kein pneumatisch redundantes Eingreifen durch den Fahrer über das elektropneumatische Betriebsbremsventil möglich, da wie in EP 2 090 481 B1 statt dem elektropneumatischen Betriebsbremsventil eine rein elektrisch betriebene Betriebsbrems-Betätigungsvorrichtung vorgesehen ist, kann auch nicht auf die erste Rückfallebene zurückgegriffen werden, um ggf. auch eine automatisiert angeforderte Assistenz-Bremsvorgabe manuell zu übersteuern. In einem solchen Fall kann der Fahrer also bei einem elektrischen Ausfall, bei dem über die rein elektrisch betriebene Betriebsbrems-Betätigungsvorrichtung keine Betriebsbrems-Bremsvorgabe mehr aufgenommen werden kann, nicht über die Betriebsbrems-Betätigungsvorrichtung in die Bremsung eingegriffen werden.

EP 2 942 249 A1 offenbart ein druckmittelbetriebenes Bremssystem mit einer Betriebsbremseinrichtung und einer ein Feststellbremsmodul und eine mit dem Feststellbremsmodul gekoppelte elektrische Betätigungseinrichtung aufweisende Feststellbremseinrichtung. Ein Bremswertgeber ist mittels einer Datenleitung, über die ein Bremsanforderungssignal übertragbar ist, mit dem Feststellbremsmodul verbunden.

DE 10 2014 006 613 A1 offenbart ein Steuergerät für ein druckluftbetriebenes Bremssystem, welches ein Achssteuermodul mit einer Steuerfunktion zur Aussteuerung eines pneumatischen Drucks zur Bereitstellung einer Betriebsbremsfunktion und eine Fahrdynamiksensoreinheit umfasst.

DE 10 2015 011 296 A1 offenbart ein elektronisch gesteuertes pneumatisches Bremssystem, bei dem ein Steuerventil elektronisch abhängig von einem Steuersignal und pneumatisch abhängig von einem Steuerdruck gesteuert werden kann. Zusätzlich zu einem ersten Bremsventil ist ein zweites Bremsventil vorgesehen, das elektronisch gesteuert einen pneumatischen zweiten Bremsventil-Steuerdruck ausgeben kann.

Es ist daher Aufgabe der Erfindung, ein elektronisch steuerbares Bremssystem sowie ein Verfahren zum Steuern dieses elektronisch steuerbaren Bremssystems anzugeben, das in einfacher und zuverlässiger Weise eine redundante Ansteuerung der Betriebsbremsen durch den Fahrer ermöglicht.

Diese Aufgabe wird durch ein elektronisch steuerbares Bremssystem nach Anspruch 1 sowie ein Verfahren nach Anspruch 24 gelöst. Die Unteransprüche geben bevorzugte Weiterbildungen an.

Erfindungsgemäss ist demnach vorgesehen, in einem elektronisch steuerbaren Bremssystem ein Umschaltventil anzuordnen, wobei das Umschaltventil in zwei Umschaltventil-Schaltstellungen gebracht werden kann, und einen Betriebsbrems-Bremsdruck zur Ansteuerung von Betriebsbremsen in mindestens einem Betriebsbremskreis des Bremssystems in Abhängigkeit der Umschaltventil-Schaltstellung derartig vorzugeben, dass bei Vorliegen einer von einem Fahrer über ein elektropneumatisches Betriebsbremsventil manuell angeforderten Betriebsbrems-Bremsvorgabe das Umschaltventil in eine erste Umschaltventil-Schaltstellung gebracht werden kann, um den Betriebsbrems-Bremsdruck situationsabhängig in Abhängigkeit der über das elektropneumatische Betriebsbremsventil vorgegebenen Betriebsbrems-Bremsvorgabe festzulegen, und das Umschaltventil sonst in eine zweite Umschaltventil-Schaltstellung gebracht werden kann, in der der Betriebsbrems-Bremsdruck in Abhängigkeit eines Inverter-Steuerdruckes festgelegt wird, wobei der Inverter-Steuerdruck insbesondere für eine redundante Ansteuerung der Betriebsbremsen vorgegeben wird.

Dadurch wird bereits der Vorteil erreicht, dass dem vom Fahrer über das Betriebsbremsventil manuell vorgegebenen Betriebsbrems-Bremswunsch durch eine entsprechende Auswahl der Umschaltventil-Schaltstellung situationsbedingt eine höhere Priorität eingeräumt werden kann als einer anderweitig angeforderten Bremsvorgabe in Abhängigkeit des Inverter-Steuerdruckes. Die Betriebsbrems-Bremsvorgabe wird dazu vorzugsweise pneumatisch vom Betriebsbremsventil ausgesteuert und der Betriebsbrems-Bremsdruck in Abhängigkeit dieser pneumatischen Betriebsbrems-Bremsvorgabe erzeugt, so dass die Betriebsbrems-Bremsvorgabe auch noch bei einem elektrischen Ausfall vom Fahrer über das Betriebsbremsventil vorgegeben werden kann.

Das Umschalten kann situationsbedingt beispielsweise dann erfolgen, wenn eine redundante Betriebsbrems-Bremsvorgabe vom Fahrer erfasst wurde und über diese Betriebsbrems-Bremsvorgabe eine stärkere Bremsung angefordert wird als über eine anderweitige, nicht vom Fahrer angeforderte redundante Bremsvorgabe, die zum jeweiligen Zeitpunkt gerade umgesetzt wird. Andernfalls kann auch vorgesehen sein, dass bei Erfassen eines Betriebsbrems-Bremswunsches durch den Fahrer eine gerade umgesetzte anderweitige Bremsvorgabe, die insbesondere eine stärkere Bremswirkung als die manuell angeforderte Betriebsbrems-Bremsvorgabe verursacht, kontrolliert beendet wird und anschließend das Umschaltventil in die erste Umschaltventil-Schaltstellung gebracht wird, in der die Betriebsbrems-Bremsvorgabe durch den Fahrer umgesetzt werden kann. Durch dieses Vorgehen können Instabilitäten oder riskante Situationen bei der Umschaltung vermieden werden.

Das Umschalten des Umschaltventils in die erste Umschaltventil-Schaltstellung bei Vorliegen eines Fahrerwunsches kann hierbei je nach Art des Umschaltventils pneumatisch oder elektrisch gesteuert erfolgen, d. h. das Umschaltventil wird dadurch, dass am Umschaltventil ein gewisser Betriebsbrems-Bremsdruck wirkt automatisch in die erste Umschaltventil-Schaltstellung umgeschaltet oder der Betriebsbrems-Bremsdruck wird gemessen, vorzugsweise mit einem Drucksensor, und in Abhängigkeit der Messung wird das Umschaltventil elektrisch gesteuert in die erste Umschaltventil-Schaltstellung gebracht.

Der Inverter-Steuerdruck, in Abhängigkeit dessen bei Nichtvorliegen einer pneumatisch manuell angeforderten Betriebsbrems-Bremsvorgabe der Betriebsbrems-Bremsdruck über das Umschaltventil vorgegeben werden kann, dient vorzugsweise dazu, bei einem elektrischen Ausfall in dem mindestens einen Betriebsbremskreis dennoch eine Bremsung in diesem bewirken zu können. Ein elektrischer Ausfall liegt hierbei im Rahmen der Erfindung insbesondere dann vor, wenn eine Vorgabe des Betriebsbrems-Bremsdruckes in Abhängigkeit eines elektrisch vorgebbaren Betriebsbrems-Steuersignals nicht möglich ist, wobei das Betriebsbrems-Steuersignal von einem insbesondere die Betriebsbremskreise steuernden Betriebsbrems-Steuermodul aufgrund beispielsweise der Betriebsbrems-Bremsvorgabe elektrisch erzeugt und ausgegeben werden kann. D.h. die gewünschte Bremsvorgabe kann bei einem elektrischen Ausfall im Betriebsbremskreis nicht elektrisch gesteuert vom Betriebsbrems-Steuermodul umgesetzt werden. Ein elektrischer Ausfall schließt dabei insbesondere auch den Fall ein, dass bereits ein Erzeugen des Betriebsbrems-Steuersignals fehlschlägt, z.B. weil das Betriebsbrems-Steuermodul einen elektrischen Defekt aufweist, und deshalb eine Vorgabe des Betriebsbrems-Bremsdruckes in Abhängigkeit des - in dem Fall nicht vorhandenen - Betriebsbrems-Steuersignals nicht möglich ist. Weiterhin kann ein elektrischer Ausfall vorliegen, wenn zwar ein Betriebsbrems-Steuersignal vom Betriebsbrems-Steuermodul erzeugt und ausgegeben werden kann, dieses aber beispielsweise aufgrund eines elektrischen Defekts in einer anderen elektrischen Komponente des betreffenden Betriebsbremskreises nicht in einen Betriebsbrems-Bremsdruck umgesetzt werden kann.

Der Inverter-Steuerdruck wird hierbei von einem Inverter-Steuerventil erzeugt und über einen Inverter-Ausgang und/oder bei entsprechender Umschaltventil-Schaltstellung über einen Redundanz-Ausgang des Inverter-Steuerventils ausgegeben, wobei ein Inverter-Steuerdruck erzeugt wird, der umgekehrt proportional zu einem im Parkbremskreis des Bremssystems umsetzbaren Parkbrems-Bremsdruck und/oder Parkbrems-Steuerdruck ist, die jeweils auszusteuern sind, um eine bestimmte Bremsvorgabe über im Parkbremskreis angeordnete Federspeicherbremsen umzusetzen. Die über die Federspeicherbremsen im Parkbremskreis umsetzbare Bremsvorgabe kann somit über das Inverter-Steuerventil auch an den oder die Betriebsbremskreise übertragen bzw. umgeleitet werden, um einen elektrischen Ausfall im Betriebsbremskreis durch eine in dem Fall redundant bewirkte Bremsung zu kompensieren, falls nicht der Fahrer bereits manuell eingreift und dieses manuelle Eingreifen über das Umschaltventil an den jeweiligen Betriebsbremskreis vorgegeben wird.

Die Bremsvorgabe an den Parkbremskreis kann hierbei beispielsweise eine von einem Assistenz-Steuermodul automatisiert vorgegebene Assistenz-Bremsvorgabe und/oder eine über eine Parkbrems-Betätigungsvorrichtung oder über ein Parkbremsventil manuell vorgegebene Parkbrems-Bremsvorgabe und/oder unter Umständen auch die über das Betriebsbremsventil manuell vorgegebene Betriebsbrems-Bremsvorgabe sein, die auf diesem Wege über das Inverter-Steuerventil auch redundant an die Betriebsbremsen im jeweiligen Betriebsbremskreis zur Umsetzung vorgegeben werden können. Das Assistenz-Steuermodul ist hierbei dazu vorgesehen, das Fahrzeug automatisiert anhand von Umfeld-Informationen zu steuern, wobei das Fahrzeug anhand der Assistenz-Bremsvorgabe automatisiert abgebremst werden kann und die Assistenz-Bremsvorgabe dazu sowohl über den mindestens einen Betriebsbremskreis als auch über den Parkbremskreis umsetzbar ist.

Bei einem elektrischen Ausfall des mindestens einen Betriebsbremskreises oder auch des Parkbremskreises kann im Rahmen einer redundanten Bremsung vorgesehen sein, die jeweiligen Bremsvorgaben an die jeweils noch funktionierenden Bremskreise bzw. deren Steuermodule auszusteuern, um den elektrischen Ausfall zu kompensieren. Dies kann durch eine entsprechende Vernetzung der jeweiligen Komponenten, z. B. über ein beliebiges fahrzeuginternes Bus-Netzwerk oder CAN-Bus oder über eine Direktverbindung der einzelnen Komponenten, gewährleistet werden. Demnach können grundsätzlich alle genannten Bremsvorgaben als redundante Bremsvorgaben in jedem der Bremskreise dienen.

Um in den jeweiligen Bremskreisen eine Aussteuerung der jeweiligen Drücke bewirken zu können, ist vorgesehen, dass der mindestens eine Betriebsbremskreis von einer ersten Energiequelle und der Parkbremskreis und - falls nötig - das Inverter-Steuerventil von einer zweiten Energiequelle mit Energie versorgt werden, wobei die erste Energiequelle unabhängig von der zweiten Energiequelle ist. Dadurch soll gewährleistet werden, dass bei einem Ausfall der ersten Energiequelle für die Betriebsbremskreise in dem Parkbremskreis weiterhin Drücke ausgesteuert werden können und diese vom Inverter-Steuerventil weiterhin invertiert werden können, um den Inverter-Steuerdruck an den oder die ausgefallenen Betriebsbremskreise vorgeben zu können.

Der Parkbremskreis im Bremssystem kann gemäß einer ersten Alternative ein Parkbrems-Steuermodul aufweisen, das den Parkbrems-Bremsdruck in Abhängigkeit der jeweiligen Bremsvorgabe erzeugt, wobei die Bremsvorgabe in dieser Alternative elektrisch an das Parkbrems-Steuermodul übertragen wird. Das Parkbrems-Steuermodul ist mit den Federspeicherbremsen des Parkbremskreises verbunden, um den Parkbrems-Bremsdruck pneumatisch an die Federspeicherbremsen zu übertragen. D.h. es liegt eine elektrisch gesteuerte Parkbremse vor.

Um die dem Parkbremskreis vorgegebenen Bremsvorgaben insbesondere bei einem elektrischen Ausfall eines der Betriebsbremskreise über das Inverter-Steuerventil an den mindestens einen Betriebsbremskreis auszusteuern, ist das Parkbrems-Steuermodul auch mit dem Inverter-Steuerventil verbunden, um den Parkbrems-Bremsdruck oder einen davon abhängigen Druck, beispielsweise eine intern erzeugten Steuerdruck, pneumatisch an das Inverter-Steuerventil zu übertragen und darin für eine Invertierung zu sorgen. Die im Inverter-Steuerventil bewirkte Invertierung erfolgt vorzugsweise über ein inverses Relaisventil, das im Inverter-Steuerventil angeordnet ist.

Unter einer Invertierung wird hierbei im Rahmen der Erfindung verstanden, dass das Inverter-Steuerventil bzw. das inverse Relaisventil dafür sorgen, dass ein zum Parkbrems-Bremsdruck und/oder einem Parkbrems-Steuerdruck umgekehrt proportionaler Inverter-Steuerdruck erzeugt und ausgegeben wird. Dadurch kann vorteilhafterweise erreicht werden, dass ein im Parkbremskreis zur Ansteuerung der Federspeicherbremsen erzeugbarer Parkbrems-Bremsdruck und/oder Parkbrems-Steuerdruck, die jeweils die dem Parkbremskreis vorgegebene Bremsvorgabe charakterisieren, nach der Invertierung dazu verwendet werden können, die Betriebsbremsen anzusteuern und darüber die Bremsvorgabe im mindestens einen Betriebsbremskreis umzusetzen. D.h. über die Betriebsbremsen im Betriebsbremskreis wird in Abhängigkeit des invertierten Parkbrems-Bremsdruckes und/oder des invertierten Parkbrems-Steuerdruckes in etwa dieselbe Bremswirkung erzielt wie über die Federspeicherbremsen im Parkbremskreis in Abhängigkeit des Parkbrems-Bremsdruckes und/oder des Parkbrems-Steuerdruckes. Somit kann bei einem elektrischen Ausfall in den Betriebsbremskreisen auf eine aufwändige Druckregelung zum Erzeugen des Betriebsbrems-Bremsdruckes verzichtet werden.

Das Inverter-Steuerventil kann hierbei ergänzend für eine Skalierung sorgen, d.h. die Bremswirkung an den Betriebsbremsen kann gegenüber der Bremswirkung an den Federspeicherbremsen um einen Faktor skaliert, d.h. erhöht oder reduziert werden, beispielsweise zum Verbessern der Fahrstabilität des Fahrzeuges beim Bremsen. Weiterhin kann vorgesehen sein, den Inverter-Steuerdruck lediglich einem Betriebsbremskreis, insbesondere einem Vorderachs-Betriebsbremskreis, oder auch an weitere Betriebsbremskreise im Fahrzeug vorzugeben, falls ein elektrischer Ausfall vorliegt und der Ausfall durch eine Bremsung an weiteren Fahrzeugachsen mit Betriebsbremsen kompensiert werden soll. Die im Folgenden beschriebenen Ausführungsvarianten sind dementsprechend an lediglich einer oder ggf. auch an weiteren Fahrzeugachsen bzw. in weiteren Betriebsbremskreisen in identischer Weise vorzusehen.

Das Inverter-Steuerventil kann gemäß einer vorteilhaften Ausbildung als Anhängersteuerventil ausgebildet sein, dem der im Parkbremskreis aufgrund der Bremsvorgabe erzeugte Parkbrems-Bremsdruck und/oder Parkbrems-Steuerdruck zugeführt werden kann und das diesen Parkbrems-Bremsdruck und/oder Parkbrems-Steuerdruck über ein integriertes inverses Relaisventil invertiert. Durch den Rückgriff auf ein Anhängersteuerventil, das in vielen Nutzfahrzeugen bereits vorhanden ist und über das ein zum Parkbrems-Bremsdruck und/oder Parkbrems-Steuerdruck inverser Anhänger-Steuerdruck erzeugt und an ein Bremssystem in einem möglicherweise angehängten Anhänger ausgesteuert werden kann, um darin Betriebsbremsen anzusteuern, können Kosten gespart werden, da die Invertierungsfunktion des Anhängersteuerventils zum Erzeugen des Anhänger-Steuerdruckes gleichzeitig auch zum Erzeugen des Inverter-Steuerdruckes und somit zur Vorgabe des Betriebsbrems-Bremsdruckes in dem ausgefallenen Betriebsbremskreis verwendet werden kann. Dadurch kann der Platzaufwand sowie der Steuerungs- und Regelungsaufwand im Bremssystem minimiert werden, da keine zusätzlichen Komponenten im Fahrzeug zu verbauen und anzusteuern sind. Es ist lediglich dafür zu sorgen, dass der Inverter-Steuerdruck bei einem elektrischen Ausfall in den entsprechenden Betriebsbremskreis eingesteuert werden kann.

Gemäß einer alternativen Ausführungsform ist eine pneumatische Parkbremse vorgesehen, wobei dazu im Parkbremskreis ein Parkbremsventil angeordnet ist, das vom Fahrer manuell betätigt werden kann, um die Parkbrems-Bremsvorgabe anzufordern. Das Parkbremsventil gibt in Abhängigkeit der Parkbrems-Bremsvorgabe einen Parkbrems-Steuerdruck aus, der in einem Relaisventil luftmengenverstärkt und anschließend als Parkbrems-Bremsdruck an die Federspeicherbremsen ausgegeben wird, um die Parkbrems-Bremsvorgabe umzusetzen. Der vom Parkbremsventil ausgegeben Parkbrems-Steuerdruck oder der vom Relaisventil ausgegebene Parkbrems-Bremsdruck oder ein davon abhängiger Druck wird an das Inverter-Steuerventil über eine Druckleitung übertragen und darin über das inverse Relaisventil invertiert, um den Inverter-Steuerdruck vorzugeben.

Somit können in zwei Alternativen eine Parkbrems-Bremsvorgabe über eine pneumatische Parkbremse oder eine Parkbrems-Bremsvorgabe und/oder eine Assistenz-Bremsvorgabe und/oder auch eine Betriebsbrems-Bremsvorgabe über eine elektrische Parkbremse im Parkbremskreis an das Inverter-Steuerventil übertragen werden. Bei einem elektrischen Ausfall des mindestens einen Betriebsbremskreises kann also auf den im Fahrzeug vorhandenen Parkbremskreis zurückgegriffen werden, um über diesen eine Bremsvorgabe in Form der manuellen Parkbrems-Bremsvorgabe und/oder Betriebsbrems-Bremsvorgabe und/oder der automatisiert angeforderten Assistenz-Bremsvorgabe aufzunehmen und über das Inverter-Steuerventil an die Betriebsbremsen umzuleiten und diese somit redundant anzusteuern, falls der Fahrer nicht manuell im Rahmen der ersten Rückfallebene in die Bremsung eingreift und das Umschaltventil dazu bereits in die entsprechende Umschaltventil-Schaltstellung gestellt ist.

Gemäß einer weiteren Alternative kann das Parkbrems-Steuermodul auch im Inverter-Steuerventil integriert sein und die Assistenz-Bremsvorgabe und/oder die Parkbrems-Bremsvorgabe und/oder die Betriebsbrems-Vorgabe können elektrisch an das Inverter-Steuerventil übertragen werden, z.B. über ein (Bus-)Netzwerk oder eine Direktverbindung. Im Inverter-Steuerventil kann über das Parkbrems-Steuermodul aus der Assistenz-Bremsvorgabe und/oder der Parkbrems-Bremsvorgabe der Parkbrems-Bremsdruck erzeugt werden und dieser über einen Parkbrems-Ausgang am Inverter-Steuerventil an die Federspeicherbremsen übertragen werden, falls eine Bremsung über die Federspeicherbremsen gewünscht ist.

Über ein im Inverter-Steuerventil integriertes Inverter-Steuermodul, das auch Bestandteil des Parkbrems-Steuermoduls sein kann, und ein Vorsteuermodul mit elektrisch steuerbaren Druckventilen enthält, kann aus der Assistenz-Bremsvorgabe und/oder der Parkbrems-Bremsvorgabe und/oder der Betriebsbrems-Bremsvorgabe der Inverter-Steuerdruck elektronisch gesteuert erzeugt und an den Inverter-Ausgang des Inverter-Steuerventils ausgegeben werden, wobei der im Parkbrems-Steuermodul erzeugte Parkbrems-Bremsdruck umgekehrt proportional zudem vom Vorsteuermodul erzeugten Inverter-Steuerdruck ist. Der somit erzeugte Inverter-Steuerdruck wird dann ebenfalls redundant dafür genutzt, die Betriebsbremsen anzusteuern.

Um den vom Inverter-Steuerventil über den Inverter-Ausgang ausgegebenen Inverter-Steuerdruck bei einem elektrischen Ausfall der Betriebsbremskreise an die Betriebsbremsen aussteuern zu können und diesen somit in den jeweiligen Betriebsbremskreis einspeisen zu können, ist eine vom Inverter-Ausgang ausgehende Redundanz-Druckleitung wie folgt zu den Betriebsbremskreisen geführt.

Zunächst ist in dem mindestens einen Betriebsbremskreis jeweils ein Druckmodulator vorgesehen, der ausgebildet ist, in Abhängigkeit des Betriebsbrems-Steuersignals einen Druckmodulator-Ausgangsdruck über einen Druckmodulator-Ausgang auszugeben, wobei der Druckmodulator-Ausgangsdruck als Betriebsbrems-Bremsdruck zur Umsetzung einer angeforderten Bremsvorgabe an die Betriebsbremsen übertragen werden kann. Dies ist im Normalbetrieb, d.h. ohne einen elektrischen Ausfall in den Betriebsbremskreisen, des Bremssystems der Fall.

Weiterhin weist der Druckmodulator einen pneumatischen Redundanzanschluss auf, wobei dem pneumatischen Redundanzanschluss in Abhängigkeit der Umschaltventil-Schaltstellung wahlweise der Inverter-Steuerdruck oder ein vom Betriebsbremsventil aufgrund der Betriebsbrems-Bremsvorgabe pneumatisch ausgegebener Betriebsbrems-Steuerdruck als Redundanzdruck vorgegeben werden kann. Die Einspeisung des Inverter-Steuerdruckes in den Betriebsbremskreis erfolgt somit über den pneumatischen Redundanzanschluss am jeweiligen Druckmodulator.

Der Druckmodulator ist dabei vorzugsweise ausgebildet, falls eine Vorgabe des Betriebsbrems-Bremsdruckes in Abhängigkeit des von dem Betriebsbrems-Steuermodul ausgebbaren Betriebsbrems-Steuersignals nicht möglich ist, d.h. ein elektrischer Ausfall im jeweiligen Betriebsbremskreis vorliegt, den Druckmodulator-Ausgangsdruck in Abhängigkeit des dem Redundanzanschluss wahlweise zugeführten Betriebsbrems-Steuerdruckes oder Inverter-Steuerdruckes zu erzeugen. Dadurch können in einfacher Weise zwei Rückfallebenen ausgebildet werden, in denen manuell oder automatisiert über den Parkbremskreis oder manuell direkt über das Betriebsbremsventil eine redundante Bremsung vorgegeben und umgesetzt werden kann. Vorteilhafterweise ist dazu in einem bestehenden Bremssystem mit einem pneumatisch redundant sowie elektrisch ansteuerbaren Druckmodulator lediglich ein zusätzliches Umschaltventil vorzusehen.

Durch das vorgeschaltete Umschaltventil kann also insbesondere bei einem elektrischen Ausfall des mindestens einen Betriebsbremskreises und einer daraufhin veranlassten redundanten Bremsung gewährleistet werden, dass der Fahrer durch entsprechendes Umschalten des Umschaltventils redundant in die Bremsung eingreifen kann, falls dieser am Platz oder aufmerksam ist und auch selbst über das Betriebsbremsventil pneumatisch redundant eingreift. Ein möglicherweise aufgrund einer Bremsvorgabe im Parkbremskreis ebenfalls redundant vorgegebener Inverter-Steuerdruck kann dann bei Vorliegen einer Betriebsbrems-Bremsvorgabe durch den Fahrer kontrolliert beendet werden bevor die erste Umschaltventil-Schaltstellung eingestellt wird, um anschließend den Fahrerwunsch umzusetzen.

Die wahlweise Vorgabe des Redundanzdruckes erfolgt also erfindungsgemäß über das Umschaltventil, das dem Redundanzanschluss vorgeschaltet ist, wobei das Umschaltventil in der ersten Umschaltventil-Schaltstellung das Betriebsbremsventil mit dem Redundanzanschluss verbindet zum Vorgeben des Betriebsbrems-Steuerdruckes als Redundanzdruck und in der zweiten Umschaltventil-Schaltstellung den Inverter-Steuerdruck an den Redundanzanschluss des Druckmodulators ausgibt zum Vorgeben des Inverter-Steuerdruckes als Redundanzdruck.

Um dies zu erreichen, sind zwei alternative Ausführungen des Umschaltventils möglich. Gemäß einer ersten Ausführungsform, ist das Umschaltventil in dem mindestens einen Betriebsbremskreis angeordnet, wobei das Umschaltventil vorzugsweise an einer dem mindestens einen Betriebsbremskreis zugeordneten Fahrzeugachse angeordnet ist und in der ersten Umschaltventil-Schaltstellung das Betriebsbremsventil mit dem Redundanzanschluss verbindet zum redundanten Vorgeben des Betriebsbrems-Steuerdruckes an den Redundanzanschluss, und in der zweiten Umschaltventil-Schaltstellung den Inverter-Ausgang des Inverter-Steuerventils mit dem Redundanzanschluss verbindet zum redundanten Vorgeben des Inverter-Steuerdruckes an den Redundanzanschluss. Das Umschaltventil ist somit dem Redundanzanschluss direkt an der Fahrzeugachse vorgeschaltet.

Vorzugsweise kann demnach das Betriebsbremsventil mit einem ersten Umschaltventil-Eingang des Umschaltventils und der Inverter-Ausgang mit einem zweiten Umschaltventil-Eingang des Umschaltventils sowie ein Umschaltventil-Ausgang des Umschaltventils mit dem Redundanzanschluss des Druckmodulators druckleitend verbunden werden. In der ersten Umschaltventil-Schaltstellung wird dann der erste Umschaltventil-Eingang mit dem Umschaltventil-Ausgang und in der zweiten Umschaltventil-Schaltstellung der zweite Umschaltventil-Eingang mit dem Umschaltventil-Ausgang verbunden, um eine entsprechende Aussteuerung bewirken zu können.

In einer alternativen Ausführungsform ist das Umschaltventil als ein Inverter-Umschaltventil im Inverter-Steuerventil integriert. Die Vorgabe des Redundanzdruckes an den Redundanzanschluss erfolgt dann dadurch, dass in der ersten Umschaltventil-Schaltstellung das Betriebsbremsventil mit einem zusätzlichen Redundanz-Ausgang des Inverter-Steuerventils verbunden wird und in der zweiten Umschaltventil-Schaltstellung der im Inverter-Steuerventil erzeugte Inverter-Steuerdruck an den Redundanz-Ausgang ausgegeben wird, wobei der Redundanz-Ausgang des Inverter-Steuerventils mit dem Redundanzanschluss des Druckmodulators verbunden ist.

Dazu ist vorzugsweise das Betriebsbremsventil mit einem ersten Inverter-Umschaltventil-Eingang des Inverter-Umschaltventils druckleitend verbunden, beispielsweise über einen entsprechenden Inverter-Eingang im Inverter-Steuerventil, und dem zweiten Inverter-Umschaltventil-Eingang des Inverter-Umschaltventils wird der im Inverter-Steuerventil erzeugte Inverter-Steuerdruck zugeführt. Ein Inverter-Umschaltventil-Ausgang des Inverter-Umschaltventils ist mit dem Redundanz-Ausgang des Inverter-Steuerventils und der Redundanz-Ausgang mit dem Redundanzanschluss des Druckmodulators druckleitend verbunden. In der ersten Umschaltventil-Schaltstellung wird der erste Inverter-Umschaltventil-Eingang mit dem Inverter-Umschaltventil-Ausgang und in der zweiten Umschaltventil-Schaltstellung der zweite Inverter-Umschaltventil-Eingang mit dem Inverter-Umschaltventil-Ausgang druckleitend verbunden, um eine entsprechende Aussteuerung bewirken zu können.

Somit kann in zwei alternativen Anordnungen des Umschaltventils die erfindungsgemäße Umschaltung zwischen dem Fahrerwunsch und dem Inverter-Steuerdruck stattfinden, wobei bei der im Inverter-Steuerventil integrierten Lösung eine verbesserte Nachrüstbarkeit gegeben ist, falls die Invertierungsfunktion in Form eines Anhängersteuerventils nicht bereits im Fahrzeug vorhanden ist. In dem Fall kann die erfindungsgemäße Umschaltfunktion mit dem Einbau des Inverter-Steuerventils in das Fahrzeug gleichzeitig nachgerüstet werden. Zudem kann Platz an den Fahrzeugachsen gespart werden, da eine Verbauung der Umschaltventile an der Fahrzeugachse entfallen kann. Zudem ist für beide Fahrzeugachsen lediglich ein Umschaltventil nötig.

Auf der anderen Seite kann mit den an den Fahrzeugachsen angeordneten Umschaltventilen eine achsweise unterschiedliche redundante Ansteuerung bewirkt werden und bei bereits vorhandenem Anhängersteuerventil mit Invertierungsfunktion kann das Bremssystem durch ein Nachrüsten einzelner Umschaltventile an den Fahrzeugachsen modular aufgerüstet werden.

Ist in der integrierten Lösung vorgesehen, den Inverter-Steuerdruck auch als Anhänger-Steuerdruck zur Ausgabe an einen Anhänger zu verwenden, ist der Inverter-Steuerdruck separat über den Inverter-Ausgang ("gelber Kupplungskopf") als Anhänger-Steuerdruck auszugeben. In dem Fall können also nicht wie bei der anderen Lösung die Vorgaben an den Anhänger und den Betriebsbremskreis über denselben Inverter-Ausgang, der dem "gelben Kupplungskopf" entspricht, erfolgen.

Vorteilhafterweise ist das verwendete Umschaltventil als ein Wechselventil oder ein elektrisch oder pneumatisch steuerbares 3/2-Wegeventil ausgeführt, wobei das Wechselventil ausgebildet ist, die Umschaltventil-Schaltstellungen wahlweise in Abhängigkeit der Höhe der an den Umschaltventil-Eingängen des jeweiligen Umschaltventils anliegenden Drücke einzustellen und dabei vorzugsweise den höheren der anliegenden Drücke auszusteuern (Select-High-Ventil). Um in diesem Fall situationsabhängig auf den Fahrerwunsch umzuschalten zu können, ist dafür zu sorgen, dass der Inverter-Steuerdruck, der dem Wechselventil ebenfalls zugeführt wird, kontrolliert verringert wird, d.h. eine bereits durchgeführte redundante Bremsung kontrolliert beendet wird. Dadurch wird der Inverter-Steuerdruck bei Vorliegen einer über das Betriebsbremsventil pneumatisch vorgegebenen Betriebsbrems-Bremsvorgabe geringer als der Betriebsbrems-Steuerdruck, so dass das als Select-High-Ventil ausgeführte Wechselventil automatisch in die erste Umschaltventil-Schaltstellung gebracht wird.

Das 3/2-Wegeventil hingegen kann aktiv in Abhängigkeit eines beispielsweise elektrisch vorgegebenen Umschaltsignals in die erste Umschaltventil-Schaltstellung oder in die zweite Umschaltventil-Schaltstellung gebracht werden. Um auch in diesem Fall bei Vorliegen eines pneumatisch vom Betriebsbremsventil vorgegebenen Betriebsbrems-Bremswunsches in die erste Umschaltventil-Schaltstellung zu schalten und somit diesen umzusetzen, kann das Umschaltsignal vorteilhafterweise in Abhängigkeit davon erzeugt werden, ob eine manuell angeforderte Betriebsbrems-Bremsvorgabe in dem mindestens einen Betriebsbremskreis vorliegt.

Dazu kann wie oben bereits beschrieben vorzugsweise ein Drucksensor im Bremssystem, vorzugsweise integriert im Inverter-Steuerventil oder am Betriebsbremsventil, vorgesehen sein, wobei der Drucksensor ausgebildet ist, den von dem Betriebsbremsventil infolge der Betriebsbrems-Bremsvorgabe ausgegebenen Betriebsbrems-Steuerdruck zu messen und in Abhängigkeit davon ein Bremswunsch-Signal auszugeben, in Abhängigkeit dessen das Umschaltsignal erzeugt werden kann. Mit diesem Umschaltsignal kann das Umschaltventil in die erste Umschaltventil-Schaltstellung gebracht werden, in der dem Redundanzanschluss der Betriebsbrems-Steuerdruck vorgegeben wird. Alternativ kann das Vorliegen eines Betriebsbrems-Bremswunsches auch elektronisch erfolgen, insofern diese Information bei einem elektrischen Ausfall erfasst und verarbeitet werden kann. Gemäß einer weiteren Alternative kann das 3/2-Wegeventil auch einen pneumatischen Steuereingang aufweisen, dem z.B. der Betriebsbrems-Steuerdruck oder ein dazu proportionaler Druck als Umschalt-Steuerdruck zugeführt wird. Aufgrund des Umschalt-Steuerdruckes am pneumatischen Steuereingang kann das Umschaltventil dann in die entsprechende Umschaltventil-Schaltstellung umgeschaltet werden.

Gemäß einer bevorzugten Ausführungsform ist vorgesehen, dass im Bremssystem weiterhin ein Abschaltventil vorgesehen ist, wobei das Abschaltventil in einer ersten Abschaltventil-Schaltstellung eine zum Redundanzanschluss des Druckmodulators führende Redundanz-Druckleitung mit einem Entlüftungsanschluss verbindet zum Entlüften der Redundanz-Druckleitung und zum Verhindern einer Aussteuerung des Betriebsbrems-Bremsdruckes an die Betriebsbremsen insbesondere in Abhängigkeit des Inverter-Steuerdruckes und in einer zweiten Abschaltventil-Schaltstellung der im Inverter-Steuerventil erzeugte Inverter-Steuerdruck über die Redundanz-Druckleitung übertragen werden kann zum redundanten Vorgeben des Betriebsbrems-Bremsdruckes in Abhängigkeit des Inverter-Steuerdruckes.

Das zusätzliche Abschaltventil ist hierbei insbesondere dann vorteilhaft für die gewünschte Abschaltfunktion, wenn als Umschaltventil ein Wechselventil vorgesehen ist. Ist das Umschaltventil jedoch als elektrisch steuerbares 3/2-Wegeventil ausgeführt, kann das Abschaltventil auch entfallen und die Abschaltfunktion des Abschaltventils stattdessen auch durch das ohnehin vorhandene Umschaltventil gewährleistet werden, indem dieses durch eine elektrische Ansteuerung in die entsprechende Umschaltventil-Schaltstellung gebracht wird, in der der Betriebsbrems-Bremsdruck nicht durch den Inverter-Steuerdruck vorgegeben wird sondern durch den Betriebsbrems-Steuerdruck.

Das Abschaltventil kann hierbei im Inverter-Steuerventil integriert sein, um die Nachrüstbarkeit zu vereinfachen und Platz zu sparen, oder dem Inverter-Ausgang oder dem Redundanz-Ausgang nachgeschaltet in der Redundanz-Druckleitung angeordnet sein. Durch das Abschaltventil wird vorteilhafterweise gewährleistet, dass beispielsweise im Stillstand des Fahrzeuges die redundante Vorgabe des Inverter-Steuerdruckes verhindert wird, um die Betriebsbremsen im Stillstand nicht dauerhaft anzuziehen und somit bei einer Leckage ein Entlüften der Druckmittelvorräte des Bremssystems zu vermeiden.

Erfindungsgemäß kann demnach in einem Verfahren zunächst festgestellt werden, ob der Betriebsbrems-Bremsdruck in dem mindestens einen Betriebsbremskreis in Abhängigkeit eines elektrisch vorgebbaren Betriebsbrems-Steuersignals zum Umsetzen der jeweiligen Bremsvorgabe an die Betriebsbremsen möglich ist und demnach die gewünschte Bremsvorgabe elektrisch gesteuert umgesetzt werden kann. Ist dies nicht der Fall, d.h. liegt beispielsweise ein Defekt in dem Betriebsbrems-Steuermodul vor und kann dieses entsprechend keine Betriebsbrems-Steuersignale ausgeben, wird der Inverter-Steuerdruck in dem Inverter-Steuerventil in Abhängigkeit der dem Parkbremskreis vorgegebenen Bremsvorgabe wie oben beschrieben durch eine Invertierung erzeugt und der Betriebsbrems-Bremsdruck in dem mindestens einen Betriebsbremskreis in Abhängigkeit des Inverter-Steuerdruckes wie beschrieben ausgegeben. Liegt jedoch gleichzeitig eine über das Betriebsbremsventil pneumatisch vorgegebene Betriebsbrems-Bremsvorgabe vor, wird der Betriebsbrems-Bremsdruck in Abhängigkeit dieser Betriebsbrems-Bremsvorgabe vorgegeben, indem das Umschaltventil unmittelbar oder nach Abbruch einer möglicherweise vorher durchgeführten Bremsung in die entsprechende Umschaltventil-Schaltstellung gebracht wird, die eine Vorgabe des Betriebsbrems-Bremsdruckes in Abhängigkeit des Inverter-Steuerdruckes verhindert und in Abhängigkeit der Betriebsbrems-Bremsvorgabe ermöglicht.

Die Erfindung wird im Folgenden anhand mehrerer Ausführungsbeispiele näher erläutert. Es zeigen:
- Fig. 1: ein elektronisch steuerbares Bremssystem mit einer elektrisch steuerbaren Parkbremse gemäß einer ersten Ausführungsform;
- Fig. 2a, b, c, d, e: verschiedene Ausführungsformen von Umschaltventilen in einem Bremssystem gemäß Fig. 1;
- Fig. 3: das Bremssystem gemäß Fig. 1 mit einem Abschaltventil zum Ausbilden einer Abschaltfunktion;
- Fig. 4: ein elektronisch steuerbares Bremssystem mit einer pneumatischen steuerbaren Parkbremse,
- Fig. 5, 6: Inverter-Steuerventile in unterschiedlichen Ausführungsformen,
- Fig. 7a, b, c: Inverter-Steuerventile mit einem integrierten Umschaltventil in unterschiedlichen Ausführungsformen; und
- Fig. 8: ein elektronisch steuerbares Bremssystem mit einer elektrisch steuerbaren Parkbremse gemäß einer weiteren Ausführungsform mit einem Inverter-Steuerventil gemäß Fig. 7c.

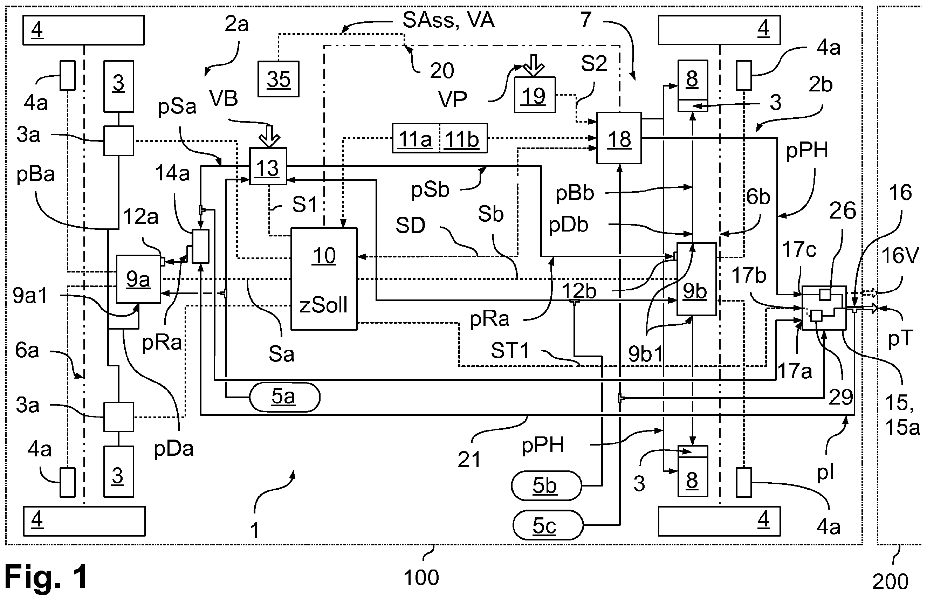

In Fig. 1 ist schematisch ein Fahrzeug 100 mit einem Bremssystem 1 dargestellt, das in zwei Betriebsbremskreisen 2a, 2b über Betriebsbremsen 3 an den Rädern 4 abgebremst werden kann. Ein Vorderachs-Betriebsbremskreis 2a ist einer Vorderachse 6a und ein Hinterachs-Betriebsbremskreis 2b einer Hinterachse 6b zugeordnet. Es können auch weiteren Fahrzeugachsen vorgesehen sein, denen die Betriebsbremskreise 6a und 6b oder weitere Betriebsbremskreise zugeordnet sind. Den Betriebsbremskreisen 2a, 2b ist achsweise jeweils ein Druckmittelvorrat 5a, 5b zugeordnet.

Der Hinterachse 6b ist weiterhin ein Parkbremskreis 7 zugeordnet, wobei die Räder 4 an der Hinterachse 6b in diesem Parkbremskreis 7 über Federspeicherbremsen 8 abgebremst werden können, so dass die Räder 4 der Hinterachse 6b sowohl im Hinterachs-Betriebsbremskreis 2b über die Betriebsbremsen 3 und im Parkbremskreis 7 über die Federspeicherbremsen 8 verzögert werden können. An der Hinterachse 6b sind dazu kombinierte Betriebs-/Federspeicherbremsen vorgesehen. Der Parkbremskreis 7 wird von einem eigenständigen Parkbrems-Druckmittelvorrat 5c mit Druckmittel versorgt.

Zum Betätigen der Betriebsbremsen 3 und somit zum Umsetzen einer angeforderten Bremsvorgabe, die durch eine Fahrzeug-Soll-Verzögerung zSoll oder einen Soll-Bremsdruck charakterisiert wird, ist in den beiden Betriebsbremskreisen 2a, 2b an der jeweiligen Fahrzeugachse 6a, 6b jeweils ein Druckmodulator 9a, 9b angeordnet, wobei beide Druckmodulatoren 9a, 9b gemäß diesem Ausführungsbeispiel elektrisch oder pneumatisch angesteuert werden können, um einen bestimmten Betriebsbrems-Bremsdruck pBa, pBb an die Betriebsbremsen 3 der jeweiligen Fahrzeugachse 6a, 6b auszusteuern und die Betriebsbremsen 3 somit zuzuspannen. Grundsätzlich kann der Betriebsbrems-Bremsdruck pBa, pBb für jede der einzelnen Betriebsbremsen 3 individuell vorgegeben werden, beispielsweise im Rahmen einer Bremsschlupfregelung, die anhand von Daten von Raddrehzahlsensoren 4a an den einzelnen Rädern 4 durchgeführt wird. An der Hinterachse 6b kann die Bremsschlupfregelung direkt durch den Hinterachs-Druckmodulator 9b erfolgen und an der Vorderachse 6a über den Betriebsbremsen 3 vorgeschaltete ABS-Steuerventile 3a.

Im normalen Fahrbetrieb werden die jeweiligen Druckmodulatoren 9a, 9b elektrisch über Betriebsbrems-Steuersignale Sa, Sb angesteuert, wobei die jeweiligen Betriebsbrems-Steuersignale Sa, Sb in einem Betriebsbrems-Steuermodul 10 in Abhängigkeit der jeweiligen Bremsvorgabe bzw. der Fahrzeug-Soll-Verzögerung zSoll derartig erzeugt werden, dass der jeweilige Druckmodulator 9a, 9b einen Betriebsbrems-Bremsdruck pBa, pBb an die Betriebsbremsen 3 aussteuert, mit dem die angeforderte Bremsvorgabe umgesetzt wird. Das Betriebsbrems-Steuersignal Sa, Sb kann dabei beispielsweise über einen CAN-Bus, ein anderes Netzwerk, ein analoges oder pulsweitenmoduliertes Steuersignal ausgegeben werden, mit dem in bekannter Weise im Druckmodulator 9a, 9b über Druckventile ein Druckmodulator-Ausgangsdruck pDa, pDb erzeugt wird, der über einen Druckmodulator-Ausgang 9a1, 9b1 als Betriebsbrems-Bremsdruck pBa, pBb an die jeweilige Betriebsbremse 3 ausgegeben wird.

Die Druckmodulatoren 9a, 9b sind somit jeweils mit dem Betriebsbrems-Steuermodul 10 elektrisch verbunden, das die Bremswirkung in den beiden Betriebsbrems-Bremskreisen 2a, 2b individuell elektrisch steuern kann und dabei als ein zentrales Steuermodul ausgebildet ist, das im Normalbetrieb für die elektrische Umsetzung der Bremsvorgabe in beiden Betriebsbrems-Bremskreisen 2a, 2b verantwortlich ist. Das Betriebsbrems-Steuermodul 10 sowie die jeweiligen Druckmodulatoren 9a, 9b sowie weitere Komponenten der jeweiligen Betriebsbrems-Bremskreise 2a, 2b werden gemäß diesem Ausführungsbeispiel von einer ersten Energiequelle 11a mit Energie versorgt.

Die Fahrzeug-Soll-Verzögerung zSoll kann hierbei manuell durch den Fahrer festgelegt werden, der durch eine manuelle Betätigung einer Betriebsbrems-Betätigungsvorrichtung 13, z.B. eines elektropneumatischen Betriebsbremsventils mit einem Bremspedal, eine Betriebsbrems-Bremsvorgabe VB vorgibt, die über ein Betriebsbrems-Betätigungssignal S1 an das Betriebsbrems-Steuermodul 10 ausgegeben wird und aus der die Fahrzeug-Soll-Verzögerung zSoll folgt. Weiterhin kann im automatisierten Fahrbetrieb von einem Assistenz-Steuermodul 35 eine automatisiert vorgegebene Assistenz-Bremsvorgabe VA über ein Assistenz-Steuersignal SAss ausgegeben werden, die beispielsweise über einen CAN-Bus 20 oder ein anderes Netzwerk im Fahrzeug 100 auch auf das Betriebsbrems-Steuermodul 10 übertragen wird und ebenfalls einer bestimmten Fahrzeug-Soll-Verzögerung zSoll entspricht.

Das Assistenz-Steuermodul 35 ist hierbei ausgebildet, das Fahrzeug 100 automatisiert anhand von Umfeldinformationen zu steuern, insbesondere gemäß der Assistenz-Bremsvorgabe VA abzubremsen, und in Abhängigkeit davon das Assistenz-Steuersignal SAss insbesondere an das Bremssystem 1 auszugeben.

Um bei einem elektrischen Ausfall weiterhin eine Umsetzung der Betriebsbrems-Bremsvorgabe VB oder der Assistenz-Bremsvorgabe VA, d.h. der Fahrzeug-Soll-Verzögerung zSoll, zu gewährleisten, kann auf mehrere Rückfallebenen ausgewichen werden. Durch die Rückfallebenen wird hierbei sichergestellt, dass das elektrisch steuerbare Bremssystem 1 für einen gewissen Automatisierungsgrad im Rahmen eines elektronisch gesteuerten autonomen Fahrbetriebs geeignet ist. Die Rückfallebenen sind wie folgt ausgestaltet:
In einer ersten Rückfallebene werden bei Feststellen eines elektrischen Ausfalls in einer der Komponenten der beiden Betriebsbremskreise 2a, 2b in dem jeweiligen Druckmodulator 9a, 9b automatisch pneumatische Redundanzanschlüsse 12a, 12b aktiviert. Diese bewirken, dass der jeweilige Druckmodulator 9a, 9b nicht mehr elektrisch über die Betriebsbrems-Steuersignale Sa, Sb angesteuert werden kann, sondern nur noch pneumatisch in Abhängigkeit eines vorgegebenen Redundanzdruckes pRa, pRb, der am jeweiligen pneumatischen Redundanzanschluss 12a, 12b anliegt. Die Vorgabe des jeweiligen Redundanzdruckes pRa, pRb erfolgt gemäß Fig. 1 achsweise unterschiedlich.

Demnach wird in dem Hinterachs-Betriebsbremskreis 2b als Hinterachs-Redundanzdruck pRb über eine pneumatische Leitung ein von dem Betriebsbremsventil 13 ausgesteuerter Hinterachs-Betriebsbrems-Steuerdruck pSb an den pneumatischen Hinterachs-Redundanzanschluss 12b ausgegeben. Das Betriebsbremsventil 13 steuert den Hinterachs-Betriebsbrems-Steuerdruck pSb hierbei in Abhängigkeit der vom Fahrer manuell vorgegebenen Betriebsbrems-Bremsvorgabe VB aus, so dass durch den Hinterachs-Betriebsbrems-Steuerdruck pSb pneumatisch dieselbe Bremsung angefordert wird wie über das Hinterachs-Betriebsbrems-Steuersignal Sb.

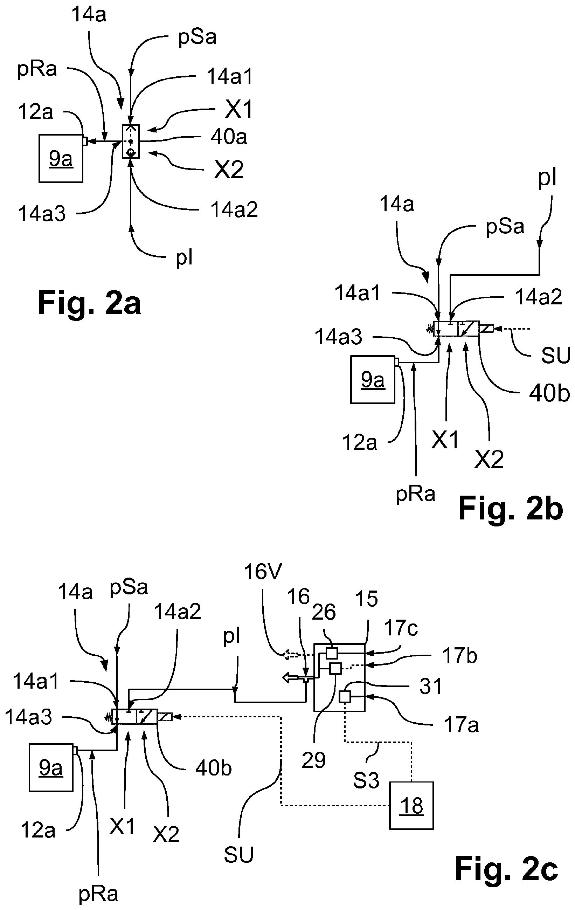

In dem Vorderachs-Betriebsbremskreis 2a kann als Vorderachs-Redundanzdruck pRa z.B. ein ebenfalls vom Betriebsbremsventil 13 gemäß der Betriebsbrems-Bremsvorgabe VB ausgesteuerter Vorderachs-Betriebsbrems-Steuerdruck pSa vorgegeben werden, wobei dieser im Gegensatz zum Hinterachs-Betriebsbremskreis 2b nicht direkt an den Vorderachs-Druckmodulator 9a bzw. dessen pneumatischen Vorderachs-Redundanzanschluss 12a ausgegeben wird. Vielmehr ist dem pneumatischen Vorderachs-Redundanzanschluss 12a ein Vorderachs-Umschaltventil 14a vorgelagert, das in zwei Umschaltventil-Schaltstellungen X1, X2 umgeschaltet werden kann. Der Übersichtlichkeit halber sind die Bezugszeichen, die im Folgenden für die Komponenten des Vorderachs-Umschaltventils 14a verwendet werden, in Fig. 1 nicht dargestellt. Es wird stattdessen auf die Detailansicht in den Figuren 2a und 2b verwiesen.

Das Vorderachs-Umschaltventil 14a weist einen ersten Vorderachs-Umschaltventil-Eingang 14a1 sowie einen zweiten Vorderachs-Umschaltventil-Eingang 14a2 und einen Vorderachs-Umschaltventil-Ausgang 14a3 auf, wobei der Vorderachs-Umschaltventil-Ausgang 14a3 mit dem pneumatischen Vorderachs-Redundanzanschluss 12a am Vorderachs-Druckmodulators 9a und der erste Vorderachs-Umschaltventil-Eingang 14a1 mit dem Betriebsbremsventil 13 verbunden ist. Befindet sich das Vorderachs-Umschaltventil 14a in seiner ersten Umschaltventil-Schaltstellung X1 wird der vom Betriebsbremsventil 13 vorgegebene, am ersten Vorderachs-Umschaltventil-Eingang 14a1 anliegende Vorderachs-Betriebsbrems-Steuerdruck pSa an den pneumatischen Vorderachs-Redundanzanschluss 12a durchgeleitet, so dass in dieser ersten Umschaltventil-Schaltstellung X1 vom Vorderachs-Druckmodulator 9a die pneumatisch vorgegebene Betriebsbrems-Bremsvorgabe VB des Fahrers umgesetzt wird, indem der Vorderachs-Betriebsbrems-Steuerdruck pSa luftmengenverstärkt an die Betriebsbremsen 3 der Vorderachse 6a ausgegeben wird.

Die durch das elektropneumatische Betriebsbremsventil 13 vom Fahrer vorgegebene Betriebsbrems-Bremsvorgabe VB, d.h. eine bestimmte vorgegebene Fahrzeug-Soll-Verzögerung zSoll, kann somit im Normalbetrieb in Abhängigkeit der elektronisch über die jeweiligen von dem Betriebsbrems-Steuermodul 10 ausgegebenen Betriebsbrems-Steuersignale Sa, Sb oder in der ersten Rückfallebene in Abhängigkeit der pneumatisch über die jeweiligen vom Betriebsbremsventil 13 direkt ausgesteuerten Betriebsbrems-Steuerdrücke pSa, pSb von dem jeweiligen Druckmodulator 9a, 9b umgesetzt werden.

Der zweite Vorderachs-Umschaltventil-Eingang 14a2 des Vorderachs-Umschaltventils 14a ist über eine Redundanz-Druckleitung 21 mit einem Inverter-Steuerventil 15 verbunden. Dadurch kann in der zweiten Umschaltventil-Schaltstellung X2 des Vorderachs-Umschaltventils 14a ein aus einem Inverter-Ausgang 16 des Inverter-Ventils 15 ausgegebener Inverter-Steuerdruck pl als Vorderachs-Redundanzdruck pRa an den pneumatischen Vorderachs-Redundanzanschluss 12a des Vorderachs-Druckmodulators 9a durchgeleitet werden. Dadurch können die Betriebsbremsen 3 an der Vorderachse 6a zusätzlich mit einem Vorderachs-Bremsdruck pBa beaufschlagt werden, der von dem Inverter-Steuerdruck pl abhängig ist. Dies ermöglicht die Ausbildung einer zweiten Rückfallebene wie folgt:
Die Vorgabe des Inverter-Steuerdruckes pl durch das Inverter-Steuerventil 15 kann grundsätzlich in Abhängigkeit unterschiedlicher Pfade erfolgen: Gemäß Fig. 1 kann dem Inverter-Steuerventil 15 über einen ersten Inverter-Eingang 17a über eine Druckleitung z.B. der Vorderachs-Betriebsbrems-Steuerdruck pSa, der vom Betriebsbremsventil 13 in Abhängigkeit der Betriebsbrems-Bremsvorgabe VB direkt ausgesteuert wird, zugeführt werden. Im Inverter-Steuerventil 15 wird dieser luftmengenverstärkt und anschließend als Inverter-Steuerdruck pl an den Inverter-Ausgang 16 ausgegeben, wobei die Luftmengenverstärkung mit dem Druckmittel aus dem Parkbrems-Druckmittelvorrat 5c erfolgt, der dem Inverter-Steuerventil 15 ebenfalls zugeführt wird. Der im Inverter-Steuerventil 15 erzeugte Inverter-Steuerdruck pI kann über den Inverter-Ausgang 16 als Anhänger-Steuerdruck pT an einen möglicherweise angehängten Anhänger 200 ausgegeben werden, um auch diesen in Abhängigkeit der Betriebsbrems-Bremsvorgabe VB vom Fahrer abzubremsen.

Weiterhin kann eine elektrische Vorgabe der Betriebsbrems-Bremsvorgabe VB an das Inverter-Steuerventil 15 über einen zweiten Inverter-Eingang 17b erfolgen, wobei die elektrische Bremsvorgabe gemäß dieser Ausführungsform über ein von dem Betriebsbrems-Steuermodul 10 ausgegebenes erstes Inverter-Steuersignal ST1 erfolgt, das in Abhängigkeit der Fahrzeug-Soll-Verzögerung zSoll gebildet ist. Über den zweiten Inverter-Eingang 17b wird das erste Inverter-Steuersignal ST1 direkt an ein Vorsteuermodul 29 im Inverter-Steuerventil 15 übertragen und dieses in Abhängigkeit des ersten Inverter-Steuersignals ST1 derartig angesteuert, dass durch Öffnen und Schließen von Druckventilen im Vorsteuermodul 29 mit dem Druckmittel aus dem Parkbrems-Druckmittelvorrat 5c ein der Betriebsbrems-Bremsvorgabe VB entsprechender Druck erzeugt wird, der als Inverter-Steuerdruck pI am Inverter-Ausgang 16 ausgegeben wird. Somit kann eine vom Betriebsbrems-Steuermodul 10 elektrisch verarbeitete Betriebsbrems-Bremsvorgabe VB über das Inverter-Steuerventil 15 auch an einen möglicherweise angehängten Anhänger 200 übergeben werden.

Ein dritter Inverter-Eingang 17c am Inverter-Steuerventil 15 ist über eine Druckleitung mit einem Parkbrems-Steuermodul 18 verbunden, das im Parkbremskreis 7 beispielsweise in Abhängigkeit einer vom Fahrer manuell über eine Parkbrems-Betätigungseinrichtung 19 vorgegebenen Parkbrems-Bremsvorgabe VP einen Parkbrems-Bremsdruck pPH erzeugt und diesen oder einen im Parkbrems-Steuermodul 18 intern erzeugten Steuerdruck, in Abhängigkeit dessen der Parkbrems-Bremsdruck pPH erzeugt wird, an die Federspeicherbremsen 8 ausgibt, so dass über die Federspeicherbremsen 8 eine bestimmte Bremswirkung an der Hinterachse 6b erzielt werden kann. Dazu wird gemäß Fig. 1 bei Vorliegen einer Parkbrems-Bremsvorgabe VP von der Parkbrems-Betätigungseinrichtung 19 auf elektronischem Wege ein Parkbrems-Betätigungssignal S2 an das Parkbrems-Steuermodul 18 ausgegeben. Im Rahmen dieser Parkbremsung ist hierbei lediglich ein vollständiges Öffnen oder Zuspannen der Federspeicherbremsen 8 vorgesehen. Beispielhaft ist ein derartiges Parkbrems-Steuermodul 18 in DE 10 2015 008 377 A1 beschrieben, deren Inhalt hiermit durch Bezugnahme im vollen Umfang eingeschlossen ist.

Weiterhin kann auch die automatisiert vorgegebene Assistenz-Bremsvorgabe VA über den CAN-Bus 20 bzw. das Assistenz-Steuersignal SAss an das Parkbrems-Steuermodul 18 übertragen und von diesem auch umgesetzt werden, beispielsweise im Rahmen einer automatisiert vorgegebenen Hilfsbremsfunktion oder einer automatisiert vorgegebenen Notbremsfunktion oder einer automatisiert vorgegebenen Parkbremsfunktion. Dazu wird der Parkbrems-Bremsdruck pPH von dem Parkbrems-Steuermodul 18 in Abhängigkeit dieser automatisiert vorgegebenen Assistenz-Bremsvorgabe VP erzeugt und an die Federspeicherbremsen 8 ausgesteuert, um auch während der Fahrt eine unterstützende Bremsung oder im Stillstand ein Abstellen über den Parkbremskreis 7 und die Federspeicherbremsen 8 bewirken zu können. Im Rahmen dessen ist auch eine abgestufte Bremsung im Parkbremskreis 7 möglich.

Der dem Inverter-Steuerventil 15 über den dritten Inverter-Eingang 17c zugeleitete Parkbrems-Bremsdruck pPH - oder ein davon abhängiger Druck - wird im Inverter-Steuerventil 15 über ein in Fig. 1 lediglich schematisch dargestelltes inverses Relaisventil 26 invertiert und als Inverter-Steuerdruck pI an den Inverter-Ausgang 16 ausgegeben. Die Invertierung des Parkbrems-Bremsdruckes pPH ist hierbei vorgesehen, um mit dem Inverter-Steuerdruck pI auch Betriebsbremsen ansteuern zu können, die bei hohen Betriebsbrems-Bremsdrücken pBa, pBb zuspannen und bei niedrigen Betriebsbrems-Bremsdrücken pBa, pBb öffnen. Der Parkbrems-Bremsdruck pPH hingegen wird unter Berücksichtigung davon ausgegeben, dass die Federspeicherbremsen 8 im Parkbremskreis 7 bei niedrigen Parkbrems-Bremsdrücken pPH zuspannen und bei hohen Parkbrems-Bremsdrücken pPH öffnen.

Eine derartige Invertierungsfunktion über ein inverses Relaisventil 26 im Inverter-Steuerventil 15 ist in herkömmlichen Anhängersteuerventilen 15a bereits vorhanden, die dafür vorgesehen sind, einen am Fahrzeug 200 angehängten Anhänger 200 mit Betriebsbremsen über einen im Parkbremskreis 7 ausgesteuerten Parkbrems-Bremsdruck pPH abzubremsen und demnach in einer Parksituation, einer Hilfsbremssituation oder einer Notbremssituation auch den Anhänger 200 gemäß der Parkbrems-Bremsvorgabe VP oder der Assistenz-Bremsvorgabe VA gezielt einzubremsen. Der Inverter-Ausgang 16 entspricht demnach dem "gelben Kupplungskopf" eines herkömmlichen Anhängersteuerventils 15a. Ein zusätzlicher Vorratsdruck-Ausgang 16V am Anhänger-Steuerventil 15a dient hierbei dem Übertragen des Druckmittels aus dem Parkbrems-Druckmittelvorrat 5c an den Anhänger 200, wobei der Vorratsdruck-Ausgang 16V dem "roten Kupplungskopf" eines herkömmlichen Anhängersteuerventils 15a entspricht. Demnach kann das Inverter-Steuerventil 15 vorteilhafterweise auch als herkömmliches Anhängersteuerventil 15a ausgeführt sein.

Das Parkbrems-Steuermodul 18 ist mit einer zweiten Energiequelle 11b verbunden, die von der ersten Energiequelle 11a unabhängig ist, so dass die Betriebsbremskreise 2a, 2b und der Parkbremskreis 7 energetisch unabhängig voneinander betrieben werden. Bei einem Ausfall der ersten Energiequelle 11a können somit zumindest die Assistenz-Bremsvorgabe VA und die Parkbrems-Bremsvorgabe VP über den Parkbremskreis 7 und das Inverter-Steuerventil 15 vorgegeben und ausgesteuert werden. Die Unabhängigkeit der Energiequellen 11a, 11b kann dabei entweder dadurch gewährleistet werden, dass voneinander getrennte Energiequellen 11a, 11b eingesetzt werden oder aber eine galvanische Trennung zwischen den Energiequellen 11a, 11b stattfindet.

Der beschriebene Aufbau des elektronischen Bremssystems 1 gemäß Fig. 1 erlaubt allerdings bei einem Ausfall der ersten Energiequelle 11a oder der elektrischen Komponenten der Betriebsbremskreise 2a, 2b, d.h. für den Fall, dass keine Aussteuerung eines Betriebsbrems-Bremsdruckes pBa, pBb gemäß der elektrischen Vorgabe Sa, Sb bzw. durch das Betriebsbrems-Steuermodul 10 und durch die Druckmodulatoren 9a, 9b mehr möglich ist, auch eine Umsetzung der Betriebsbrems-Bremsvorgabe VB wie folgt, um den Ausfall der Betriebsbremskreise 2a, 2b zu kompensieren:
Wie bereits beschrieben, kann in der ersten Rückfallebene eine vom Fahrer pneumatisch über das Betriebsbremsventil 13 vorgegebene Betriebsbrems-Bremsvorgabe VB durch eine entsprechende Umschaltung des Vorderachs-Umschaltventils 14a in die erste Umschaltventil-Schaltstellung X1 an den pneumatischen Vorderachs-Redundanzanschluss 12a des Vorderachs-Druckmodulators 9a und weiterhin auch direkt an den pneumatischen Hinterachs-Redundanzanschluss 12b des Hinterachs-Druckmodulators 9b vorgegeben werden. Damit kann bei einem elektrischen Ausfall dennoch die vom Fahrer vorgegebene Betriebsbrems-Bremsvorgabe VB über die Betriebsbremsen 3 an beiden Fahrzeugachsen 6a, 6b redundant bewirkt werden.

In einer zweiten Rückfallebene, die dann eingreift, wenn der Fahrer bei einem elektrischen Ausfall der Betriebsbremskreise 2a, 2b nicht zur Verfügung steht, da er z.B. unaufmerksam ist oder sich im Falle von höher automatisierten Fahrmanövern nicht am Platz befindet, kann auch die automatisiert vorgegebene Assistenz-Bremsvorgabe VA durch die Betriebsbremsen 3 an zumindest einer Fahrzeugachse 6a, 6b umgesetzt werden. Dieser Fall kann beispielsweise bei einer automatisiert gesteuerten Fahrt des Fahrzeuges 100 auftreten, bei der die Assistenz-Bremsvorgabe VA beispielsweise in Form der Fahrzeug-Soll-Verzögerung über den CAN-Bus 20 von dem Assistenz-Steuermodul 35 vorgegeben wird.

Das automatisierte Eingreifen erfolgt dann dadurch, dass bei Erkennen eines elektrischen Ausfalls, beispielsweise in der ersten Energiequelle 11a oder dem Betriebsbrems-Steuermodul 10 oder den Druckmodulatoren 9a, 9b, die automatisiert vorgegebene Assistenz-Bremsvorgabe VA, die über die betriebsbremskreise 2a, 2b bewirkt werden soll, statt von dem Betriebsbrems-Steuermodul 10 von dem Parkbrems-Steuermodul 18 verarbeitet wird. D.h. die über das Assistenz-Steuersignal SAss übertragene Assistenz-Bremsvorgabe VA bzw. die Fahrzeug-Soll-Verzögerung zSoll wird nicht mehr wie im Normalbetrieb von dem Betriebsbrems-Steuermodul 10 verarbeitet und darüber von den Betriebsbremsen 3 in den Betriebsbremskreisen 2a, 2b umgesetzt. Der elektrische Ausfall kann hierbei beispielsweise im Rahmen einer Selbstdiagnose durch das Betriebsbrems-Steuermodul 10 erkannt und in entsprechender Weise, z.B. über ein Diagnose-Signal SD oder eine entsprechende Botschaft auf dem CAN-Bus 20, an das Parkbrems-Steuermodul 18 gemeldet werden.

Das Parkbrems-Steuermodul 18 erzeugt in Abhängigkeit des Assistenz-Steuersignals SAss bzw. der vorgegebenen Fahrzeug-Soll-Verzögerung zSoll den Parkbrems-Bremsdruck pPH und gibt diesen über den dritten Inverter-Eingang 17c an das Inverter-Steuerventil 15 vor. Weiterhin werden auch die Federspeicherbremsen 8 mit diesem Parkbrems-Bremsdruck pPH beaufschlagt, so dass im Redundanzfall die Hinterachse 6b in Abhängigkeit der automatisierten Assistenz-Bremsvorgabe VA gebremst wird. Im Inverter-Steuerventil 15 wird der Parkbrems-Bremsdruck pPH über das inverse Relaisventil 26 invertiert sowie ggf. luftmengenverstärkt und über den Inverter-Ausgang 16 als Inverter-Steuerdruck pI ausgegeben. Der Inverter-Steuerdruck pI wird über die Redundanz-Druckleitung 21 an den zweiten Vorderachs-Umschaltventil-Eingang 14a2 des Vorderachs-Umschaltventils 14a geleitet und als Anhänger-Steuerdruck pT an einen möglicherweise angehängten Anhänger 200. In der zweiten Umschaltventil-Schaltstellung X2 des Vorderachs-Umschaltventils 14a kann der Inverter-Steuerdruck pl somit als Vorderachs-Redundanzdruck pRa an den pneumatischen Vorderachs-Redundanzanschluss 12a geleitet und darüber - auch ohne Vorliegen einer Fahreranforderung - die automatisiert vorgegebene Assistenz-Bremsvorgabe VA redundant an der Vorderachse 6a über die Betriebsbremsen 3 bewirkt werden. Auch hierzu ist die Invertierung im Inverter-Steuerventil 15 über das inverse Relaisventil 26 erforderlich, da im Vorderachs-Betriebsbremskreis 2a im Gegensatz zum Parkbremskreis 7 Betriebsbremsen 3 angesteuert werden.

Somit ist in der zweiten Rückfallebene auch die Umsetzung einer automatisiert vorgegebenen Assistenz-Bremsvorgabe VA an beiden Fahrzeugachsen 6a, 6b möglich, wobei die Vorderachse 6a über die Betriebsbremsen 3 und die Hinterachse 6b über die Federspeicherbremsen 8 abgebremst wird. In dieser zweiten Rückfallebene übernimmt das Parkbrems-Steuermodul 18 dabei die Umsetzung der automatisiert vorgegebenen Bremsung, wobei der aus der Assistenz-Bremsvorgabe VA folgende Parkbrems-Bremsdruck pPH über das Inverter-Steuerventil 15 an die Vorderachse 6a umgeleitet wird.

Um auf die beiden beschriebenen Rückfallebenen zurückgreifen zu können, ist eine entsprechende Umschaltung des Vorderachs-Umschaltventils 14a nötig. Gemäß den Fig. 2a und 2b kann das Vorderachs-Umschaltventil 14a dazu als ein Wechselventil 40a (Fig. 2a) oder als ein 3/2-Wegeventil 40b (Fig. 2b) ausgeführt sein. Beide Ventile 40a, 40b weisen jeweils zwei Vorderachs-Umschaltventil-Eingänge 14a1, 14a2 sowie einen Vorderachs-Umschaltventil-Ausgang 14a3 auf, die wie beschrieben druckleitend zu den entsprechenden Komponenten des Vorderachs-Bremskreises 2a des Bremssystems 1 geführt sind. Die Funktionsweise der dargestellten Ventile 40a, 40b unterscheidet sich wie folgt:
Das Wechselventil 40a, auch als "Select-High-Ventil" bezeichnet, leitet den jeweils höheren der an den beiden Vorderachs-Umschaltventil-Eingängen 14a1, 14a2 anliegenden Druck an den Vorderachs-Umschaltventil-Ausgang 14a3 durch. In der Ausführung gemäß Fig. 1 wird also entweder der vom Betriebsbremsventil 13 ausgegebene Vorderachs-Betriebsbrems-Steuerdruck pSa oder der vom Inverter-Steuerventil 15 ausgegebene Inverter-Steuerdruck pI als Vorderachs-Redundanzdruck pRa an den pneumatischen Vorderachs-Redundanzanschluss 12a des Vorderachs-Druckmodulators 9a geleitet, je nachdem, welcher der beiden Drücke pSa, pI der Höhere ist.

Liegt eine manuell vorgegebene Betriebsbrems-Bremsvorgabe VB vom Fahrer über das Betriebsbremsventil 13 vor und führt diese Betriebsbrems-Bremsvorgabe VB zu einem höheren ausgesteuerten Druckwert für den Vorderachs-Betriebsbrems-Steuerdruck pSa als der vom Parkbrems-Steuermodul 18 ausgesteuerte Parkbrems-Bremsdruck pPH, der aufgrund einer über das Assistenz-Steuersignal SAss automatisiert angeforderten Assistent-Bremsvorgabe VA ausgesteuert und als Inverter-Steuerdruck pI an das Wechselventil 40a geleitet wird, wird das Wechselventil 40a automatisch in die erste Umschaltventil-Schaltstellung X1 geschaltet und an der Vorderachse 6a wird über die Betriebsbremsen 3 die manuell vorgegebene Betriebsbrems-Bremsvorgabe VB umgesetzt. Ist der Fahrer jedoch unaufmerksam oder nicht am Platz oder greift nicht manuell in die Bremsung ein und wird eine automatisierte Bremsung über das Assistenz-Steuersignal SAss angefordert, ist demnach der Vorderachs-Betriebsbrems-Steuerdruck pSa immer geringer als der Parkbrems-Bremsdruck pPH bzw. der Inverter-Steuerdruck pl, so dass das Wechselventil 40a automatisch in die zweite Umschaltventil-Schaltstellung X2 übergeht und über die Betriebsbremsen 3 an der Vorderachse 3 die automatisiert vorgegebene Assistenz-Bremsvorgabe VA umgesetzt wird.

Gemäß Fig. 2b ist das Vorderachs-Umschaltventil 14a als ein 3/2-Wegeventil 40b ausgeführt, das elektrisch über ein Umschaltsignal SU gesteuert in die jeweilige Umschaltventil-Schaltstellung X1, X2 gebracht werden kann und somit entweder der erste Vorderachs-Umschaltventil-Eingang 14a1 (X1) oder der zweiten Vorderachs-Umschaltventil-Eingang 14a2 (X2) mit dem Vorderachs-Umschaltventil-Ausgang 14a3 verbunden wird. Das Umschaltsignal SU kann beispielsweise von dem Parkbrems-Steuermodul 18 erzeugt und ausgegeben werden, um die Umschaltventil-Schaltstellung X1, X2 elektrisch vorzugeben.

Gemäß einer Ausführungsform, die in Fig. 2c dargestellt ist, kann vorgesehen sein, z.B. im Inverter-Steuerventil 15 - ggf. auch direkt am Betriebsbremsventil 13 - einen Drucksensor 31 anzuordnen, der den dem ersten Inverter-Eingang 17a vorgegebenen Vorderachs-Betriebsbrems-Steuerdruck pSa misst und demnach feststellt, ob eine Betriebsbrems-Bremsvorgabe VB durch den Fahrer vorliegt. Der Drucksensor 31 gibt ein Bremswunsch-Signal S3 beispielsweise an das Parkbrems-Steuermodul 18 zur Verarbeitung aus und das Parkbrems-Steuermodul 18 gibt daraufhin ein entsprechendes Umschaltsignal SU aus, das das 3/2-Wegeventil 40b in die erste Schaltstellung X1 umschaltet, wenn über das Bremswunsch-Signal S3 eine vorliegende Betriebsbrems-Bremsvorgabe VB gemeldet wird, so dass die durch das Betriebsbremsventil 13 pneumatisch vorgegebene Betriebsbrems-Bremsvorgabe VB vom 3/2-Wegeventil 40b an den Vorderachs-Redundanzanschluss 12a geleitet und vom Vorderachs-Druckmodulator 9a in einen entsprechenden Vorderachs-Betriebsbrems-Bremsdruck pBa umgesetzt wird.

Mit den in den Fig. 2a, 2b, 2c angegebenen Umschaltventilen 40a, 40b kann also in dem Bremssystem 1 gemäß Fig. 1 automatisiert oder aktiv gesteuert vorgegeben werden, welcher Vorderachs-Redundanzdruck pRa am pneumatischen Vorderachs-Redundanzanschluss 12a anliegt und demnach welche redundante Bremswirkung an der Vorderachse 6a über die Betriebsbremsen 3 umgesetzt werden soll, die Betriebsbrems-Bremsvorgabe VB oder die automatisiert vorgegebene Assistenz-Bremsvorgabe VA.

Das Wechselventil 40a hat hierbei den Vorteil, dass der Fahrer in jeder Situation automatisch die über das Inverter-Steuerventil 15 automatisiert vorgegebene Assistenz-Bremsvorgabe VA übersteuern kann, so dass der Betriebsbrems-Bremsvorgabe VB, d. h. einer vom Fahrer angeforderten Bremsung, immer eine höhere Priorität eingeräumt werden kann gegenüber einer automatisiert angeforderten Bremsung, falls der Fahrer eine stärkere Bremsung anfordert. Diese höhere Priorität kann auch in dem in Fig. 2c dargestellten Ausführungsbeispiel mit einem aktiv gesteuerten 3/2-Wegeventil 40b eingeräumt werden, indem bei Vorliegen einer Fahrerbremsung, die z.B. über den Drucksensor 31 erfasst wird, über das Umschaltsignal SU eine Umschaltung in die erste Umschaltventil-Schaltstellung X1 stattfindet. Allerdings findet eine solche Umschaltung mit dem 3/2 Wegeventil 40b lediglich dann statt, wenn nicht zum jeweiligen Zeitpunkt bereits in der zweiten Umschaltventil-Schaltstellung X2 eine insbesondere stärkere Bremsung umsetzt wird. Um durch die Umschaltung keinen unsicheren Fahrzustand oder eine anderweitig gefährliche Situation zu verursachen, wird die andere Bremsung zunächst kontrolliert beendet und anschließend erst in die erste Umschaltventil-Schaltstellung X1 umgeschaltet.

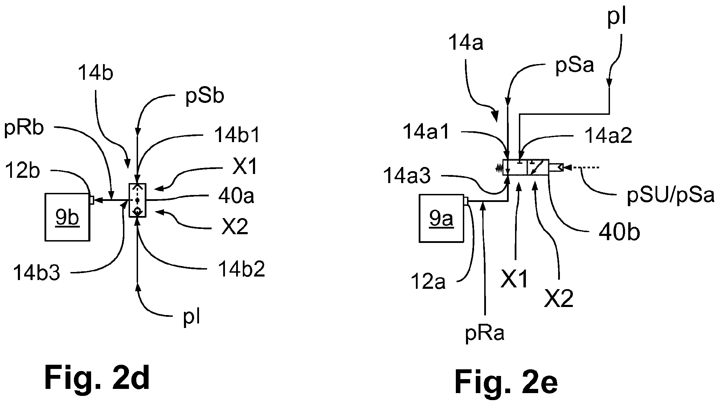

Grundsätzlich ist ein derartiges Umschaltventil 40a, 40b - wie in Fig. 2d stellvertretend für das Wechselventil 40a dargestellt - auch an der Hinterachse 6b bzw. dem pneumatischen Hinterachs-Redundanzanschluss 12b vorgelagert möglich, um auch den Hinterachs-Redundanzdruck pRb fahrerwunschabhängig VB oder gemäß der Assistenz-Bremsvorgabe VA festzulegen, wenn ein elektrischer Ausfall vorliegt. Demnach ist ein Hinterachs-Umschaltventil 14b mit einem ersten Hinterachs-Umschaltventil-Eingang 14b1 und einem zweiten Hinterachs-Umschaltventil-Eingang 14b2 vorgesehen, die je nach Umschaltventil-Schaltstellung X1, X2 den Hinterachs-Betriebsbrems-Steuerdruck pSb oder den Inverter-Steuerdruck pI an einen Hinterachs-Umschaltventil-Ausgang 14b3 leiten.

Die konstruktive Ausgestaltung im elektrisch gesteuerten Bremssystem 1 ist in dem Fall vergleichbar zu einer Anordnung an der Vorderachse 6a, so dass die redundante Ansteuerung über das Hinterachs-Umschaltventil 14b in analoger Weise erfolgen kann. Bei Verwendung eines Hinterachs-Umschaltventils 14b ist lediglich dafür zu sorgen, dass in den jeweiligen Rückfallebenen von dem Parkbrems-Steuermodul 18 die Federspeicherbremsen 8 nicht gleichzeitig mit den Betriebsbremsen 3 an der Hinterachse 6b zugespannt werden, um keine überlagerte Bremswirkung an der Hinterachse 6b durch das gleichzeitige Betätigen beider Bremsen 3, 8 an der Hinterachse 6b zu bewirken. Dies kann beispielsweise durch eine entsprechende Steuerung und Regelung in dem Parkbrems-Steuermodul 18 erfolgen, indem beispielsweise eine Ausgabe des Parkbrems-Bremsdruckes pPH an die Federspeicherbremsen 8 verhindert wird, wenn ein elektrischer Ausfall in den Betriebsbremskreisen 2a, 2b vorliegt und eine redundante Ansteuerung der Betriebsbremsen 3 an der Hinterachse 6b über das Inverter-Steuerventil 15 erfolgen soll.

Gemäß Fig. 2e ist beispielhaft als Vorderachs-Umschaltventil 14a ein pneumatisch steuerbares 3/2-Wegeventil 40b dargestellt. Diesem kann pneumatisch ein Umschalt-Steuerdruck pSU zugeführt werden, der hier durch den Vorderachs-Betriebsbrems-Steuerdruck pSa oder einem dazu proportionalen Druck gegeben ist. In Abhängigkeit der Höhe des Umschalt-Steuerdruckes pSU kann die erste Umschaltventil-Schaltstellung X1 eingestellt werden, den Fahrerwunsch als redundanten Bremswunsch an den jeweiligen Betriebsbremskreis 2a, 2b auszugeben.

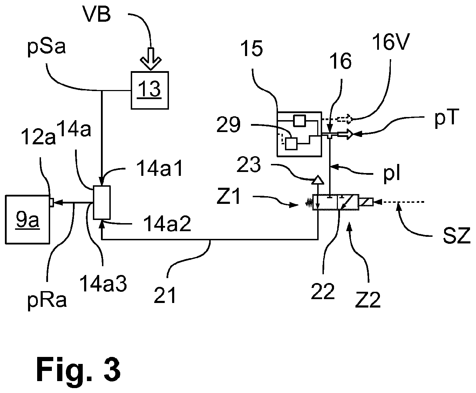

Gemäß Fig. 3 ist eine weitere Ausführungsform des Bremssystems 1 dargestellt, wobei zusätzlich ein Abschaltventil 22 vorgesehen ist, das in der Redundanz-Druckleitung 21 zwischen dem Inverter-Steuerventil 15 bzw. dem Inverter-Ausgang 16 und dem Vorderachs-Umschaltventil 14a angeordnet ist. Der Übersichtlichkeit halber ist lediglich der relevante Teil aus dem Bremssystem 1 dargestellt, um die Funktion des zusätzlichen Abschaltventils 22 zu verdeutlichen. Alle weiteren Komponenten des Bremssystems 1 sind identisch mit der in Fig. 1 gezeigten Ausführungsform.

Das Abschaltventil 22 ist als ein elektrisch steuerbares 3/2-Wegeventil ausgeführt, das in Abhängigkeit eines Abschaltsignals SZ zwischen zwei Abschaltventil-Schaltstellungen Z1, Z2 umgeschaltet werden kann. In einer ersten Abschaltventil-Schaltstellung Z1 ist die Redundanz-Druckleitung 21 mit einem Entlüftungsanschluss 23 verbunden, so dass der Inverter-Steuerdruck pI vom Inverter-Steuerventil 15 nicht an das Vorderachs-Umschaltventil 14a übertragen wird. Der zweite Vorderachs-Umschaltventil-Eingang 14a2 ist demnach drucklos. Bei Umschalten des Vorderachs-Umschaltventils 14a in die zweite Umschaltventil-Schaltstellung X2 bleiben die Betriebsbremsen 3 an der Vorderachse 6a somit ebenfalls drucklos und werden somit nicht zugespannt. Ein redundantes Umsetzen einer automatisiert vorgegebenen Assistenz-Bremsvorgabe VA über die Betriebsbremsen 3 der Vorderachse 6a in der zweiten Rückfallebene ist somit bei eingestellter erster Abschaltventil-Schaltstellung Z1 nicht möglich.

In einer zweiten Abschaltventil-Schaltstellung Z2 des Abschaltventils 22 wird die Redundanz-Druckleitung 21 mit dem Inverter-Ausgang 16 druckleitend verbunden, so dass - wie in dem Bremssystem 1 gemäß Fig. 1 - ein redundanter Betrieb gemäß obiger Beschreibung erfolgen kann, in dem der Inverter-Steuerdruck pI gemäß der Assistenz-Bremsvorgabe VA in der zweiten Rückfallebene auch an das Vorderachs-Umschaltventil 14a geleitet wird.

Die jeweilige Abschaltventil-Schaltstellung Z1, Z2 wird hierbei von dem Parkbrems-Steuermodul 18 über das Abschaltsignal SZ vorgegeben, so dass vorgegeben werden kann, ob und wann in der zweiten Rückfallebene redundant eingegriffen werden soll. Die Abschaltfunktion kann beispielsweise dann vorteilhaft sein, wenn das Fahrzeug 100 für einen längeren Zeitraum abgestellt wird und demnach ein Abbremsen des Fahrzeuges 100 über die Vorderachse 6a nicht zwingend nötig ist, da das Fahrzeug 100 bereits über die Federspeicherbremsen 8 sowie ggf. den Anhänger 200 im Stillstand gehalten wird. Durch ein Umschalten in die erste Abschaltventil-Schaltstellung Z1 in einer derartigen Situation kann beispielsweise verhindert werden, dass bei möglichen Leckagen in den Betriebsbremsen 3 das Druckmittel entweichen kann, wenn diese im Stillstand dauerhaft mit einem Betriebsbrems-Bremsdruck pBa, pBb zugespannt werden.

Ist das Umschaltventil 14a in Fig. 3 als 3/2-Wegeventil 40b ausgeführt, kann die Abschaltfunktion auch bereits durch das Umschaltventil 14a umgesetzt werden, indem im Stillstand bzw. bei dauerhaftem Abstellen die erste Umschaltventil-Schaltstellung X1 eingestellt wird, die in dem Fall der ersten Abschaltventil-Schaltstellung Z1 entspricht. Ohne eine Fahrerbetätigung wird der erste Umschaltventil-Eingang 14a1 demnach über das Betriebsbremsventil 13 entlüftet, was in Fig. 3 dem Verbinden der Redundanz-Druckleitung 21 mit dem Entlüftungsanschluss 23 entspricht. Somit kann in einer derartigen Ausführungsform die Abschaltfunktion ohne ein zusätzliches Ventil lediglich mit dem 3/2-Wegeventil 40b als Umschaltventil 14a erfolgen.

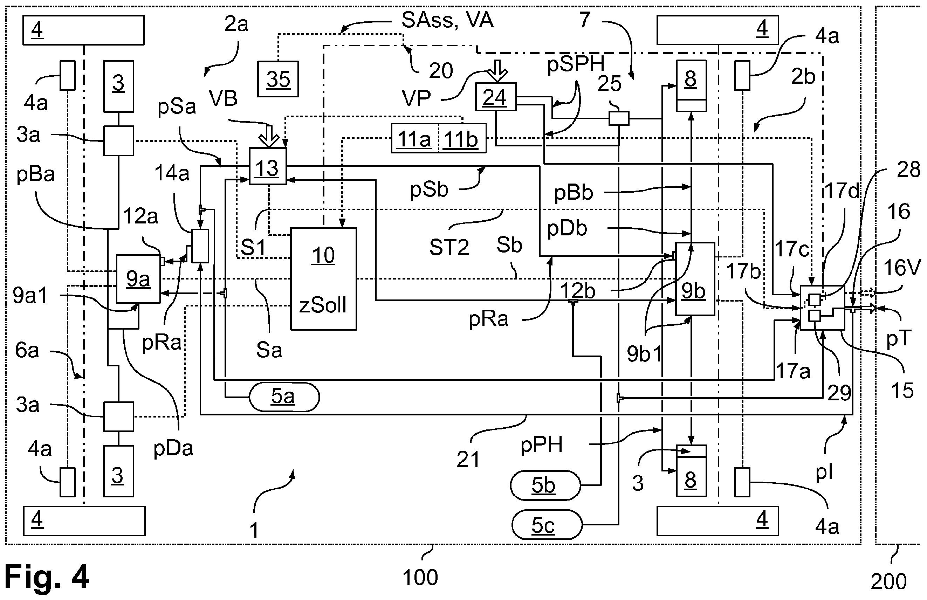

Gemäß Fig. 4 ist eine weitere Ausführungsform des elektronisch steuerbaren Bremssystems 1 dargestellt, wobei sich diese Ausführungsform von dem Bremssystem 1 gemäß Fig. 1 dadurch unterscheidet, dass der Parkbremskreis 7 nicht durch eine elektrisch gesteuerte Parkbremse ausgebildet wird sondern durch eine pneumatisch gesteuerte Parkbremse. Demnach ist in dieser Ausführungsform kein Parkbrems-Steuermodul 18 vorgesehen, das den Parkbrems-Bremsdruck pPH an das Inverter-Steuerventil 15 sowie die Federspeicherbremsen 8 vorgibt. Um in diesem Parkbremskreis 7 eine Bremsung bewirken zu können, ist vom Fahrer manuell eine Parkbrems-Bremsvorgabe VP über ein Parkbremsventil 24 vorzugeben, das einen der Parkbrems-Bremsvorgabe VP entsprechenden Parkbrems-Steuerdruck pSPH an ein Relaisventil 25 aussteuert. Das Relaisventil 25 sorgt für eine Luftmengenverstärkung und gibt diesen luftmengenverstärkten Parkbrems-Steuerdruck pSPH als Parkbrems-Bremsdruck pPH an die Federspeicherbremsen 8 aus, um an diesen eine entsprechende Bremsung zu bewirken.

Der vom Parkbremsventil 24 ausgegebene Parkbrems-Steuerdruck pSPH oder ein davon abhängiger Druck wird zudem an den dritten Inverter-Eingang 17c des Inverter-Ventils 15 übertragen, im Inverter-Steuerventil 15 durch das inverse Relaisventil 26 invertiert und über den Inverter-Ausgang 16 an den zweiten Vorderachs-Umschaltventil-Eingang 14a2 des Vorderachs-Umschaltventils 14a ausgesteuert, so dass wie im vorherigen Ausführungsbeispiel je nach Umschaltventil-Schaltstellung X1, X2 am Vorderachs-Umschaltventil-Ausgang 14a3 der entsprechende Vorderachs-Redundanzdruck pRa an den Vorderachs-Redundanzanschluss 12a ausgegeben wird. Demnach kann der Fahrer manuell über das Parkbremsventil 24 in die Bremsung eingreifen, falls mindestens einer der Betriebsbremskreise 2a, 2b ausgefallen ist.

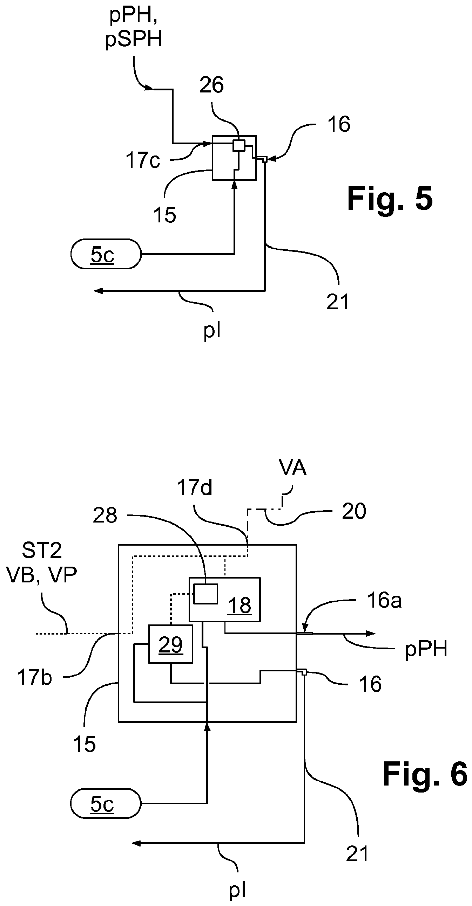

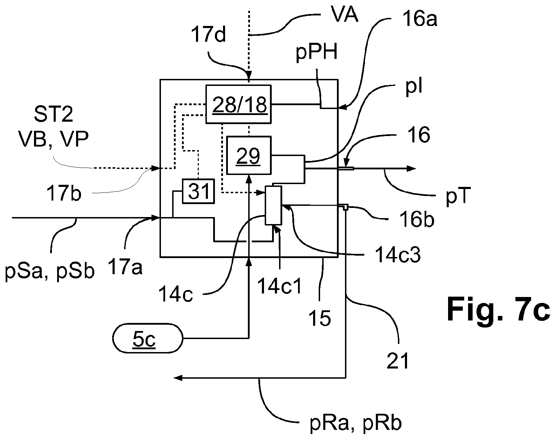

Eine Umsetzung der automatisiert angeforderten Assistenz-Bremsvorgabe VA, wenn das Betriebsbrems-Steuermodul 10 ausgefallen ist, kann in dem Bremssystem 1 gemäß Fig. 4 lediglich über das Inverter-Steuerventil 15 erfolgen, indem die Assistenz-Bremsvorgabe VA ausgehend vom CAN-Bus 20 an dieses übertragen wird und in dem Fall über eine entsprechende im Inverter-Steuerventil 15 integrierte Elektronik (vgl. Fig. 6 oder 7c), z.B. einem Inverter-Steuermodul 28, und das Vorsteuermodul 29 parallel zu der zu Fig. 1 beschriebenen Invertierung in einen Inverter-Steuerdruck pI umgesetzt wird. Die Betriebsbrems-Bremsvorgabe VB, die über das Betriebsbremsventil 13 vorgegeben wird, kann bei einem elektrischen Ausfall umgesetzt werden, indem beispielsweise die Betriebsbrems-Bremsvorgabe VB über ein zweites Inverter-Steuersignal ST2 vom Betriebsbremsventil 13 an den zweiten Inverter-Eingang 17b übertragen wird - beispielsweise über ein (Bus-)Netzwerk oder eine Direktverbindung oder dgl. - um über die im Inverter-Steuerventil 15 integrierte Elektronik (vgl. Fig. 6 oder 7c), z.B. dem Inverter-Steuermodul 28, und das Vorsteuermodul 29 analog zur Assistenz-Bremsvorgabe VA den entsprechenden Inverter-Steuerdruck pI zu erzeugen. Die Übertragung des ersten Inverter-Steuersignals ST1 an den zweiten Inverter-Eingang 17b entfällt in diesem Fall. Um dies auch bei einem elektrischen Ausfall der Betriebsbremskreise 2a, 2b und ggf. auch der ersten Energiequelle 11a zu ermöglichen, sind das Betriebsbremsventil 13 und auch das Inverter-Steuerventil 15 redundant z.B. über die zweite Energiequelle 11b mit Energie zu versorgen.

In allen beschriebenen Ausführungsformen wird somit erreicht, dass bei einem elektrischen Ausfall in mindestens einem der Betriebsbremskreise 2a, 2b, d.h. für den Fall, dass die Druckmodulatoren 9a, 9b nicht elektrisch vom Betriebsbrems-Steuermodul 10 gesteuert einen entsprechenden Betriebsbrems-Bremsdrucks pBa, pBb aussteuern können, mindestens eine Rückfallebene ausgebildet wird, in der die Betriebsbremsen 3 an der Vorderachse 6a und/oder an der Hinterachse 6b in Abhängigkeit einer im Parkbremskreis 7 vorliegenden manuell vorgegebenen Parkbrems-Bremsvorgabe VP oder automatisiert vorgegebenen Assistenz-Bremsvorgabe VA angesteuert werden. Ggf. kann dem Parkbremskreis 7 auch eine vom elektropneumatischen Betriebsbremsventil 13 elektrisch ausgegebene Betriebsbrems-Bremsvorgabe VB vorliegen. Der der jeweiligen Bremsvorgabe VA, VB, VP entsprechende im Parkbremskreis 7 ausgesteuerte Parkbrems-Bremsdruck pPH (Fig. 1) bzw. Parkbrems-Steuerdruck pSPH (Fig. 4) wird über das Inverter-Steuerventil 15 invertiert und an die Vorderachse 6a bzw. Hinterachse 6b umgeleitet, wobei die Invertierung dafür sorgt, dass im Bedarfsfall eine Bremsung über die Betriebsbremsen 3 zu in etwa derselben Bremswirkung führt wie eine Bremsung mit den Federspeicherbremsen 8 gemäß der vorgegebenen Bremsvorgabe VA, VB, VP.

Unter Umständen kann es auch sinnvoll sein, die Bremsvorgabe VA, VB, VP achsweise zu skalieren, d.h. der Parkbrems-Bremsdruck pPH ist gegenüber dem in Abhängigkeit davon erzeugten Betriebsbrems-Bremsdruck pBa, pBb um einen Faktor kleiner oder größer.

Der vom Inverter-Steuerventil 15 bereitgestellte Inverter-Steuerdruck pI wird in allen Ausführungsbeispielen über das jeweilige Umschaltventil 14a, 14b an die jeweilige Fahrzeugachse 6a, 6b ausgegeben, um ein Umschalten zwischen zwei Rückfallebenen zu ermöglichen und somit dem Fahrer situationsbedingt die Möglichkeit zu geben, über das Betriebsbremsventil 13 bremsend einzugreifen, wobei ggf. eine bereits automatisiert durchgeführte Bremsung vorher kontrolliert beendet wird, um keine Instabilen Fahrzustände zu bewirken.

Das Inverter-Steuerventil 15 ist in den bisherigen Ausführungsformen im Wesentlichen wie ein Anhängersteuerventil 15a mit den entsprechenden Inverter-Eingängen 17a, 17b, 17c und dem Inverter-Ausgang 16, der dem "gelben Kupplungskopf" entspricht, sowie dem Vorratsdruck-Ausgang 16V, der dem "roten Kupplungskopf" entspricht, ausgeführt. Gemäß Fig. 5 kann aber in der einfachsten Variante auch vorgesehen sein, dass das Inverter-Steuerventil 15 lediglich aus einem inversen Relaisventil 26 besteht, dem über den dritten Inverter-Eingang 17c der Parkbrems-Bremsdruck pPH oder der Parkbrems-Steuerdruck pSPH wie oben beschrieben zugeführt wird. Das inverse Relaisventil 26 invertiert den Parkbrems-Bremsdruck pPH oder der Parkbrems-Steuerdruck pSPH entsprechend und gibt über den Inverter-Ausgang 16 den Inverter-Steuerdruck pI an die Redundanz-Druckleitung 21 aus. Der erste und der zweite Inverter-Eingang 17b, 17c können in diesem Ausführungsbeispiel entfallen.

Somit wird in dieser einfachsten Variante von einem bekannten Anhängersteuerventil 15a lediglich die Invertierungsfunktion in das Inverter-Steuerventil 15 übernommen, was beispielsweise dann ausreichend ist, wenn mit dem Inverter-Steuerventil 15 lediglich eine redundante Abbremsung erfolgen soll und nicht vorgesehen ist, darüber einen Anhänger 200 anzusteuern. Optional können über ein zusätzliches Steuermodul sukzessive weitere Funktionalitäten, die den redundanten Bremsbetrieb ausbauen, umgesetzt werden.

In einer rein elektrisch gesteuerten Variante des Inverter-Steuerventils 15, die in Fig. 6 dargestellt ist, kann vorgesehen sein, den Inverter-Steuerdruck pI rein elektronisch zu erzeugen, d.h. die Invertierung elektronisch durchzuführen. Dazu ist das Parkbrems-Steuermodul 18 im Inverter-Steuerventil 15 angeordnet und über den zweiten Inverter-Eingang 17b oder einen zusätzlichen Inverter-Eingang wird dem Inverter-Steuerventil 15 die Parkbrems-Bremsvorgabe VP bzw. das Parkbrems-Betätigungssignal S2 und/oder die Betriebsbrems-Bremsvorgabe VB bzw. das Betriebsbrems-Betätigungssignal S1 über das zweite Inverter-Steuersignal ST2, das über ein vom CAN-Bus 20 abweichendes (Bus-)Netzwerk oder über eine Direktverbindung ausgehend vom Betriebsbremsventil 13 oder von der Parkbrems-Betätigungsvorrichtung 19 übertragen wird, zugeführt. Über einen vierten Inverter-Eingang 17d kann weiterhin die Assistenz-Bremsvorgabe VA bzw. das Assistenz-Steuersignal SAss zugeführt werden, das über den CAN-Bus 20 im Fahrzeug 100 übertragen wird. Das Parkbrems-Steuermodul 18 erzeugt in Abhängigkeit einer dieser Bremsvorgaben VA, VB, VP den Parkbrems-Bremsdruck pPH und gibt diesen über einen zusätzlichen Parkbrems-Ausgang 16a am Inverter-Steuerventil 15 an die Federspeicherbremsen 8 aus, um eine Bremsung im Parkbremskreis 7 bewirken zu können. Das Vorsteuermodul 29 im Inverter-Steuerventil 15 erzeugt gesteuert vom im Parkbrems-Steuermodul 18 integrierten Inverter-Steuermodul 28 in Abhängigkeit der jeweiligen Bremsvorgabe VA, VB, VP einen zum Parkbrems-Bremsdruck pPH inversen Inverter-Steuerdruck pl, der über den Inverter-Ausgang 16 an das jeweilige Umschaltventil 14a, 14b an den Fahrzeugachsen 6a, 6b zur Umsetzung der Bremsung mit den Betriebsbremsen 3 ausgegeben wird.

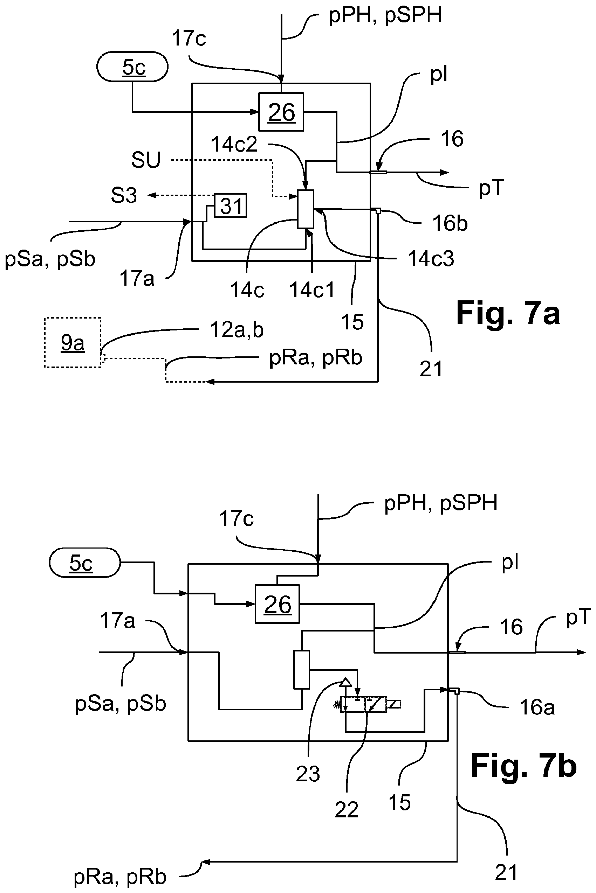

Gemäß weiterer Ausführungsformen des Inverter-Steuerventils 15, die in den Figuren 7a, 7b und 7c dargestellt sind, ist in dem Inverter-Steuerventil 15 ein Inverter-Umschaltventil 14c integriert, wobei das Inverter-Umschaltventil 14c dieselbe Aufgabe und Funktionalität übernimmt wie die in den vorherigen Ausführungsbeispielen genannten Umschaltventile 14a, 14b an den jeweiligen Fahrzeugachsen 6a, 6b. Das Inverter-Umschaltventil 14c kann hierbei wie auch in den vorherigen Ausführungsformen als Wechselventil 40a (s. Fig, 2a) oder als elektrisch steuerbares 3/2-Wegeventil 40b (s. Fig. 2b und 2c) ausgeführt sein. In den Figuren 7a bis 7c sind der Übersichtlichkeit halber lediglich die gegenüber den vorherigen Ausführungsformen abweichenden Komponenten im Inverter-Steuerventil 15 dargestellt.

Gemäß Fig. 7a ist demnach vorgesehen, dem Inverter-Umschaltventil 14c über einen ersten Inverter-Umschaltventil-Eingang 14c1 den vom Betriebsbremsventil 13 aufgrund der Betriebsbrems-Bremsvorgabe VB ausgesteuerten Betriebsbrems-Steuerdruck pSa, pSb , vorzugsweise den Vorderachs-Betriebsbrems-Steuerdruck pSa, vorzugeben, der wie in dem Bremssystem 1 gemäß Fig. 1 oder 4 über den ersten Inverter-Eingang 17a an das Inverter-Steuerventil 15 übertragen wird, um den Anhänger 200 in Abhängigkeit vom Vorderachs-Betriebsbrems-Steuerdruck pSa abzubremsen.

An einen zweiten Inverter-Umschaltventil-Eingang 14c2 des Inverter-Umschaltventils 14c wird der von dem inversen Relaisventil 26 im Inverter-Steuerventil 15 aus dem Parkbrems-Druckmittelvorrat 5c erzeugte Inverter-Steuerdruck pI vorgegeben. Das inverse Relaisventil 26 erzeugt den Inverter-Steuerdruck pI gemäß dieser Ausführungsform in Abhängigkeit des an dem dritten Inverter-Eingang 17c anliegenden Parkbrems-Bremsdruckes pPH (Fig. 1) oder Parkbrems-Steuerdruckes pSPH (Fig. 4) durch eine Invertierung wie bereits zu den anderen Ausführungsbeispielen beschrieben. Der erzeugte Inverter-Steuerdruck pI wird anschließend an den zweiten Inverter-Umschaltventil-Eingang 14c2 sowie auch an den Inverter-Ausgang 16 - d.h. den "gelben Kupplungskopf" eines Anhängersteuerventils 15a - übertragen, um diesen als Anhänger-Steuerdruck pT an ein Bremssystem mit Betriebsbremsen im angehängten Anhänger 200 vorgeben zu können.

An einen Inverter-Umschaltventil-Ausgang 14c3 des Inverter-Umschaltventils 14c werden je nach Umschaltventil-Schaltstellung X1, X2 wahlweise die an den Inverter-Umschaltventil-Eingängen 14c1, 14c2 anliegenden Drücke pl, pSa, pSb nach der oben beschriebenen Systematik, d.h. automatisiert über das Wechselventil 40a oder aktiv gesteuert über das 3/2-Wegeventil 40b, ausgegeben. Der Inverter-Umschaltventil-Ausgang 14c3 ist mit einem Redundanz-Ausgang 16b des Inverter-Steuerventils 15 verbunden, um den vom Inverter-Umschaltventil-Ausgang 14c3 wahlweise ausgegebenen Druck pl, pSa, pSb für eine Ansteuerung der Betriebsbremsen 3 über den Druckmodulator 9a, 9b ausgeben zu können.

In dieser Ausführung des Inverter-Steuerventils 15 ist die Redundanz-Druckleitung 21 an den Redundanz-Ausgang 16b angeschlossen, um darüber für eine Einspeisung des wahlweise ausgegebenen Druckes pl, pSa, pSb in den mindestens einen Betriebsbremskreis 2a, 2b zu sorgen. Die Redundanz-Druckleitung 21 ist dazu direkt mit dem Redundanzanschluss 12a, 12b des jeweiligen Druckmodulators 9a, 9b verbunden, um als Redundanzdruck pRa, pRb den am Redundanz-Ausgang 16b des Inverter-Steuerventils 15 ausgegebenen Druck - d.h. wahlweise den Inverter-Steuerdruck pI oder den Betriebsbrems-Steuerdruck pSa, pSb - zu verwenden. In Fig. 7a ist beispielhaft lediglich der Vorderachs-Druckmodulator 9a dargestellt.

Je nachdem, ob in Anhängigkeit des Inverter-Steuerdruckes pI im redundanten Bremsbetrieb lediglich eine der Fahrzeugachsen 6a, 6b über den entsprechenden Betriebsbremskreis 2a, 2b redundant abgebremst werden soll, kann die Redundanz-Druckleitung 21 lediglich für eine Einspeisung des Inverter-Steuerdruckes pI in einen der Betriebsbremskreise 2a, 2b sorgen. Der oder die jeweils andere Betriebsbremskreise 2a, 2b können dann nicht redundant über die vom Inverter-Steuerventil 15 umgeleitete Bremsvorgabe abgebremst werden

Die Einstellung der jeweiligen Umschaltventil-Schaltstellung X1, X2 des Inverter-Umschaltventils 14c erfolgt je nach Ausführung im Falle eines Wechselventils 40a automatisch oder im Falle eines 3/2-Wegeventils 40b aktiv gesteuert über das Umschaltsignal SU, wie bereits zu den vorherigen Ausführungsformen beschrieben. Vorteilhafterweise kann das Umschaltsignal SU, wie in Fig. 7a angedeutet, in Abhängigkeit der Messung des Drucksensors 31 - wie auch in dem Ausführungsbeispiel gemäß Fig. 2c - erfolgen. D.h. beispielsweise im Parkbrems-Steuermodul 18 wird anhand des Bremswunsch-Signals S3 ausgewertet, ob eine manuell vorgegebenen Betriebsbrems-Bremsvorgabe VB vorliegt und anhand dessen das in dem Fall als 3/2-Wegeventil 40b ausgeführte Inverter-Umschaltventil 14c angesteuert und in die entsprechende Umschaltventil-Schaltstellung X1, X2 geschaltet.

Wird demnach vom Fahrer über das Betriebsbremsventil 13 eine Betriebsbrems-Bremsvorgabe VB erzeugt und liegt ein elektrischer Ausfall in den Betriebsbremskreisen 2a, 2b vor, liegt der Betriebsbrems-Steuerdruck pSa, pSb am ersten Inverter-Eingang 17a an, was vom Drucksensor 31 gemessen werden kann. Daraufhin wird das Inverter-Umschaltventil 14c aktiv über das Umschaltsignal SU in die erste Umschaltventil-Schaltstellung X1 geschaltet, so dass der Betriebsbrems-Steuerdruck pSa, pSb gemäß der Betriebsbrems-Bremsvorgabe VB an den jeweiligen Redundanzanschluss 12a, 12b des jeweiligen Druckmodulators 9a, 9b als Redundanzdruck pRa, pRb ausgegeben werden kann. Dadurch kann auf die erste Rückfallebene gemäß obiger Beschreibung zurückgegriffen werden. Eine möglicherweise vorher automatisiert angeforderte Bremsung VA in der zweiten Rückfallebene über den Parkbrems-Bremskreis 7, d.h. in der zweiten Umschaltventil-Schaltstellung X2, wird demnach kontrolliert abgebrochen.

Gemäß Fig. 7b ist zusätzlich zu dem Inverter-Umschaltventil 14c auch das Abschaltventil 22 im Inverter-Steuerventil 15 integriert, um wie gemäß der Ausführung in Fig. 3 eine Abschaltfunktion realisieren zu können, die gemäß dieser Ausführung identisch ausgebildet ist und in Abhängigkeit der Abschaltventil-Schaltstellung Z1, Z2 festlegt, ob der Inverter-Steuerdruck pI in der zweiten Umschaltventil-Schalstellung X2 - und hier auch der Betriebsbrems-Steuerdruck pSa, pSb in der ersten Umschaltventil-Schaltstellung X1 - über die Redundanz-Druckleitung 21 an den jeweiligen Betriebsbremskreis 2a, 2b übertragen wird oder nicht. Bei einer vom Fahrer manuell vorgegebenen Betriebsbrems-Bremsvorgabe VB ist hierbei vorzugsweise standardmäßig vorgesehen, die zweite Abschaltventil-Schaltstellung Z2 einzustellen, um den Fahrerbremswunsch in jedem Fall über die Betriebsbremskreise 2a, 2b umsetzen zu können, unabhängig von einem elektrischen Ausfall in den Betriebsbremskreisen 2a, 2b. Ist das Inverter-Umschaltventil 14c als 3/2-Wegeventil 40b ausgeführt, kann die Abschaltfunktion statt über das Abschaltventil 22 durch eine entsprechende Ansteuerung auch durch das Inverter-Umschaltventil 14c erreicht werden - wie bereits oben zu Fig. 3 beschrieben.

Durch die konstruktiven Ausgestaltungen des Inverter-Steuerventils 15 gemäß den Figuren 7a und 7b wird also erreicht, dass keine Umschaltventile 14a, 14b bzw. kein Abschaltventil 22 mehr an den jeweiligen Fahrzeugachsen 6a, 6b zu positionieren sind sondern eine integrierte, kompakte Lösung im Fahrzeug 100 verbaut werden kann. Dadurch kann eine einfache Nachrüstbarkeit sowie ein geringer Platzbedarf an den Fahrzeugachsen 6a, 6b erreicht werden, da sich die relevanten Komponenten im Wesentlichen im Inverter-Steuerventil 15 befinden und somit in einfacher Weise nachträglich in einem Arbeitsschritt eingebaut werden können, z.B. statt einem herkömmlichen Anhängersteuerventil 15a. Lediglich die Redundanz-Druckleitung 21 zum Inverter-Steuerventil 15 ist demnach neu zu verlegen.

Gemäß Fig. 7c kann vergleichbar zu der Ausführung in Fig. 6 vorgesehen sein, die entsprechende Bremsvorgabe VA, VB, VP elektrisch an das Inverter-Steuerventil 15 zu übertragen. Dazu wird die automatisiert vorgegebene Assistenz-Bremsvorgabe VA ausgehend vom CAN-Bus 20 (vierter Inverter-Eingang 17d) bzw. die Betriebsbrems-/Parkbrems-Bremsvorgabe VB, VP über eine Direktverbindung oder ein weiteres (Bus-)Netzwerk (zweiter Inverter-Eingang 17b) über das zweite Inverter-Steuersignal ST2 an das Inverter-Steuerventil 15 übertragen. Im Inverter-Steuerventil 15 wird aus der jeweiligen Bremsvorgabe VA, VB, VP über das Vorsteuermodul 29 gesteuert von dem Inverter-Steuermodul 28 der Inverter-Steuerdruck pI erzeugt und an den zweiten Inverter-Umschaltventil-Eingang 14c2 des Inverter-Umschaltventils 14c ausgegeben. Alternativ bzw. ergänzend kann - wie auch zu Fig. 6 beschrieben - das Parkbrems-Steuermodul 18 zusammen mit dem Inverter-Steuermodul 28 im Inverter-Steuerventil 15 integriert sein, dann mit entsprechendem Parkbrems-Ausgang 16a zur Ausgabe des darin erzeugten Parkbrems-Bremsdruckes pPH. Das Erzeugen eines Inverter-Steuerdruckes pl, der umgekehrt proportional zu einem im Parkbremskreis 7 aufgrund der jeweiligen Bremsvorgabe VA, VB, VP umsetzbaren Parkbrems-Bremsdruck pPH bzw. Parkbrems-Steuerdruck pSPH ist, wird also auch hier wieder über eine elektronische Ansteuerung des Vorsteuermoduls 29 erreicht. Besonders bevorzugt ist hierbei der Drucksensor 31 im Inverter-Steuerventil 15 integriert, um den Fahrerwunsch zu erkennen und das Inverter-Umschaltventil 14c entsprechend über das im Inverter-Steuerventil 15 integrierte Inverter-Steuermodul 28 oder Parkbrems-Steuermodul 18 situationsabhängig umzuschalten.

Ergänzend kann im Inverter-Steuerventil 15 gemäß Fig. 7c auch ein inverses Relaisventil 26 (nicht dargestellt) angeordnet sein, um im Bedarfsfall ein über den dritten Inverter-Eingang 17c (ebenfalls nicht dargestellt) vorgegebenen Parkbrems-Steuerdruck pSPH oder Parkbrems-Bremsdruck pPH - wie zu den vorherigen Beispielen beschrieben - invertieren zu können, so dass eine weitere Redundanz ausgebildet werden kann. Dies ist dann der Fall, wenn das Parkbrems-Steuermodul 18 nicht im Inverter-Steuerventil 15 integriert ist oder eine pneumatische Parkbremse gemäß Fig. 4 vorgesehen ist und demnach eine nicht-elektrisch gesteuerte Invertierung benötigt wird.

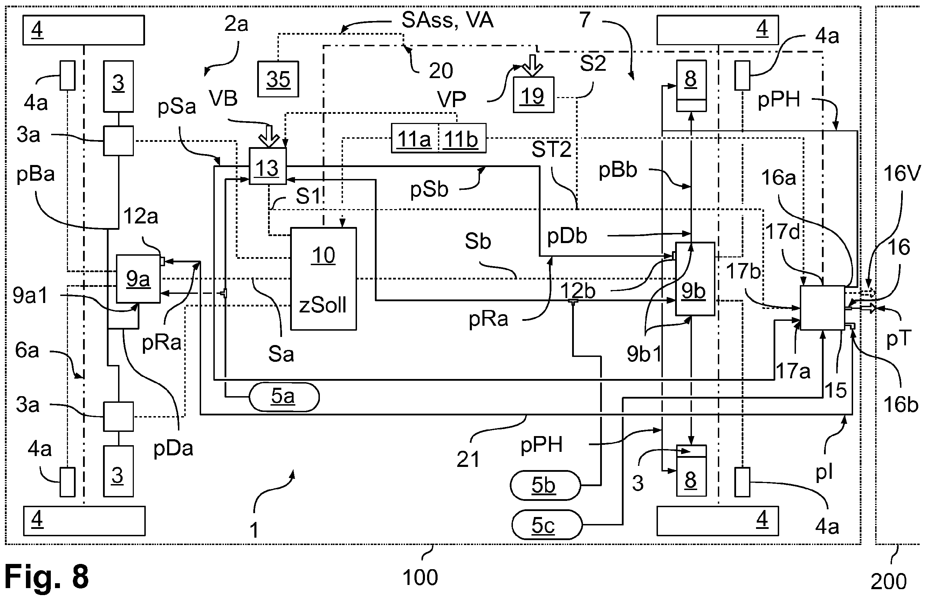

Die Variante des Inverter-Steuermoduls 15 gemäß Fig. 7c kann vorteilhafterweise in einem in Fig. 8 dargestellten Bremssystem 1 verwendet werden. Demnach wird dem Inverter-Steuerventil 15 über den ersten Inverter-Eingang 17a der Vorderachs-Betriebsbrems-Steuerdruck pSa und hier über den zweiten Inverter-Eingang 17b das zweite Inverter-Steuersignal ST2 mit einer vom Betriebsbremsventil 13 elektrisch vorgegebenen Betriebsbrems-Bremsvorgabe VB (Betriebsbrems-Betätigungssignal S1) und von der Parkbrems-Betätigungseinrichtung 19 elektrisch vorgegebenen Parkbrems-Bremsvorgabe VP (Parkbrems-Betätigungssignal S2) übertragen. Über den vierten Inverter-Eingang 14d wird die über den CAN-Bus 20 übermittelte automatisiert angeforderte Assistenz-Bremsvorgabe VA an das Inverter-Steuerventil 15 übertragen.

Im Inverter-Steuerventil 15 wird die jeweilige elektrisch übertragene Bremsvorgabe VA, VB, VP gesteuert vom Parkbrems-Bremsmodul 18 und/oder Inverter-Steuermodul 28 von dem Vorsteuermodul 29 in einen Inverter-Steuerdruck pI umgesetzt, um diesen sowohl als Anhänger-Steuerdruck pT über den Inverter-Ausgang 16 an einen Anhänger 200 und je nach Umschaltventil-Schaltstellung X1, X2 des Inverter-Umschaltventils 14c über den Redundanz-Ausgang 16b und die Redundanz-Druckleitung 21 an den Vorderachs-Betriebsbremskreis 2a auszugeben. Durch die über das zweite Inverter-Steuersignal ST2 übertragene Betriebsbrems-Bremsanforderung VB kann diese also auch an den Anhänger 200 als Anhänger-Steuerdruck pT übertragen werden.

Das jeweilige im Inverter-Steuerventil 15 integrierte Steuermodul 18, 28 kann hierbei festlegen, ob eine Umsetzung der über den vierten Inverter-Eingang 14d bzw. den zweiten Inverter-Eingang 14b elektrisch vorgegebenen Bremsvorgaben VA, VB, VP erfolgen soll oder die über den ersten Inverter-Eingang 17a in Form des Vorderachs-Betriebsbrems-Steuerdruckes pSa vorgegebene Bremsvorgabe. Dies kann entweder durch eine aktive Ansteuerung des in dem Fall als 3/2-Wegeventil 40b ausgeführten Inverter-Umschaltventils 14c insbesondere in Abhängigkeit des vom Drucksensor 31 ausgegebenen Bremswunsch-Signals S3 erfolgen und/oder dadurch, dass bei entsprechendem Bremswunsch-Signal S3 durch kontrolliertes Beenden der bereits vorgegebenen automatisiert angeforderten Bremsung ein geringer Inverter-Steuerdruck pI vom Vorsteuermodul 29 erzeugt wird, was im Falle eines als Wechselventil 40a ausgeführten Inverter-Umschaltventils 14c dazu führt, dass dieses automatisch in die erste Umschaltventil-Schaltstellung X1 geschaltet wird und dadurch der Vorderachs-Betriebsbrems-Steuerdruck pSa vom Inverter-Steuerventil 15 über den Redundanz-Ausgang 16b ausgesteuert wird.

Analog kann dieser Aufbau auch in einem Bremssystem 1 vergleichbar zu Fig. 4 vorgesehen sein, d.h. mit einer pneumatischen Parkbremse, über die auch der Parkbrems-Steuerdruck pSPH an das Inverter-Steuerventil 15, das in dem Fall ein inverses Relaisventil 26 und einen dritten Inverter-Eingang 17c aufweist, übertragen werden kann. Dadurch kann gewährleistet werden, dass in einem Bremssystem 1 mit einer pneumatischen Parkbremse auch eine automatisiert angeforderte Assistenz-Bremsvorgabe VA über das Inverter-Steuerventil 15 und das Inverter-Umschaltventil 14c an den Vorderachs-Betriebsbremskreis 2a übertragen werden kann, wenn in diesem ein elektrischer Ausfall vorliegt und die Assistenz-Bremsvorgabe VA somit nicht über das Betriebsbrems-Steuermodul 10 direkt in den Vorderachs-Betriebsbremskreis 2a eingesteuert werden kann. Dies ist insbesondere auch dann vorteilhaft, wenn der Fahrer bei einem elektrischen Ausfall nicht selbst über eine manuelle Bremsvorgabe VB, VP über das Betriebsbremsventil 13 oder das Parkbremsventil 24 eingreift und diese daher nicht über das Inverter-Steuerventil 15 redundant an den Vorderachs-Betriebsbremskreis 2a übertragen wird.

### Bezugszeichenliste (Bestandteil der Beschreibung)

- 1: Bremssystem
- 2a: Vorderachs-Betriebsbremskreis
- 2b: Hinterachs-Betriebsbremskreis
- 3: Betriebsbremsen
- 3a: ABS-Steuerventile
- 4: Räder
- 4a: Raddrehzahlsensoren
- 5a: Vorderachs-Druckmittelvorrat
- 5b: Hinterachs-Druckmittelvorrat
- 5c: Parkbrems-Druckmittelvorrat
- 6a: Vorderachse
- 6b: Hinterachse
- 7: Parkbremskreis
- 8: Federspeicherbremsen
- 9a: Vorderachs-Druckmodulator
- 9a1: Vorderachs-Druckmodulator-Ausgang
- 9b: Hinterachs-Druckmodulator
- 9b1: Hinterachs-Druckmodulator-Ausgang
- 10: Betriebsbrems-Steuermodul
- 11a: erste Energiequelle
- 11b: zweite Energiequelle
- 12a: pneumatischer Vorderachs-Redundanzanschluss
- 12b: pneumatischer Hinterachs-Redundanzanschluss
- 13: Betriebsbremsventil
- 14a: Vorderachs-Umschaltventil
- 14a1: erster Vorderachs-Umschaltventil-Eingang
- 14a2: zweiter Vorderachs-Umschaltventil-Eingang
- 14a3: Vorderachs-Umschaltventil-Ausgang
- 14b: Hinterachs-Umschaltventil
- 14b1: erster Hinterachs-Umschaltventil-Eingang
- 14b2: zweiter Hinterachs-Umschaltventil-Eingang
- 14b3: Hinterachs-Umschaltventil-Ausgang
- 14c: Inverter-Umschaltventil
- 14c1: erster Inverter-Umschaltventil-Eingang
- 14c2: zweiter Inverter-Umschaltventil-Eingang
- 14c3: Inverter-Umschaltventil-Ausgang
- 15: Inverter-Ventil
- 15a: Anhängersteuerventil
- 16: Inverter-Ausgang
- 16a: Parkbrems-Ausgang
- 16b: Redundanz-Ausgang
- 16V: Vorratsdruck-Ausgang
- 17a: erster Inverter-Eingang
- 17b: zweiter Inverter-Eingang
- 17c: dritter Inverter-Eingang
- 17d: vierter Inverter-Eingang
- 18: Parkbrems-Steuermodul
- 19: Parkbrems-Betätigungsvorrichtung
- 20: CAN-Bus
- 21: Redundanz-Druckleitung
- 22: Abschaltventil
- 23: Entlüftungsanschluss
- 24: Parkbremsventil
- 25: Relaisventil
- 26: inverses Relaisventil
- 28: Inverter-Steuermodul
- 29: Vorsteuermodul
- 31: Drucksensor
- 35: Assistenz-Steuermodul
- 40a: Wechselventil
- 40b: 3/2-Wegeventil
- 100: Fahrzeug
- 200: Anhänger
- pBa: Vorderachs-Bremsdruck
- pBb: Hinterachs-Bremsdruck
- pDa: Vorderachs-Druckmodulator-Ausgangsdruck
- pDb: Hinterachs-Druckmodulator-Ausgangsdruck
- pl: Inverter-Steuerdruck
- pPH: Parkbrems-Bremsdruck
- pRa: Vorderachs-Redundanzdruck
- pRb: Hinterachs-Redundanzdruck
- pSa: Vorderachs-Betriebsbrems-Steuerdruck
- pSb: Hinterachs-Betriebsbrems-Steuerdruck
- pSPH: Parkbrems-Steuerdruck
- pSU: Umschalt-Steuerdruck
- pT: Anhänger-Steuerdruck
- S1: Betriebsbrems-Betätigungssignal
- S2: Parkbrems-Betätigungssignal
- S3: Bremswunsch-Signal
- SAss: Assistenz-Steuersignal
- Sa: Vorderachs-Betriebsbrems-Steuersignal
- Sb: Hinterachs-Betriebsbrems-Steuersignal
- SD: Diagnose-Signal
- ST1: erstes Inverter-Steuersignal
- ST2: zweites Inverter-Steuersignal
- SU: Umschaltsignal
- SZ: Abschaltsignal
- VA: Assistenz-Bremsvorgabe
- VB: Betriebsbrems-Bremsvorgabe
- VP: Parkbrems-Bremsvorgabe
- X1: erste Umschaltventil-Schaltstellung
- X2: zweite Umschaltventil-Schaltstellung
- Z1: erste Abschaltventil-Schaltstellung
- Z2: zweite Abschaltventil-Schaltstellung
- zSoll: Fahrzeug-Soll-Verzögerung

## Patentansprüche

1. Elektronisch steuerbares Bremssystem (1), insbesondere elektronisch steuerbares pneumatisches Bremssystem (1), für ein Fahrzeug (100), insbesondere Nutzfahrzeug (100), mindestens aufweisend:
- mindestens einen Betriebsbremskreis (2a, 2b) mit Betriebsbremsen (3) und einem Betriebsbrems-Steuermodul (10), wobei den Betriebsbremsen (3) ein Betriebsbrems-Bremsdruck (pBa, pBb) zuführbar ist und das Betriebsbrems-Steuermodul (10) ausgebildet ist, in Abhängigkeit einer Bremsvorgabe (VA, VB, VP) ein Betriebsbrems-Steuersignal (Sa, Sb) zu erzeugen, wobei der Betriebsbrems-Bremsdruck (pBa, pBb) in Abhängigkeit des Betriebsbrems-Steuersignals (Sa, Sb) erzeugt und an die Betriebsbremsen (3) vorgegeben werden kann zum von dem Betriebsbrems-Steuermodul (10) elektrisch gesteuerten Umsetzen der Bremsvorgabe (VA, VB, VP) über den mindestens einen Betriebsbremskreis (2a, 2b),
- einem Parkbremskreis (7) mit Federspeicherbremsen (8), wobei den Federspeicherbremsen (8) ein Parkbrems-Bremsdruck (pPH) zuführbar ist, wobei der Parkbrems-Bremsdruck (pPH) in Abhängigkeit der Bremsvorgabe (VA, VB, VP) erzeugt und an die Federspeicherbremsen (8) vorgegeben werden kann zum Umsetzen der Bremsvorgabe (VA, VB, VP) über den Parkbremskreis (7),
- einem Inverter-Steuerventil (15; 15a) mit einem Inverter-Ausgang (16) und/oder einem Redundanz-Ausgang (16b), wobei das Inverter-Steuerventil (15; 15a) ausgebildet ist, einen Inverter-Steuerdruck (pl) zu erzeugen und über den Inverter-Ausgang (16) und/oder den Redundanz-Ausgang (16b) auszugeben, wobei der Inverter-Steuerdruck (pl) umgekehrt proportional zu dem Parkbrems-Bremsdruck (pPH) und/oder einem den Parkbrems-Bremsdruck (pPH) vorgebenden Parkbrems-Steuerdruck (pSPH) ist, die auszusteuern sind, um die Bremsvorgabe (VA, VB, VP) im Parkbremskreis (7) über die Federspeicherbremsen (8) umzusetzen, wobei in dem Bremssystem (1) weiterhin ein Umschaltventil (14a, 14b, 14c) angeordnet ist, wobei das Umschaltventil (14a, 14b, 14c) zwei Umschaltventil-Schaltstellungen (X1, X2) aufweist, wobei bei Vorliegen einer von einem Fahrer manuell über ein Betriebsbremsventil (13) angeforderten Betriebsbrems-Vorgabe (VB) eine erste Umschaltventil-Schaltstellung (X1, X2) des Umschaltventils (14a, 14b, 14c) einstellbar ist, in der der Betriebsbrems-Bremsdruck (pBa, pBb) in Abhängigkeit der über das Betriebsbremsventil (13) vorgegebenen Betriebsbrems-Bremsvorgabe (VB) vorgebbar ist und sonst eine zweite Umschaltventil-Schaltstellung (X1, X2) einstellbar ist, in der der Betriebsbrems-Bremsdruck (pBa, pBb) in Abhängigkeit des von dem Inverter-Steuerventil (15; 15a) vorgegebenen Inverter-Steuerdruckes (pl) vorgebbar ist.

2. Elektronisch steuerbares Bremssystem (1) nach Anspruch 1, **dadurch gekennzeichnet, dass** ein Drucksensor (31) im Bremssystem (1), vorzugsweise im Inverter-Steuerventil (15; 15a), vorgesehen ist, wobei der Drucksensor (31) ausgebildet ist, einen von dem Betriebsbremsventil (13) infolge der Betriebsbrems-Bremsvorgabe (VB) ausgegebenen Betriebsbrems-Steuerdruck (pSa, pSb) zu messen und in Abhängigkeit der Messung ein Bremswunsch-Signal (S3) auszugeben, wobei das Umschaltventil (14a, 14b, 14c) ausgebildet ist, elektrisch gesteuert in Abhängigkeit des Bremswunsch-Signals (S3) bei Vorliegen einer von dem Fahrer manuell über das Betriebsbremsventil (13) angeforderten Betriebsbrems-Vorgabe (VB) in die erste Umschaltventil-Schaltstellung (X1) des Umschaltventils (14a, 14b, 14c) umzuschalten und/oder das Umschaltventil (14a, 14b, 14c) ausgebildet ist, pneumatisch gesteuert durch den Betriebsbrems-Steuerdruck (pSa, pSb) bei Vorliegen einer von einem Fahrer manuell über das Betriebsbremsventil (13) angeforderten Betriebsbrems-Vorgabe (VB) in die erste Umschaltventil-Schaltstellung (X1) umzuschalten..

3. Elektronisch steuerbares Bremssystem (1) nach Anspruch 2, **dadurch gekennzeichnet, dass** das Umschaltventil (14a, 14b, 14c) als ein Wechselventil (40a) oder ein elektrisch oder pneumatisch steuerbares 3/2-Wegeventil (40b) ausgeführt ist,
wobei das Wechselventil (40a) ausgebildet ist, die erste oder die zweite Umschaltventil-Schaltstellung (X1, X2) wahlweise in Abhängigkeit davon einzustellen, ob der Inverter-Steuerdruck (pl) oder der Betriebsbrems-Steuerdruck (pSa, pSb) höher ist, wobei die erste Umschaltventil-Schaltstellung (X1) eingestellt wird, wenn der Betriebsbrems-Steuerdruck (pSa, pSb) höher ist, und
das 3/2-Wegeventil (40b) in Abhängigkeit eines elektrisch vorgegebenen Umschaltsignals (SU) oder eines pneumatisch vorgegebenen Umschalt-Steuerdruckes (pSU) in die erste Umschaltventil-Schaltstellung (X1) oder in die zweite Umschaltventil-Schaltstellung (X2) schaltbar ist, wobei das Umschaltsignal (SU) oder der Umschalt-Steuerdruck (pSU) in Abhängigkeit davon erzeugt werden können, ob eine angeforderte Betriebsbrems-Bremsvorgabe (VB) über das Betriebsbremsventil (13) in dem mindestens einen Betriebsbremskreis (2a, 2b) vorliegt, vorzugsweise in Abhängigkeit des Bremswunsch-Signals (S3) oder des Betriebsbrems-Steuerdruckes (pSa, pSb), zum Umschalten in die erste Umschaltventil-Schaltstellung (X1), wenn eine Betriebsbrems-Bremsvorgabe (VB) über das Betriebsbremsventil (13) vorliegt.

4. Elektronisch steuerbares Bremssystem (1) nach einem der vorhergehenden Ansprüche, **dadurch gekennzeichnet, dass** die Bremsvorgabe eine von einem Assistenz-Steuermodul (35) automatisiert vorgegebene Assistenz-Bremsvorgabe (VA) und/oder eine über eine Parkbrems-Betätigungsvorrichtung (19) oder über ein Parkbremsventil (24) manuell vorgegebene Parkbrems-Bremsvorgabe (VP) und/oder die über das Betriebsbremsventil (13) manuell vorgegebene Betriebsbrems-Bremsvorgabe (VB) ist.

5. Elektronisch steuerbares Bremssystem (1) nach einem der vorhergehenden Ansprüche, **dadurch gekennzeichnet, dass** im Parkbremskreis (7) ein Parkbrems-Steuermodul (18) angeordnet ist zum Ausgeben des Parkbrems-Bremsdruckes (pPH) in Abhängigkeit der dem Parkbremskreis (7) vorgegebenen Bremsvorgabe (VA, VB, VP).

6. Elektronisch steuerbares Bremssystem (1) nach Anspruch 5, **dadurch gekennzeichnet, dass**
- das Parkbrems-Steuermodul (18) mit den Federspeicherbremsen (8) des Parkbremskreises (7) verbunden ist zum pneumatischen Übertragen des Parkbrems-Bremsdruckes (pPH) an die Federspeicherbremsen (8) und/oder
- das Parkbrems-Steuermodul (18) mit dem Inverter-Steuerventil (15; 15a) verbunden ist zum pneumatischen Übertragen des Parkbrems-Bremsdruckes (pPH) oder eines im Parkbrems-Steuermodul (18) erzeugten davon abhängigen Druckes an das Inverter-Steuerventil (15; 15a).

7. Elektronisch steuerbares Bremssystem (1) nach Anspruch 5, **dadurch gekennzeichnet, dass** das Parkbrems-Steuermodul (18) im Inverter-Steuerventil (15) integriert ist und die Bremsvorgabe (VA, VB, VP) elektrisch an das Inverter-Steuerventil (15) übertragen werden kann, wobei das Inverter-Steuerventil (15) ausgebildet ist,
- über das Parkbrems-Steuermodul (18) aus der Bremsvorgabe (VA, VB, VP) den Parkbrems-Bremsdruck (pPH) zu erzeugen und über einen Parkbrems-Ausgang (16a) an die Federspeicherbremsen (8) im Parkbremskreis (7) auszusteuern, und
- über ein Inverter-Steuermodul (28) und ein Vorsteuermodul (29) aus der Bremsvorgabe (VA, VB, VP) den Inverter-Steuerdruck (pl) zu erzeugen und an den Inverter-Ausgang (16) und/oder den Redundanz-Ausgang (16b) auszugeben,
wobei der über den Parkbrems-Ausgang (16a) ausgegebene Parkbrems-Bremsdruck (pPH) umgekehrt proportional zu dem über den Inverter-Ausgang (16) und/oder den Redundanz-Ausgang (16b) ausgegebenen Inverter-Steuerdruck (pl) ist.

8. Elektronisch steuerbares Bremssystem (1) nach Anspruch 4, **dadurch gekennzeichnet, dass** das Parkbremsventil (24) ausgebildet ist, den Parkbrems-Steuerdruck (pSPH) in Abhängigkeit der manuell vorgegebenen Parkbrems-Bremsvorgabe (VP) zu erzeugen und auszugeben.

9. Elektronisch steuerbares Bremssystem (1) nach Anspruch 8, **dadurch gekennzeichnet, dass**
- das Parkbremsventil (24) mit einem Relaisventil (25) verbunden ist und das Relaisventil (25) ausgebildet ist, den Parkbrems-Bremsdruck (pPH) aus dem Parkbrems-Steuerdruck (pSPH) zu erzeugen und das Relaisventil (25) mit den Federspeicherbremsen (8) des Parkbremskreises (7) verbunden ist zum pneumatischen Übertragen des vom Relaisventil (25) ausgesteuerten Parkbrems-Bremsdruckes (pPH) an die Federspeicherbremsen (8) und/oder
- das Parkbremsventil (24) mit dem Inverter-Steuerventil (15; 15a) verbunden ist zum pneumatischen Übertragen des Parkbrems-Steuerdruckes (pSPH) oder eines davon abhängigen Druckes an das Inverter-Steuerventil (15; 15a).

10. Elektronisch steuerbares Bremssystem (1) nach einem der vorhergehenden Ansprüche, **dadurch gekennzeichnet, dass** im Inverter-Steuerventil (15; 15a) ein inverses Relaisventil (26) angeordnet ist zum Invertieren des dem Inverter-Steuerventil (15; 15a) von dem Parkbrems-Steuermodul (18) pneumatisch übertragenen Parkbrems-Bremsdruckes (pPH) und/oder des vom Parkbremsventil (24) pneumatisch übertragenen Parkbrems-Steuerdruckes (pSPH) oder eines davon abhängig erzeugten Druckes zum Erzeugen eines gegenüber dem Parkbrems-Bremsdruck (pPH) und/oder dem Parkbrems-Steuerdruck (pSPH) umgekehrt proportionalen Inverter-Steuerdruckes (pl).

11. Elektronisch steuerbares Bremssystem (1) nach Anspruch 10, **dadurch gekennzeichnet, dass** das Inverter-Steuerventil als ein Anhängersteuerventil (15a) ausgeführt ist, wobei das Anhängersteuerventil (15a) ausgebildet ist, einen vom Parkbrems-Bremsdruck (pPH) und/oder vom Parkbrems-Steuerdruck (pSPH) abhängigen Anhänger-Steuerdruck (pT) zu erzeugen und über den Inverter-Ausgang (16) an einen Anhänger (200) zu übertragen, wobei der Anhänger-Steuerdruck (pT) umgekehrt proportional zum Parkbrems-Bremsdruck (pPH) und/oder zum Parkbrems-Steuerdruck (pSPH) ist und der Anhänger-Steuerdruck (pT) dem Inverter-Steuerdruck (pl) entspricht.

12. Elektronisch steuerbares Bremssystem (1) nach einem der vorhergehenden Ansprüche, **dadurch gekennzeichnet, dass** in dem mindestens einen Betriebsbremskreis (2a, 2b) ein Druckmodulator (9a, 9b) angeordnet ist, wobei der Druckmodulator (9a, 9b) einen Druckmodulator-Ausgang (9a1, 9b1) aufweist und der Druckmodulator (9a, 9b) ausgebildet ist, in Abhängigkeit des Betriebsbrems-Steuersignals (Sa, Sb) ein Druckmodulator-Ausgangsdruck (pDa, pDb) zu erzeugen und über den Druckmodulator-Ausgang (9a1, 9b1) auszugeben, wobei der Druckmodulator-Ausgangsdruck (pDa, pDb) als Betriebsbrems-Bremsdruck (pBa, pBb) an die Betriebsbremsen (3) des mindestens einen Betriebsbremskreises (2a, 2b) übertragbar ist,
wobei der Druckmodulator (9a, 9b) weiterhin einen pneumatischen Redundanzanschluss (12a, 12b) aufweist und dem pneumatischen Redundanzanschluss (12a, 12b) wahlweise der Inverter-Steuerdruck (pl) oder ein von einem elektropneumatischen Betriebsbremsventil (13) aufgrund einer Betriebsbrems-Bremsvorgabe (VB) ausgesteuerter Betriebsbrems-Steuerdruck (pSa, pSb) als Redundanzdruck (pRa, pRb) vorgegeben werden kann, wobei dem Redundanzanschluss (12a, 12b) dazu das Umschaltventil (14a, 14b, 14c) vorgeschaltet ist, wobei das Umschaltventil (14a, 14b, 14c)
- in der ersten Umschaltventil-Schaltstellung (X1) den von dem Betriebsbremsventil (13) aufgrund der Betriebsbrems-Bremsvorgabe (VB) ausgesteuerten Betriebsbrems-Steuerdruck (pSa, pSb) und
- in der zweiten Umschaltventil-Schaltstellung (X2) den im Inverter-Steuerventil (15) erzeugten Inverter-Steuerdruck (pl) als Redundanzdruck (pRa, pRb) an den Redundanzanschluss (12a, 12b) ausgeben kann zum redundanten Ansteuern des Druckmodulators (9a, 9b).

13. Elektronisch steuerbares Bremssystem (1) nach Anspruch 12, **dadurch gekennzeichnet, dass** das Umschaltventil (14a, 14b) in dem mindestens einen Betriebsbremskreis (2a, 2b) angeordnet ist, vorzugsweise an einer dem mindestens einen Betriebsbremskreis (2a, 2b) zugeordneten Fahrzeugachse (6a, 6b), und das Umschaltventil (14a, 14b)
- in der ersten Umschaltventil-Schaltstellung (X1) das Betriebsbremsventil (13) mit dem Redundanzanschluss (12a, 12b) verbindet zum redundanten Vorgeben des Betriebsbrems-Steuerdruckes (pSa, pSb) als Redundanzdruck (pRa, pRb) an den Redundanzanschluss (12a, 12b), und
- in der zweiten Umschaltventil-Schaltstellung (X2) den Inverter-Ausgang (16) des Inverter-Steuerventils (15; 15a) mit dem Redundanzanschluss (12a, 12b) verbindet zum redundanten Vorgeben des Inverter-Steuerdruckes (pl) als Redundanzdruck (pRa, pRb) an den Redundanzanschluss (12a, 12b).

14. Elektronisch steuerbares Bremssystem (1) nach Anspruch 13, **dadurch gekennzeichnet, dass** das Betriebsbremsventil (13) mit einem ersten Umschaltventil-Eingang (14a1, 14b1) des Umschaltventils (14a, 14b) und der Inverter-Ausgang (16) mit einem zweiten Umschaltventil-Eingang (14a2, 14b2) des Umschaltventils (14a, 14b) sowie ein Umschaltventil-Ausgang (14a3, 14b3) des Umschaltventils (14a, 14b) mit dem Redundanzanschluss (12a, 12b) des Druckmodulators (9a, 9b) druckleitend verbunden ist,
wobei in der ersten Umschaltventil-Schaltstellung (X1) der erste Umschaltventil-Eingang (14a1, 14b1) mit dem Umschaltventil-Ausgang (14a3, 14b3) und in der zweiten Umschaltventil-Schaltstellung (X2) der zweite Umschaltventil-Eingang (14a2, 14b2) mit dem Umschaltventil-Ausgang (14a3, 14b3) verbunden ist.

15. Elektronisch steuerbares Bremssystem (1) nach Anspruch 12, **dadurch gekennzeichnet, dass** als Umschaltventil ein Inverter-Umschaltventil (14c) im oder am Inverter-Steuerventil (15; 15a) angeordnet ist und das Inverter-Umschaltventil (14c)
- in der ersten Umschaltventil-Schaltstellung (X1) das Betriebsbremsventil (13) mit dem Redundanz-Ausgang (16b) des Inverter-Steuerventils (15) verbindet, und
- in der zweiten Umschaltventil-Schaltstellung (X2) den im Inverter-Steuerventil (15; 15a) erzeugten Inverter-Steuerdruck (pl) an den Redundanz-Ausgang (16b) ausgibt,
wobei der Redundanz-Ausgang (16b) des Inverter-Steuerventils (15; 15a) mit dem Redundanzanschluss (12a, 12b) des Druckmodulators (9a, 9b) verbunden ist.

16. Elektronisch steuerbares Bremssystem (1) nach Anspruch 15, **dadurch gekennzeichnet, dass** das Betriebsbremsventil (13) mit einem ersten Inverter-Umschaltventil-Eingang (14c1) des Inverter-Umschaltventils (14c) druckleitend verbunden ist und dem zweiten Inverter-Umschaltventil-Eingang (14c2) des Inverter-Umschaltventils (14c) der Inverter-Steuerdruck (pl) zuführbar ist sowie ein Inverter-Umschaltventil-Ausgang (14c3) des Inverter-Umschaltventils (14c) mit dem Redundanz-Ausgang (16b) des Inverter-Steuerventils (15) und der Redundanz-Ausgang (16b) des Inverter-Steuerventils (15) mit dem Redundanzanschluss (12a, 12b) des Druckmodulators (9a, 9b) druckleitend verbunden ist,
wobei in der ersten Umschaltventil-Schaltstellung (X1) der erste Inverter-Umschaltventil-Eingang (14c1) mit dem Inverter-Umschaltventil-Ausgang (14c3) und in der zweiten Umschaltventil-Schaltstellung (X2) der zweite Inverter-Umschaltventil-Eingang (14c2) mit dem Inverter-Umschaltventil-Ausgang (14c3) druckleitend verbunden ist.

17. Elektronisch steuerbares Bremssystem (1) nach einem der Ansprüche 12 bis 16, **dadurch gekennzeichnet, dass** der Druckmodulator (9a, 9b) ausgebildet ist, falls eine Vorgabe des Betriebsbrems-Bremsdruckes (pBa, pBb) in Abhängigkeit eines Betriebsbrems-Steuersignals (Sa, Sb) fehlschlägt, den Druckmodulator-Ausgangsdruck (pDa, pDb) in Abhängigkeit des dem Redundanzanschluss (12a, 12b) wahlweise zugeführten Betriebsbrems-Steuerdruckes (pSa, pSb) oder Inverter-Steuerdruckes (pl) zu erzeugen.

18. Elektronisch steuerbares Bremssystem (1) nach einem der vorhergehenden Ansprüche, **dadurch gekennzeichnet, dass** im Bremssystem (1) weiterhin ein Abschaltventil (22) vorgesehen ist, wobei das Abschaltventil (22) in einer ersten Abschaltventil-Schaltstellung (Z1) eine Aussteuerung des Betriebsbrems-Bremsdruckes (pBa, pBb) an die Betriebsbremsen (3) in Abhängigkeit des im Inverter-Steuerventil (15; 15a) erzeugten Inverter-Steuerdrucks (pl) verhindert und in einer zweiten Abschaltventil-Schaltstellung (Z2) zum redundanten Umsetzen der Bremsvorgabe (VA, VB, VP) über den mindestens einen Betriebsbremskreis (2a, 2b) erlaubt, wobei das Abschaltventil (22) ausgebildet ist, eine zwischen dem Inverter-Ausgang (16) oder dem Redundanz-Ausgang (16b) des Inverter-Steuerventils (15; 15a) und dem mindestens einen Betriebsbremskreis (2a, 2b) verlaufenden Redundanz-Druckleitung (21) und/oder die Betriebsbremsen (3) in der ersten Abschaltventil-Schaltstellung (Z1) zu entlüften.

19. Elektrisch steuerbares Bremssystem (1) nach Anspruch 18, **dadurch gekennzeichnet, dass** das Abschaltventil (22) im Inverter-Steuerventil (15; 15a) integriert ist oder dem Inverter-Ausgang (16) oder dem Redundanz-Ausgang (16b) des Inverter-Steuerventils (15, 15a) nachgeschaltet in der Redundanz-Druckleitung (21) angeordnet ist.

20. Elektrisch steuerbares Bremssystem (1) nach Anspruch 18 oder 19 **dadurch gekennzeichnet, dass** das Umschaltventil (14a, 14b, 14c) das Abschaltventil (22) ausbildet, wobei das Umschaltventil (14a, 14b, 14c) ausgebildet ist, in der ersten Umschaltventil-Schaltstellung (X1) die Redundanz-Druckleitung (21) und/oder die Betriebsbremsen (3) zu entlüften.

21. Elektronisch steuerbares Bremssystem (1) nach einem der vorhergehenden Ansprüche, **dadurch gekennzeichnet, dass** der mindestens eine Betriebsbremskreis (2a, 2b) von einer ersten Energiequelle (11a) und der Parkbremskreis (7) und/oder das Inverter-Steuerventil (15; 15a) von einer zweiten Energiequelle (11b) mit Energie versorgt ist, wobei die erste Energiequelle (11a) unabhängig von der zweiten Energiequelle (11b) ist.

22. Elektronisch steuerbares Bremssystem (1) nach einem der vorhergehenden Ansprüche, **dadurch gekennzeichnet, dass** das Bremssystem (1) an einen CAN-Bus (20) des Fahrzeuges (100) angebunden ist und die Bremsvorgabe (VA, VB, VP) über den CAN-Bus (20) an den mindestens einen Betriebsbremskreis (2a, 2b) und/oder den Parkbremskreis (7) und/oder das Inverter-Steuerventil (15; 15a) im Bremssystem (1) übertragbar sind.

23. Fahrzeug (100), insbesondere Nutzfahrzeug (100), mit einem elektronisch steuerbaren Bremssystem (1) nach einem der vorhergehenden Ansprüche.

24. Verfahren zum Steuern eines elektronischen Bremssystems (1) nach einem der Ansprüche 1 bis 22, mit mindestens den folgenden Schritten:
- Feststellen, ob die Bremsvorgabe (VA, VB, VP) über den mindestens einen Betriebsbremskreis (2a, 2b) elektrisch gesteuert durch das Betriebsbrems-Steuermodul (10) umgesetzt werden kann;
- Erzeugen des Inverter-Steuerdruckes (pl) in dem Inverter-Steuerventil (15; 15a) in Abhängigkeit einer dem Parkbremskreis (7) vorgegebenen Bremsvorgabe (VA, VB, VP); und
- falls ein durch das Betriebsbrems-Steuermodul (10) elektrisch gesteuertes Umsetzen der Bremsvorgabe (VA, VB, VP) über den mindestens einen Betriebsbremskreis (2a, 2b) nicht möglich ist,
-- Umschalten des Umschaltventils (14a, 14b, 14c) in eine erste Umschaltventil-Schaltstellung (X1, X2), in der ein Erzeugen des Betriebsbrems-Bremsdruckes (pBa, pBb) in dem mindestens einen Betriebsbremskreis (2a, 2b) in Abhängigkeit der über das Betriebsbremsventil (13) vorgegebenen Betriebsbrems-Bremsvorgabe (VB) ermöglicht wird, falls eine über das Betriebsbremsventil (13) vorgegebenen Betriebsbrems-Bremsvorgabe (VB) vorliegt, und sonst
-- Umschalten des Umschaltventils (14a, 14b, 14c) in eine zweite Umschaltventil-Schaltstellung (X1, X2), in der ein Erzeugen des Betriebsbrems-Bremsdruckes (pBa, pBb) in Abhängigkeit des von dem Inverter-Steuerventil (15; 15a) vorgegebenen Inverter-Steuerdruckes (pl) ermöglicht wird.

25. Verfahren nach Anspruch 24, **dadurch gekennzeichnet, dass** der Inverter-Steuerdruck (pl) in dem Inverter-Steuerventil (15; 15a) in Abhängigkeit des im Parkbremskreis (7) aufgrund der Bremsvorgabe (VA, VB, VP) erzeugten Parkbrems-Bremsdruckes (pPH) oder Parkbrems-Steuerdruckes (pSPH) erzeugt wird, wobei dazu im Inverter-Steuerventil (15; 15a) ein zu dem Parkbrems-Bremsdruck (pPH) oder dem Parkbrems-Steuerdruck (pSPH) umgekehrt proportionaler Inverter-Steuerdruck (pl) erzeugt und an das Umschaltventil (14a, 14b, 14c) übertragen wird zum redundanten Ansteuern des jeweiligen Betriebsbremskreises (2a, 2b) mit dem Inverter-Steuerdruck (pl) bei eingestellter zweiter Umschaltventil-Schaltstellung (X2)..

26. Verfahren nach Anspruch 24 oder 25, **dadurch gekennzeichnet, dass** das Vorliegen einer über das Betriebsbremsventil (13) vorgegebenen Betriebsbrems-Bremsvorgabe (VB) erfasst wird und das Umschaltventil (14a, 14b, 14c) bei Vorliegen einer über das Betriebsbremsventil (13) vorgegebenen Betriebsbrems-Bremsvorgabe (VB) in die erste Umschaltventil-Schaltstellung (X1) umgeschaltet wird,
wobei das Erfassen der Betriebsbrems-Bremsvorgabe (VB) über einen Drucksensor (31) erfolgt, der einen von dem Betriebsbremsventil (13) infolge der Betriebsbrems-Bremsvorgabe (VB) ausgegebenen Betriebsbrems-Steuerdruck (pSa, pSb) misst und in Abhängigkeit der Messung ein Bremswunsch-Signal (S3) ausgibt und das Umschaltventil (14a, 14b, 14c) elektrisch gesteuert in Abhängigkeit des Bremswunsch-Signals (S3) in die erste Umschaltventil-Schaltstellung (X1) umgeschaltet wird, falls ein Betriebsbrems-Bremswunsch (VB) über das Betriebsbremsventil (13) vorliegt, und/oder
das Umschaltventil (14a, 14b, 14c) pneumatisch gesteuert durch den Betriebsbrems-Steuerdruck (pSa, pSb) bei Vorliegen einer von einem Fahrer manuell über das Betriebsbremsventil (13) angeforderten Betriebsbrems-Vorgabe (VB) in die erste Umschaltventil-Schaltstellung (X1) umschaltet.

27. Verfahren nach Anspruch 26, **dadurch gekennzeichnet, dass** das Umschaltventil (14a, 14b, 14c) bei Vorliegen einer über das Betriebsbremsventil (13) vorgegebenen Betriebsbrems-Bremsvorgabe (VB) lediglich dann in die erste Umschaltventil-Schaltstellung (X1) umgeschaltet wird, wenn der über die zweite Umschaltventil-Schaltstellung (X2) ausgesteuerte Inverter-Steuerdruck (pl) aufgrund einer redundanten Bremsvorgabe (VA, VP) geringer ist als der in der ersten Umschaltventil-Schaltstellung (X1) ausgesteuerte Betriebsbrems-Steuerdruck (pSa, pSb) aufgrund der Betriebsbrems-Bremsvorgabe (VB).

## Claims

1. An electronically controllable braking system (1), in particular an electronically controllable pneumatic braking system (1), for a vehicle (100), in particular a commercial vehicle (100), having at least:
- at least one service brake circuit (2a, 2b) with service brakes (3) and a service brake control module (10), wherein a service-brake brake pressure (pBa, pBb) can be supplied to the service brakes (3) and the service-brake control module (10) is configured to generate a service-brake control signal (Sa, Sb) as a function of a braking specification (VA, VB, VP), wherein the service-brake brake pressure (pBa, pBb) can be generated as a function of the service-brake control signal (Sa, Sb) and can be specified to the service brakes (3) in order to implement the braking specification (VA, VB, VP) via the at least one service brake circuit (2a, 2b) under electrical control by the service-brake control module (10),
- a parking-brake circuit (7) with spring-loaded brakes (8), wherein a parking-brake brake pressure (pPH) can be supplied to the spring-loaded brakes (8), wherein the parking-brake brake pressure (pPH) can be generated as a function of the braking specification (VA, VB, VP) and can be specified to the spring-loaded brakes (8) in order to implement the braking specification (VA, VB, VP) via the parking-brake circuit (7),
- an inverter-control valve (15; 15a) with an inverter output (16) and/or a redundancy output (16b), wherein the inverter-control valve (15; 15a) is configured to generate an inverter control pressure (pl) and output said inverter control pressure via the inverter output (16) and/or the redundancy output (16b), wherein the inverter control pressure (pl) is inversely proportional to the parking-brake brake pressure (pPH) and/or a parking-brake control pressure (pSPH) specifying the parking-brake brake pressure (pPH) in order to implement the braking specification (VA, VB, VP) in the parking-brake circuit (7) via the spring-loaded brakes (8), wherein further a switching valve (14a, 14b, 14c) is arranged in the braking system (1), wherein the switching valve (14a, 14b, 14c) has two switching-valve switched positions (X1, X2), wherein in the presence of a service-brake braking specification (VB) requested manually by the driver via a service-brake valve (13) a first switching valve switched position (X1, X2) of the switching valve (14a, 14b, 14c) can be set, in which the service-brake brake pressure (pBa, pBb) can be specified as a function of the service-brake braking specification (VB) specified via the service-brake valve (13) and otherwise a second switching-valve switched position (X1, X2) can be set, in which the service-brake brake pressure (pBa, pBb) can be specified as a function of the inverter control pressure (pl) specified by the inverter control valve (15; 15a).

2. The electronically controllable braking system (1) according to claim 1, **characterized in that** a pressure sensor (31) is provided in the braking system (1), preferably in the inverter control valve (15; 15a), wherein the pressure sensor (31) is configured to measure a service-brake control pressure (pSa, pSb) output as a consequence of the service-brake braking specification (VB) output by the service-brake valve (13) and to output a braking request signal (S3) as a function of the measurement, wherein the switching valve (14a, 14b, 14c) is configured to switch to the first switching valve switched position (X1) of the switching valve (14a, 14b, 14c) in the presence of a service-brake braking specification (VB) requested manually by the driver via a service-brake valve (13) under electric control as a function of the braking request signal (S3) and/or the switching valve (14a, 14b, 14c) is configured to switch to the first switching valve switched position (X1) under pneumatic control by the service-brake control pressure (pSa, pSb) in the presence of a service-brake braking specification (VB) requested manually by the driver via the service-brake valve (13).

3. The electronically controllable braking system (1) according to claim 2, **characterized in that** the switching valve (14a, 14b, 14c) is designed as a shuttle valve (40a) or an electrically or pneumatically controllable 3/2-way valve (40b), wherein the shuttle valve (40a) is configured to set the first or the second switching valve switched position (X1, X2) optionally as a function of whether the inverter control pressure (pl) or the service-brake control pressure (pSa, pSb) is higher, wherein the first switching valve switched position (X1) is set when the service-brake control pressure (pSa, pSb) is higher, and
the 3/2-way valve (40b) can be switched to the first switching valve switched position (X1) or to the second switching valve switched position (X2) as a function of an electrically specified switching signal (SU) or of a pneumatically specified switching control pressure (pSU), wherein the switching signal (SU) or the switching control pressure (pSU) can be generated as a function of whether a requested service-brake braking specification (VB) is present in the at least one service brake circuit (2a, 2b) via the service-brake valve (13), preferably as a function of the braking request signal (S3) or of the service-brake control pressure (pSa, pSb), in order to switch to the first switching valve switched position (X1) when a service-brake braking specification (VB) is present via the service-brake valve (13) .

4. The electronically controllable braking system (1) according to any of the preceding claims, **characterized in that** the braking specification is an assistance braking specification (VA) specified in automated manner by an assistance control module (35) and/or a parking-brake braking specification (VP) manually specified via a parking-brake actuation device (19) or via a parking-brake valve (24) and/or the service-brake braking specification (VB) manually specified via the service-brake valve (13).

5. The electronically controllable braking system (1) according to any of the preceding claims, **characterized in that** a parking-brake control module (18) is arranged in the parking brake circuit (7) in order to output the parking-brake brake pressure (pPH) as a function of the braking specification (VA, VB, VP) specified to the parking brake circuit (7).

6. The electronically controllable braking system (1) according to claim 5, **characterized in that**
- the parking brake control module (18) is connected to the spring-loaded brakes (8) of the parking brake circuit (7) for pneumatic transfer of the parking-brake brake pressure (pPH) to the spring-loaded brakes (8) and/or
- the parking brake control module (18) is connected to the inverter control valve (15; 15a) for pneumatic transfer of the parking-brake brake pressure (pPH) or of a pressure generated in the parking-brake control module (18) as a function thereof to the inverter control valve (15; 15a).

7. The electronically controllable braking system (1) according to claim 5, **characterized in that** the parking brake control module (18) is integrated in the inverter control module (15) and the braking specification (VA, VB, VP) can be electrically transferred to the inverter control module (15), wherein the inverter control valve (15) is configured,
- to generate the parking-brake brake pressure (pPH) from the braking specification (VA, VB, VP) via the parking-brake control module (18) and apply it to the spring-loaded brakes (8) in the parking-brake circuit (7) via a parking brake output (16a), and
- to generate the inverter control pressure (pl) via an inverter control module (28) and a pilot control module (29) from the braking specification (VA, VB, VP) and output it to the inverter output (16) and/or the redundancy output (16b),
- wherein the parking-brake brake pressure (pPH) output via the parking brake output (16a) is inversely proportional to the inverter control pressure (pl) output via the inverter output (16) and/or the redundancy output (16b).

8. The electronically controllable braking system (1) according to claim 4, **characterized in that** the parking brake valve (24) is configured to generate and output the parking-brake control pressure (pSPH) as a function of the manually specified parking-brake braking specification (VP).

9. The electronically controllable braking system (1) according to claim 8, **characterized in that**
- the parking-brake valve (24) is connected to a relay valve (25) and the relay valve (25) is configured to generate the parking-brake brake pressure (pPH) from the parking-brake control pressure (pSPH) and the relay valve (25) is connected to the spring-loaded brakes (8) of the parking-brake circuit (7) for pneumatic transfer of the parking-brake brake pressure (pPH) applied by the relay valve (25) to the spring-loaded brakes (8) and/or
- the parking brake valve (24) is connected to the inverter control valve (15; 15a) for pneumatic transfer of the parking-brake control pressure (pSPH) or a pressure dependent thereupon to the inverter control valve (15; 15a).

10. The electronically controllable braking system (1) according to any of the preceding claims, **characterized in that** an inverse relay valve (26) is arranged in the inverter control valve (15; 15a) for inverting the parking-brake brake pressure(pPH) pneumatically transferred to the inverter control valve (15; 15a) by the parking-brake control module (18) and/or the parking-brake control pressure (pSPH) pneumatically transferred by the parking brake valve (24) or a pressure dependent thereupon for generating an inversely proportional inverter control pressure (pl) vis-à-vis the parking-brake brake pressure (pPH) and/or the parking-brake control pressure (pSPH).

11. The electronically controllable braking system (1) according to claim 10, **characterized in that** the inverter control valve is designed as a trailer control valve (15a), wherein the trailer control valve (15a) is configured to generate a trailer control pressure (pT) depending on the parking-brake brake pressure (pPH) and/or on the parking-brake control pressure (pSPH) and to transfer it to a trailer (200) via the inverter output (16), wherein the trailer control pressure (pT) is inversely proportional to the parking-brake brake pressure (pPH) and/or to the parking-brake control pressure (pSPH) and the trailer control pressure (pT) corresponds to the inverter control pressure (pl).

12. The electronically controllable braking system (1) according to any of the preceding claims, **characterized in that** a pressure modulator (9a, 9b) is arranged in the at least one service brake circuit (2a, 2b), wherein the pressure modulator (9a, 9b) has a pressure modulator output (9a1, 9b1) and the pressure modulator (9a, 9b) is configured to generate a pressure modulator output pressure (pDa, pDb) as a function of the service-brake contro0l signal (Sa, Sb) and output it via the pressure modulator output (9a1, 9b1), wherein the pressure modulator output pressure (pDa, pDb) can be transferred as a service-brake brake pressure (pBa, pBb) to the service brakes (3) of the at least one service brake circuit (2a, 2b),
wherein the pressure modulator (9a, 9b) further has a pneumatic redundancy port (12a, 12b) and optionally the inverter control pressure (pl) or a service-brake control pressure (pSa, pSb) applied by an electropneumatic service-brake valve (13) on the basis of a service-brake braking specification (VB) can be specified as a redundancy pressure (pRa, pRb) to the pneumatic redundancy port (12a, 12b), wherein the redundancy port (12a, 12b) to this end is arranged upstream of the switching valve (14a, 14b, 14c), wherein the switching valve (14a, 14b, 14c)
- in the first switching valve switched position (X1), can output the service-brake control pressure (pSa, pSb) applied by the service-brake valve (13) on the basis of the service-brake braking specification (VB) and
- in the second switching valve switched position (X2), can output the inverter control pressure (pl) generated in the inverter control valve (15) as redundancy pressure (pRa, pRb) to the redundancy port (12a, 12b) for the redundant actuation of the pressure modulator (9a, 9ab).

13. The electronically controllable braking system (1) according to claim 12, **characterized in that** the switching valve (14a, 14b) is arranged in the at least one service brake circuit (2a, 2b), preferably on a vehicle axle (6a, 6b) assigned to the at least one service brake circuit (2a, 2b), and the switching valve (14a, 14b)
- in the first switching valve switched position (X1), connects the service-brake valve (13) to the redundancy port (12a, 12b) for redundant specification of the service-brake control pressure (pSa, pSb) as a redundancy pressure (pRa, pRb) to the redundancy port (12a, 12b), and
- in the second switching valve switched position (X2), connects the inverter output (16) of the inverter control valve (15; 15a) to the redundancy port (12a, 12b) for redundant specification of the inverter control pressure (pl) as redundancy pressure (pRa, pRb) to the redundancy port (12a, 12b) .

14. The electronically controllable braking system (1) according to claim 13, **characterized in that** the service-brake valve (13) is connected in a pressure-conducting manner to a first switching valve input (14a1, 14b1) of the switching valve (14a, 14b) and the inverter output (16) is connected in a pressure-conducting manner to a second switching valve input (14a2, 14b2) of the switching valve (14a, 14b) as well as a switching valve output (14a3, 14b3) of the switching valve (14a, 14b) being connected in a pressure-conducting manner to the redundancy port (12a, 12b) of the pressure modulator (9a, 9b),
wherein in the first switching valve switched position (X1) the first switching valve input (14a1, 14b1) is connected to the switching valve output (14a3, 14b3) and in the second switching valve switched position (X2) the second switching valve input (14a2, 14b2) is connected to the switching valve output (14a3, 14b3).

15. The electronically controllable braking system (1) according to claim 12, **characterized in that** an inverter switching valve (14c) is arranged as a switching valve in or on the inverter control valve (15; 15a) and the inverter switching valve (14c)
- in the first switching valve switched position (X1) connects the service-brake valve (13) to the redundancy output (16b) of the inverter control valve (15), and
- in the second switching valve switched position (X2) outputs the inverter control pressure (pl) generated in the inverter control valve (15a, 15b) to the redundancy output (16b),
wherein the redundancy output (16b) of the inverter control valve (15; 15a) is connected to the redundancy port (12a, 12b) of the pressure modulator (9a, 9b).

16. The electronically controllable braking system (1) according to claim 15, **characterized in that** the service-brake valve (13) is connected in a pressure-conducting manner to a first inverter-switching valve-input (14c1) of the inverter switching valve (14c) and the inverter control pressure (pl) can be supplied to the second inverter switching valve input (14c2) of the inverter switching valve (14c) as well as an inverter-switching valve-output (14c3) of the inverter switching valve (14c) being connected in a pressure-conducting manner to the redundancy output (16b) of the inverter control valve (15) and the redundancy output (16b) of the inverter control valve (15) being connected in a pressure-conducting manner to the redundancy port (12a, 12b) of the pressure modulator (9a, 9b),
wherein in the first switching valve switched position (X1) the first inverter-switching valve-input (14c1) is connected in a pressure-connecting manner to the inverter-switching valve-output (14c3) and in the second switching valve switched position (X2) the second inverter-switching valve-input (14c2) is connected in a pressure-conducting manner to the inverter-switching valve-output (14c3).

17. The electronically controllable braking system (1) according to any of claims 12 to 16, **characterized in that** if a specification of the service-brake brake pressure (pBa, pBb) fails as a function of a service-brake control signal (Sa, Sb), the pressure modulator (9a, 9b) is configured to generate the pressure modulator output pressure (pDa, pDb) as a function of the service-brake control pressure (pSa, pSb), which is optionally supplied to the redundancy port (12a, 12b), or as a function of the inverter control pressure (pl).

18. The electronically controllable braking system (1) according to any of the preceding claims, **characterized in that** a shutoff valve (22) is further provided in the braking system (1), wherein the shutoff valve (22) in a first shutoff valve switched position (Z1) prevents application of the service-brake brake pressure (pBa, pBb) to the service brakes (3) as a function of the inverter control pressure (pl) generated in the inverter control valve (15; 15a) and in a second shutoff valve switched position (Z2) permits the regulation as a function for redundant implementation of the braking specification (VA, VB, VP) via the at least one service brake circuit (2a, 2b), wherein the shutoff valve (22) is configured to bleed redundancy pressure line (21) running between the inverter output (16) or the redundancy output (16b) of the inverter control valve (15; 15a) and the at least one service brake circuit (2a, 2b) and/or to bleed the service brakes (3) in the first shutoff valve switched position (Z1).

19. The electrically controllable braking system (1) according to claim 18, **characterized in that** the shutoff valve (22) is integrated in the inverter control valve (15; 15a) or is arranged in the redundancy pressure line (21) downstream of the inverter output (16) or of the redundancy output (16b) of the inverter control valve (15; 15a).

20. The electrically controllable braking system (1) according to claim 18 or 19, **characterized in that** the shifting valve (14a, 14b, 14c) forms the shutoff valve (22), wherein the switching valve (14a, 14b, 14c) is configured to bleed the redundancy line (21) and/or the service brakes (3) in the first switching valve switched position (X1).

21. The electronically controllable braking system (1) according to any of the preceding claims, **characterized in that** the at least one service brake circuit (2a, 2b) is supplied with energy by a first energy source (11a) and the parking brake circuit (7) and/or the inverter control valve (15; 15a) is supplied with energy by a second energy source (11b), wherein the first energy source (11a) is independent from the second energy source (11b).

22. The electronically controllable braking system (1) according to any of the preceding claims, **characterized in that** the braking system (1) is connected to a CAN bus (20) of the vehicle (100) and the braking specification (VA, VB, VP) can be transferred via the CAN bus (20) to the at least one service brake circuit (2a, 2b) and/or the parking brake circuit (7) and/or the inverter control valve (15; 15a) in the braking system (1).

23. A vehicle (100), in particular a commercial vehicle (100), having an electronically controllable braking system (1) according to any of the preceding claims.

24. A method for controlling an electronic braking system (1) according to any of claims 1 to 22, have at least the following steps:
- determining whether the braking specification (VA, VB, VP) can be implemented via the at least one service brake circuit (2a, 2b) electronically controlled by the service-brake control module (10);
- generating the inverter control pressure (pl) in the inverter control valve (15; 15a) as a function of a braking specification (VA, VB, VP) specified to the parking brake circuit (7); and
- if an implementation of the braking specification (VA, VB, VP) electronically controlled by the service-brake control module (10) via the at least one service brake circuit (2a, 2b) is not possible,
-- switching the switching valve (14a, 14b, 14c) to a first switching valve switched position (X1, X2), in which a generation of the service-brake brake pressure (pBa, pBb) in the at least one service brake circuit (2a, 2b) is possible as a function of a service-brake braking specification (VB) specified via the service-brake valve (13) if a service-brake braking specification (VB) specified via the service-brake valve (13) is present, and otherwise
-- switching the switching valve (14a, 14b, 14c) to a second switching valve switched position (X1, X2), in which a generation of the service-brake brake pressure (pBa, pBb) is made possible as a function of the inverter control pressure (pl) specified by the inverter control valve (15; 15a).

25. The method according to claim 24, **characterized in that** the inverter control pressure (pl) is generated in the inverter control valve (15; 15a) as a function of the parking-brake brake pressure (pPH) or parking-brake control pressure (pSPH) generated in the parking-brake circuit (7) on the basis of the braking specification (VA, VB, VP), wherein to this end an inverter control pressure (pl) inversely proportional to the parking-brake brake pressure (pPH) or the parking-brake control pressure (pSPH) is generated in the inverter control valve (15; 15a) and transferred to the switching valve (14a, 14b, 14c) for redundant actuation of the respective service brake circuit (2a, 2b) with the inverter control pressure (pl) with the set second switching valve switched position (X2).

26. The method according to claim 24 or 25, **characterized in that** the presence of a service-brake braking specification (VB) specified via the service-brake valve (13) is detected and in the presence of a service-brake braking specification (VB) specified via the service-brake valve (13) the switching valve (14a, 14b, 14c) is switched to the first switching valve switched position (X1),
wherein the detection of the service-brake braking specification (VB) occurs via a pressure sensor (31), which measures a service-brake control pressure (pSa, pSb) output by the service-brake valve (13) as a consequence of the service-brake braking specification (VB) and outputs a braking request signal (S3) as a function of the measurement and the switching valve (14a, 14b, 14c) is switched to the first switching valve switched position (X1) under electrical control as a function of the braking request signal (S3), if a service-brake braking specification (VB) is present via the service-brake valve (13), and/or
the switching valve (14a, 14b, 14c) is switched to the first switching valve switched position (X1) under pneumatic control by the service-brake control pressure (pSa, pSb) in the presence of a service-brake braking specification (VB) requested manually by the driver via a service-brake valve (13) .

27. The method according to claim 26, **characterized in that** in the presence of a service-brake braking specification (VB) specified via the service-brake valve (13) the switching valve (14a, 14b, 14c) is only switched to the first switching valve switched position (X1) when the inverter control pressure (pl) applied via the second switching valve switched position (X2) on the basis of a redundant braking specification (VA, VP) is lower than the service-brake control pressure (pSa, pSb) applied in the first switching valve switched position (X1) on the basis of the service-brake braking specification (VB).

## Revendications

1. Système de freinage (1) à commande électronique, en particulier système de freinage (1) pneumatique à commande électronique, pour un véhicule (100), en particulier véhicule utilitaire (100), présentant au moins :
- au moins un circuit de frein de service (2a, 2b) avec des freins de service (3) et un module de commande de frein de service (10), dans lequel une pression de freinage de frein de service (pBa, pBb) peut être amenée aux freins de service (3) et le module de commande de frein de service (10) est réalisé pour produire un signal de commande de frein de service (Sa, Sb) en fonction d'une consigne de freinage (VA, VB, VP), dans lequel la pression de freinage de frein de service (pBa, pBb) est produite en fonction du signal de commande de frein de service (Sa, Sb) et peut être prédéfinie au niveau des freins de service (3) pour la mise en œuvre, commandée électriquement par le module de commande de frein de service (10), de la consigne de freinage (VA, VB, VP) par l'intermédiaire du au moins un circuit de frein de service (2a, 2b),
- un circuit de frein de stationnement (7) avec des freins à ressort (8), dans lequel une pression de freinage de frein de stationnement (pPH) peut être amenée aux freins à ressort (8), dans lequel la pression de freinage de frein de stationnement (pPH) est produite en fonction de la consigne de freinage (VA, VB, VP) et peut être prédéfinie au niveau des freins à ressort (8) pour la mise en œuvre de la consigne de freinage (VA, VB, VP) par l'intermédiaire du circuit de frein de stationnement (7),
- une soupape de commande d'inverseur (15 ; 15a) avec une sortie d'inverseur (16) et/ou une sortie de redondance (16b), dans lequel la soupape de commande d'inverseur (15 ; 15a) est réalisée pour produire une pression de commande d'inverseur (pl) et pour la délivrer par l'intermédiaire de la sortie d'inverseur (16) et/ou de la sortie de redondance (16b), dans lequel la pression de commande d'inverseur (pl) est inversement proportionnelle à la pression de freinage de frein de stationnement (pPH) et/ou à une pression de commande de frein de stationnement (pSPH) prédéfinissant la pression de freinage de frein de stationnement (pPH), qui sont à moduler, afin de mettre en œuvre la consigne de freinage (VA, VB, VP) dans le circuit de frein de stationnement (7) par l'intermédiaire des freins à ressort (8), dans lequel une soupape de commutation (14a, 14b, 14c) est en outre disposée dans le système de freinage (1), dans lequel la soupape de commutation (14a, 14b, 14c) présente deux positions de commutation de soupape de commutation (X1, X2), dans lequel, en présence d'une consigne de frein de service (VB) demandée manuellement par un conducteur par l'intermédiaire d'une soupape de frein de service (13), une première position de commutation de soupape de commutation (X1, X2) de la soupape de commutation (14a, 14b, 14c) peut être réglée, dans laquelle la pression de freinage de frein de service (pBa, pBb) peut être prédéfinie en fonction de la consigne de freinage de frein de service (VB) prédéfinie par l'intermédiaire de la soupape de frein de service (13) et une deuxième position de commutation de soupape de commutation (X1, X2) peut sinon être réglée, dans laquelle la pression de freinage de frein de service (pBa, pBb) peut être prédéfinie en fonction de la pression de commande d'inverseur (pl) prédéfinie par la soupape de commande d'inverseur (15 ; 15a).

2. Système de freinage (1) à commande électronique selon la revendication 1, **caractérisé en ce qu'**un capteur de pression (31) est prévu dans le système de freinage (1), de préférence dans la soupape de commande d'inverseur (15 ; 15a), dans lequel le capteur de pression (31) est réalisé pour mesurer une pression de commande de frein de service (pSa, pSb) délivrée par la soupape de frein de service (13) à la suite de la consigne de freinage de frein de service (VB) et, en fonction de la mesure, pour délivrer un signal de souhait de freinage (S3), dans lequel la soupape de commutation (14a, 14b, 14c) est réalisée pour effectuer une commutation de manière commandée électriquement, en fonction du signal de souhait de freinage (S3), en présence d'une consigne de frein de service (VB) demandée manuellement par le conducteur par l'intermédiaire de la soupape de frein de service (13), dans la première position de commutation de soupape de commutation (X1) de la soupape de commutation (14a, 14b, 14c) et/ou la soupape de commutation (14a, 14b, 14c) est réalisée pour effectuer une commutation de manière commandée pneumatiquement par la pression de commande de frein de service (pSa, pSb), en présence d'une consigne de frein de service (VB) demandée manuellement par un conducteur par l'intermédiaire de la soupape de frein de service (13), dans la première position de commutation de soupape de commutation (X1).

3. Système de freinage (1) à commande électronique selon la revendication 2, **caractérisé en ce que** la soupape de commutation (14a, 14b, 14c) est réalisée sous la forme d'une soupape à deux voies (40a) ou d'un distributeur à 3/2 voies (40b) à commande pneumatique,
dans lequel la soupape à deux voies (40a) est réalisée pour régler la première ou la deuxième position de commutation de soupape de commutation (X1, X2) sélectivement selon que la pression de commande d'inverseur (pl) ou la pression de commande de frein de service (pSa, pSb) est plus élevée ou non, dans lequel la première position de commutation de soupape de commutation (X1) est réglée lorsque la pression de commande de frein de service (pSa, pSb) est plus élevée, et
le distributeur à 3/2 voies (40b) peut être commuté en fonction d'un signal de commutation (SU) prédéfini électriquement ou d'une pression de commande de commutation (pSU) prédéfinie pneumatiquement dans la première position de commutation de soupape de commutation (X1) ou dans la deuxième position de commutation de soupape de commutation (X2), dans lequel le signal de commutation (SU) ou la pression de commande de commutation (pSU) peuvent être produits selon qu'une consigne de freinage de frein de service (VB) demandée par l'intermédiaire de la soupape de frein de service (13) est présente ou non dans le au moins un circuit de frein de service (2a, 2b), de préférence en fonction du signal de souhait de freinage (S3) ou de la pression de commande de frein de service (pSa, pSb), pour la commutation dans la première position de commutation de soupape de commutation (X1), lorsqu'une consigne de freinage de frein de service (VB) par l'intermédiaire de la soupape de frein de service (13) est présente.

4. Système de freinage (1) à commande électronique selon l'une quelconque des revendications précédentes, **caractérisé en ce que** la consigne de freinage est une consigne de freinage d'assistance (VA) prédéfinie de manière automatisée par un module de commande d'assistance (35) et/ou une consigne de freinage de frein de stationnement (VP) prédéfinie manuellement par l'intermédiaire d'un dispositif d'actionnement de frein de stationnement (19) ou par l'intermédiaire d'une soupape de frein de stationnement (24) et/ou la consigne de freinage de frein de service (VB) prédéfinie manuellement par l'intermédiaire de la soupape de frein de service (13).

5. Système de freinage (1) à commande électronique selon l'une quelconque des revendications précédentes, **caractérisé en ce qu'**un module de commande de frein de stationnement (18) est disposé dans le circuit de frein de stationnement (7) pour délivrer la pression de freinage de frein de stationnement (pPH) en fonction de la consigne de freinage (VA, VB, VP) prescrite au circuit de frein de stationnement (7).

6. Système de freinage (1) à commande électronique selon la revendication 5, **caractérisé en ce que**
- le module de commande de frein de stationnement (18) est relié aux freins à ressort (8) du circuit de frein de stationnement (7) pour la transmission pneumatique de la pression de freinage de frein de stationnement (pPH) aux freins à ressort (8) et/ou
- le module de commande de frein de stationnement (18) est relié à la soupape de commande d'inverseur (15 ; 15a) pour la transmission pneumatique de la pression de freinage de frein de stationnement (pPH) ou d'une pression produite dans le module de commande de frein de stationnement (18), dépendante de celle-ci, à la soupape de commande d'inverseur (15 ; 15a).

7. Système de freinage (1) à commande électronique selon la revendication 5, **caractérisé en ce que** le module de commande de frein de stationnement (18) est intégré dans la soupape de commande d'inverseur (15) et la consigne de freinage (VA, VB, VP) peut être transmise électriquement à la soupape de commande d'inverseur (15), dans lequel la soupape de commande d'inverseur (15) est réalisée
- pour produire la pression de freinage de frein de stationnement (pPH) à partir de la consigne de freinage (VA, VB, VP) par l'intermédiaire du module de commande de frein de stationnement (18) et pour la moduler dans le circuit de frein de stationnement (7) au niveau des freins à ressort (8) par l'intermédiaire d'une sortie de frein de stationnement (16a), et
- pour produire la pression de commande d'inverseur (pl) à partir de la consigne de freinage (VA, VB, VP) par l'intermédiaire d'un module de commande d'inverseur (28) et d'un module pilote (29) et pour la délivrer à la sortie d'inverseur (16) et/ou la sortie de redondance (16b),
dans lequel la pression de freinage de frein de stationnement (pPH) délivrée par l'intermédiaire de la sortie de frein de stationnement (16a) est inversement proportionnelle à la pression de commande d'inverseur (pl) délivrée par l'intermédiaire de la sortie d'inverseur (16) et/ou de la sortie de redondance (16b).

8. Système de freinage (1) à commande électronique selon la revendication 4, **caractérisé en ce que** la soupape de frein de stationnement (24) est réalisée pour produire et pour délivrer la pression de commande de frein de stationnement (pSPH) en fonction de la consigne de freinage de frein de stationnement (VP) prédéfinie manuellement.

9. Système de freinage (1) à commande électronique selon la revendication 8, **caractérisé en ce que**
- la soupape de frein de stationnement (24) est reliée à une soupape-relais (25) et la soupape-relais (25) est réalisée pour produire la pression de freinage de frein de stationnement (pPH) à partir de la pression de commande de frein de stationnement (pSPH) et la soupape-relais (25) est reliée aux freins à ressort (8) du circuit de frein de stationnement (7) pour la transmission pneumatique de la pression de freinage de frein de stationnement (pPH) modulée par la soupape-relais (25) aux freins à ressort (8) et/ou
- la soupape de frein de stationnement (24) est reliée à la soupape de commande d'inverseur (15 ; 15a) pour la transmission pneumatique de la pression de commande de frein de stationnement (pSPH) ou d'une pression dépendante de celle-ci à la soupape de commande d'inverseur (15 ; 15a).

10. Système de freinage (1) à commande électronique selon l'une quelconque des revendications précédentes, **caractérisé en ce qu'**une soupape-relais (26) inverse est disposée dans la soupape de commande d'inverseur (15 ; 15a) pour l'inversion de la pression de freinage de frein de stationnement (pPH) transmise pneumatiquement à la soupape de commande d'inverseur (15 ; 15a) par le module de commande de frein de stationnement (18) et/ou de la pression de commande de frein de stationnement (pSPH) transmise pneumatiquement par la soupape de frein de stationnement (24) ou d'une pression produite en fonction de celle-ci pour la production d'une pression de commande d'inverseur (pl) inversement proportionnelle par rapport à la pression de freinage de frein de stationnement (pPH) et/ou la pression de commande de frein de stationnement (pSPH).

11. Système de freinage (1) à commande électronique selon la revendication 10, **caractérisé en ce que** la soupape de commande d'inverseur est réalisée sous la forme d'une soupape de commande de remorque (15a), dans lequel la soupape de commande de remorque (15a) est réalisée pour produire une pression de commande de remorque (pT) dépendante de la pression de freinage de frein de stationnement (pPH) et/ou de la pression de commande de frein de stationnement (pSPH) et pour la transmettre à une remorque (200) par l'intermédiaire de la sortie d'inverseur (16), dans lequel la pression de commande de remorque (pT) est inversement proportionnelle à la pression de freinage de frein de stationnement (pPH) et/ou à la pression de commande de frein de stationnement (pSPH) et la pression de commande de remorque (pT) correspond à la pression de commande d'inverseur (pl).

12. Système de freinage (1) à commande électronique selon l'une quelconque des revendications précédentes, **caractérisé en ce qu'**un modulateur de pression (9a, 9b) est disposé dans le au moins un circuit de frein de service (2a, 2b), dans lequel le modulateur de pression (9a, 9b) présente une sortie de modulateur de pression (9al, 9bl) et le modulateur de pression (9a, 9b) est réalisé pour produire en fonction du signal de commande de frein de service (Sa, Sb) une pression de sortie de modulateur de pression (pDa, pDb) et pour la délivrer par l'intermédiaire de la sortie de modulateur de pression (9al, 9bl), dans lequel la pression de sortie de modulateur de pression (pDa, pDb) peut être transmise en tant que pression de freinage de frein de service (pBa, pBb) aux freins de service (3) du au moins un circuit de frein de service (2a, 2b),
dans lequel le modulateur de pression (9a, 9b) présente en outre un raccord de redondance (12a, 12b) pneumatique et sélectivement la pression de commande d'inverseur (pl) ou une pression de commande de frein de service (pSa, pSb) modulée par une soupape de frein de service (13) électropneumatique sur la base d'une consigne de freinage de frein de service (VB) peut être prescrite en tant que pression de redondance (pRa, pRb) au raccord de redondance (12a, 12b) pneumatique, dans lequel la soupape de commutation (14a, 14b, 14c) est à cet effet montée en amont du raccord de redondance (12a, 12b), dans lequel la soupape de commutation (14a, 14b, 14c)
- dans la première position de commutation de soupape de commutation (X1), peut délivrer la pression de commande de frein de service (pSa, pSb) modulée par la soupape de frein de service (13) sur la base de la consigne de freinage de frein de service (VB) et
- dans la deuxième position de commutation de soupape de commutation (X2), peut délivrer la pression de commande d'inverseur (pl) produite dans la soupape de commande d'inverseur (15) en tant que pression de redondance (pRa, pRb) au raccord de redondance (12a, 12b) pour la commande redondante du modulateur de pression (9a, 9b).

13. Système de freinage (1) à commande électronique selon la revendication 12, **caractérisé en ce que** la soupape de commutation (14a, 14b) est disposée dans le au moins un circuit de frein de service (2a, 2b), de préférence sur un essieu de véhicule (6a, 6b) associé au au moins un circuit de frein de service (2a, 2b), et la soupape de commutation (14a, 14b)
- dans la première position de commutation de soupape de commutation (X1), relie la soupape de frein de service (13) au raccord de redondance (12a, 12b) pour la prédéfinition redondante de la pression de commande de frein de service (pSa, pSb) en tant que pression de redondance (pRa, pRb) au niveau du raccord de redondance (12a, 12b), et
- dans la deuxième position de commutation de soupape de commutation (X2), relie la sortie d'inverseur (16) de la soupape de commande d'inverseur (15 ; 15a) au raccord de redondance (12a, 12b) pour la prédéfinition redondante de la pression de commande d'inverseur (pl) en tant que pression de redondance (pRa, pRb) au niveau du raccord de redondance (12a, 12b).

14. Système de freinage (1) à commande électronique selon la revendication 13, **caractérisé en ce que** la soupape de frein de service (13) est reliée à une première entrée de soupape de commutation (14a1, 14b1) de la soupape de commutation (14a, 14b) et la sortie d'inverseur (16) à une deuxième entrée de soupape de commutation (14a2, 14b2) de la soupape de commutation (14a, 14b) ainsi qu'une sortie de soupape de commutation (14a3, 14b3) de la soupape de commutation (14a, 14b) au raccord de redondance (12a, 12b) du modulateur de pression (9a, 9b) de manière à conduire la pression,
dans lequel, dans la première position de commutation de soupape de commutation (X1), la première entrée de soupape de commutation (14a1, 14b1) est reliée à la sortie de soupape de commutation (14a3, 14b3) et, dans la deuxième position de commutation de soupape de commutation (X2), la deuxième entrée de soupape de commutation (14a2, 14b2) est reliée à la sortie de soupape de commutation (14a3, 14b3).

15. Système de freinage (1) à commande électronique selon la revendication 12, **caractérisé en ce que**, en tant que soupape de commutation, une soupape de commutation d'inverseur (14c) est disposée dans ou sur la soupape de commande d'inverseur (15 ; 15a) et la soupape de commutation d'inverseur (14c)
- dans la première position de commutation de soupape de commutation (X1), relie la soupape de frein de service (13) à la sortie de redondance (16b) de la soupape de commande d'inverseur (15), et
- dans la deuxième position de commutation de soupape de commutation (X2), délivre la pression de commande d'inverseur (pl) produite dans la soupape de commande d'inverseur (15 ; 15a) à la sortie de redondance (16b),
dans lequel la sortie de redondance (16b) de la soupape de commande d'inverseur (15 ; 15a) est reliée au raccord de redondance (12a, 12b) du modulateur de pression (9a, 9b).

16. Système de freinage (1) à commande électronique selon la revendication 15, **caractérisé en ce que** la soupape de frein de service (13) est reliée à une première entrée de soupape de commutation d'inverseur (14c1) de la soupape de commutation d'inverseur (14c) de manière à conduire la pression et la pression de commande d'inverseur (pl) peut être amenée à la deuxième entrée de soupape de commutation d'inverseur (14c2) de la soupape de commutation d'inverseur (14c) et une sortie de soupape de commutation d'inverseur (14c3) de la soupape de commutation d'inverseur (14c) est reliée à la sortie de redondance (16b) de la soupape de commande d'inverseur (15) de manière à conduire la pression, et la sortie de redondance (16b) de la soupape de commande d'inverseur (15), au raccord de redondance (12a, 12b) du modulateur de pression (9a, 9b),
dans lequel, dans la première position de commutation de soupape de commutation (X1), la première entrée de soupape de commutation d'inverseur (14c1) est reliée à la sortie de soupape de commutation d'inverseur (14c3) de manière à conduire la pression et, dans la deuxième position de commutation de soupape de commutation (X2), la deuxième entrée de soupape de commutation d'inverseur (14c2), à la sortie de soupape de commutation d'inverseur (14c3).

17. Système de freinage (1) à commande électronique selon l'une quelconque des revendications 12 à 16, **caractérisé en ce que** le modulateur de pression (9a, 9b) est réalisé, au cas où une consigne de la pression de freinage de frein de service (pBa, pBb) en fonction d'un signal de commande de frein de service (Sa, Sb) échouerait, pour produire la pression de sortie de modulateur de pression (pDa, pDb) en fonction de la pression de commande de frein de service (pSa, pSb) ou de la pression de commande d'inverseur (pl) amenée sélectivement au raccord de redondance (12a, 12b).

18. Système de freinage (1) à commande électronique selon l'une quelconque des revendications précédentes, **caractérisé en ce qu'**une soupape d'arrêt (22) est prévue en outre dans le système de freinage (1), dans lequel la soupape d'arrêt (22), dans une première position de commutation de soupape d'arrêt (Zl), empêche une modulation de la pression de freinage de frein de service (pBa, pBb) au niveau des freins de service (3) en fonction de la pression de commande d'inverseur (pl) produite dans la soupape de commande d'inverseur (15 ; 15a) et, dans une deuxième position de commutation de soupape d'arrêt (Z2), la permet pour la mise en œuvre redondante de la consigne de freinage (VA, VB, VP) par l'intermédiaire du au moins un circuit de frein de service (2a, 2b),
dans lequel la soupape d'arrêt (22) est réalisée pour ventiler une conduite de pression de redondance (21) s'étendant entre la sortie d'inverseur (16) ou la sortie de redondance (16b) de la soupape de commande d'inverseur (15 ; 15a) et le au moins un circuit de frein de service (2a, 2b) et/ou les freins de service (3) dans la première position de commutation de soupape d'arrêt (Z1).

19. Système de freinage (1) à commande électrique selon la revendication 18, **caractérisé en ce que** la soupape d'arrêt (22) est intégrée dans la soupape de commande d'inverseur (15 ; 15a) ou disposée dans la conduite de pression de redondance (21) de manière montée en aval de la sortie d'inverseur (16) ou de la sortie de redondance (16b) de la soupape de commande d'inverseur (15, 15a).

20. Système de freinage (1) à commande électrique selon la revendication 18 ou 19, **caractérisé en ce que** la soupape de commutation (14a, 14b, 14c) réalise la soupape d'arrêt (22), dans lequel la soupape de commutation (14a, 14b, 14c) est réalisée pour ventiler la conduite de pression de redondance (21) et/ou les freins de service (3) dans la première position de commutation de soupape de commutation (X1).

21. Système de freinage (1) à commande électronique selon l'une quelconque des revendications précédentes, **caractérisé en ce que** le au moins un circuit de frein de service (2a, 2b) est alimenté en énergie par une première source d'énergie (11a) et le circuit de frein de stationnement (7) et/ou la soupape de commande d'inverseur (15 ; 15a) par une deuxième source d'énergie (11b), dans lequel la première source d'énergie (11a) est indépendante de la deuxième source d'énergie (11b).

22. Système de freinage (1) à commande électronique selon l'une quelconque des revendications précédentes, **caractérisé en ce que** le système de freinage (1) est connecté à un bus CAN (20) du véhicule (100) et la consigne de freinage (VA, VB, VP) peut être transmise par l'intermédiaire du bus CAN (20) au au moins un circuit de frein de service (2a, 2b) et/ou au circuit de frein de stationnement (7) et/ou à la soupape de commande d'inverseur (15 ; 15a) dans le système de freinage (1).

23. Véhicule (100), en particulier véhicule utilitaire (100), avec un système de freinage (1) à commande électronique selon l'une quelconque des revendications précédentes.

24. Procédé pour commander un système de freinage (1) électronique selon l'une quelconque des revendications 1 à 22, avec au moins les étapes suivantes consistant à :
- déterminer si la consigne de freinage (VA, VB, VP) peut être mise en œuvre par l'intermédiaire du au moins un circuit de frein de service (2a, 2b) de manière commandée électriquement par le module de commande de frein de service (10) ;
- produire la pression de commande d'inverseur (pl) dans la soupape de commande d'inverseur (15 ; 15a) en fonction d'une consigne de freinage (VA, VB, VP) prescrite au circuit de frein de stationnement (7) ; et
- au cas où une mise en œuvre, commandée électriquement par le module de commande de frein de service (10), de la consigne de freinage (VA, VB, VP) par l'intermédiaire du au moins un circuit de frein de service (2a, 2b) ne serait pas possible,
-- commuter la soupape de commutation (14a, 14b, 14c) dans une première position de commutation de soupape de commutation (X1, X2), dans laquelle une production de la pression de freinage de frein de service (pBa, pBb) dans le au moins un circuit de frein de service (2a, 2b) en fonction de la consigne de freinage de frein de service (VB) prédéfinie par l'intermédiaire de la soupape de frein de service (13) est permise, au cas où une consigne de freinage de frein de service (VB) prédéfinie par l'intermédiaire de la soupape de frein de service (13) serait présente, et sinon
-- commuter la soupape de commutation (14a, 14b, 14c) dans une deuxième position de commutation de soupape de commutation (X1, X2), dans laquelle une production de la pression de freinage de frein de service (pBa, pBb) en fonction de la pression de commande d'inverseur (pl) prédéfinie par la soupape de commande d'inverseur (15 ; 15a) est permise.

25. Procédé selon la revendication 24, **caractérisé en ce que** la pression de commande d'inverseur (pl) dans la soupape de commande d'inverseur (15 ; 15a) est produite en fonction de la pression de freinage de frein de stationnement (pPH) ou pression de commande de frein de stationnement (pSPH) produite dans le circuit de frein de stationnement (7) sur la base de la consigne de freinage (VA, VB, VP), dans lequel une pression de commande d'inverseur (pl) inversement proportionnelle à la pression de freinage de frein de stationnement (pPH) ou à la pression de commande de frein de stationnement (pSPH) est produite à cet effet dans la soupape de commande d'inverseur (15 ; 15a) et transmise à la soupape de commutation (14a, 14b, 14c) pour la commande redondante du circuit de frein de service (2a, 2b) respectif avec la pression de commande d'inverseur (pl) lorsque la deuxième position de commutation de soupape de commutation (X2) est réglée.

26. Procédé selon la revendication 24 ou 25, **caractérisé en ce que** la présence d'une consigne de freinage de frein de service (VB) prédéfinie par l'intermédiaire de la soupape de frein de service (13) est détectée et la soupape de commutation (14a, 14b, 14c), en présence d'une consigne de freinage de frein de service (VB) prédéfinie par l'intermédiaire de la soupape de frein de service (13), est commutée dans la première position de commutation de soupape de commutation (X1),
dans lequel la détection de la consigne de freinage de frein de service (VB) s'effectue par l'intermédiaire d'un capteur de pression (31), qui mesure une pression de commande de frein de service (pSa, pSb) délivrée par la soupape de frein de service (13) à la suite de la consigne de freinage de frein de service (VB) et, en fonction de la mesure, délivre un signal de souhait de freinage (S3) et la soupape de commutation (14a, 14b, 14c) est commutée de manière commandée électriquement en fonction du signal de souhait de freinage (S3) dans la première position de commutation de soupape de commutation (X1), au cas où un souhait de freinage de frein de service (VB) par l'intermédiaire de la soupape de frein de service (13) serait présent, et/ou
la soupape de commutation (14a, 14b, 14c) est commutée de manière commandée pneumatiquement par la pression de commande de frein de service (pSa, pSb), en présence d'une consigne de frein de service (VB) demandée manuellement par un conducteur par l'intermédiaire de la soupape de frein de service (13), dans la première position de commutation de soupape de commutation (X1).

27. Procédé selon la revendication 26, **caractérisé en ce que** la soupape de commutation (14a, 14b, 14c), en présence d'une consigne de freinage de frein de service (VB) prédéfinie par l'intermédiaire de la soupape de frein de service (13), n'est alors commutée dans la première position de commutation de soupape de commutation (X1) que lorsque la pression de commande d'inverseur (pl) modulée par l'intermédiaire de la deuxième position de commutation de soupape de commutation (X2) sur la base d'une consigne de freinage (VA, VP) redondante est plus petite que la pression de commande de frein de service (pSa, pSb) modulée dans la première position de commutation de soupape de commutation (X1) sur la base de la consigne de freinage de frein de service (VB).
